# EUROPÄISCHE PATENTSCHRIFT

(11) **EP 2 098 091 B1**
(45) Veröffentlichungstag und Bekanntmachung des Hinweises auf die Patenterteilung: **28.08.2013**
(21) Anmeldenummer: 07856339.2
(22) Anmeldetag: 03.12.2007
(51) Int. Cl.: H04W 36/00, H04W 68/12

(54) **HANDOVER CONVENIENCE INFORMATIONSSERVICE (HOCIS)**
HANDOVER CONVENIENCE INFORMATION SERVICE (HOCIS)
SERVICE D'INFORMATION DE TRANSFERT CONFORTABLE (HOCIS)

(30) Priorität: 01.12.2006 DE 102006057717; 01.12.2006 US 868159 P; 11.12.2006 DE 102006059142; 11.12.2006 US 869514 P; 13.12.2006 DE 102006059207; 14.12.2006 US 869940 P; 22.12.2006 US 871665 P; 27.12.2006 DE 102006062662; 28.12.2006 US 882387 P; 28.12.2006 DE 102006062675; 03.01.2007 US 883267 P; 03.01.2007 DE 102007001321; 08.01.2007 US 883865 P; 08.01.2007 DE 102007001474; 16.01.2007 US 885092 P; 16.01.2007 DE 102007003640; 22.01.2007 US 886011 P; 22.01.2007 DE 102007003646; 29.01.2007 US 886998 P; 29.01.2007 DE 102007005224; 05.02.2007 US 888129 P; 05.02.2007 DE 102007006459; 16.02.2007 US 890218 P; 16.02.2007 DE 102007008318; 01.03.2007 US 892272 P; 01.03.2007 DE 102007010852; 06.03.2007 US 893168 P; 06.03.2007 DE 102007011453; 12.03.2007 US 894239 P; 12.03.2007 DE 102007012683; 04.04.2007 US 910082 P; 04.04.2007 DE 102007016775; 20.04.2007 US 913024 P; 20.04.2007 DE 102007019752; 14.05.2007 US 917736 P; 14.05.2007 DE 102007022874; 12.06.2007 US 943347 P; 12.06.2007 DE 102007027627; 27.06.2007 US 946543 P; 27.06.2007 DE 102007030580; 03.07.2007 US 947721 P; 03.07.2007 DE 102007031414; 10.07.2007 US 948734 P; 10.07.2007 DE 102007032806; 16.07.2007 US 950069 P; 16.07.2007 DE 102007034892; 20.07.2007 US 951079 P; 20.07.2007 DE 102007034290; 20.08.2007 US 956804 P; 20.08.2007 DE 102007039872; 06.11.2007 US 985667 P; 06.11.2007 DE 102007053363; 15.11.2007 US 988232 P; 15.11.2007 DE 102007055022; 27.11.2007 US 990354 P; 27.11.2007 DE 102007057274
(43) Veröffentlichungstag der Anmeldung: 09.09.2009
(60) Teilanmeldung: 11189776.5
(73) Patentinhaber: Sigram Schindler Beteiligungsgesellschaft mbH, 10587 Berlin (DE)
(72) Erfinder: SCHINDLER, Sigram, 14129 Berlin (DE); SCHÖNBERG, Dörte, 10553 Berlin (DE); SCHULZE, Jürgen, 13595 Berlin (DE)
(74) Vertreter: Maikowski, Michael
(86) Internationale Anmeldenummer: PCT/EP2007/010485
(87) Internationale Veröffentlichungsnummer: WO 2008/064918

(56) Entgegenhaltungen:
- EP-A2- 1 701 572
- WO-A2-02/19736
- WO-A2-2008/033259
- GB-A- 2 322 051
- US-A1- 2004 122 954

## Beschreibung

### Gegenstand der Erfindung

Diese Erfindung offenbart ein automatisches und Netz-transparentes "**handover convenience information support**"-Verfahren (HOCIS-Verfahren) für einen Teilnehmer (TLN) eines Primär-Kommunikationsvorgangs (alias Primär-Telekommunikations-Vorgangs alias Primär-TK-Vorgangs, PTKVs) in dem ein HO erfolgt - wobei dieser HO-Vorgang beliebige Vor-/Nachlaufzeiten zum "eigentlichen HO" umfassen kann.

"Convenience information support" heißt dabei u.A., dass dieser PTKV-TLN diesen HOCIS nicht notwendigerweise angefordert hat, er diesen dann unerbetenen Support aber i.d.R. trotzdem als angenehm oder behilflich empfindet, wie z.B. ein Passagier eines Fluges zugehörige Ansagen/Hinweise/Vorkehrungen (= convenience information support) auf dessen Start- oder Ankunfts-Flughafen. Im Gegensatz zu solchen oft uniformen Maßnahmen ist der HOCIS vom davon Betroffenen i.d.R. individuell gestaltbar. Der HOCIS eines solchen PTKV-TLNs erfolgt durch die Übergabe an ihn von hinsichtlich dieses eigentlichen HOs - das potentiell oder aktuell oder zurückliegend sein kann - relevanter Information während des HO-Vorgangs, die dafür durch mindestens einen nicht-menschlichen Modul M(HOCIS) in mindestens einem System mindestens eines Sekundär-TK-Vorgangs (STKVs) für diese TLNs bereitgestellt wurde.

### A. Der Stand der HO-Technik versus innovative Merkmale des HOCIS-Verfahrens

Der Stand der HO-Technik sieht ein HO als einen auf seinen technischen Kern reduzierten Vorgang an, d.h. er betrachtet
(a) i.d.R. nur das in das HO direkt involvierte Endsystem sowie ggf. dessen Benutzer - jedenfalls wird kein in ein (potentielles oder aktuelles oder zurückliegendes) HO indirekt involvierter Endsystem-Benutzer vom darin direkt involvierten Endsystem informiert- und/oder
(b) hinsichtlich eines HOs eines Endsystems nur dessen "rudimentäre Konnektivität" - jedenfalls nicht gleichermaßen die "Anwendungs-Konnektivität" dessen Benutzers im Fall dessen Netz-Eintritts - und/oder
(c) ein HO eines Endsystems nur als "finalen Selbstläufer" auf Grundlage einer technischen Vorgabe dafür - also nicht als beliebig frühzeitig beginnenden und jederzeit von einem Endsystem-Benutzer dynamisch gestaltbanen Vorgang, der dieses HO womöglich ganz vermeidet.

Dagegen verwirklicht das HOCIS-Verfahren - für ein potentielles oder aktuelles oder zurückliegendes HO - die drei in (a)-(c) eben ausgeschlossenen Merkmale eines HO-Verfahrens des Standes der HO-Technik. Dieser Abschnitt **A**. zeigt, dass die Aussage des letzten Teilsatzes zutrifft, indem er zeigt, dass tatsächlich keines dieser HO-Verfahren auch nur das in **(a)** behauptungsweise ausgeschlossene Merkmal verwirklicht. Er braucht deshalb den Nichtverwirklichungs-Nachweis der in **(b)** und **(c)** behauptungsweise ausgeschlossenen Merkmale nicht zu erbringen. Diese Merkmale gehen jedoch derartig weit über den Stand der HO-Technik hinaus, dass ihr Nichtverwirklichungs-Nachweis elementar ist - er aber nur mühsam als detailliert darzustellen ist, da sich im Stand der HO-Technik auf diese Merkmale kaum mehr Hinweise finden, an die er anknüpfen könnte, sodass er fast durchgängig nur pauschal erfolgen könnte.

Ein Handover (HO) eines Kommunikationsvorgangs für sich genommen
■ speziell zwischen paket- und leitungsvermittelten TK-Netzen gehört bereits zum Schutzbereich der Patente DE 19645368 und EP 0929884. Jedoch sprechen beide Patente die hier gelöste "HO-Informations/Unterstützungs"-Problematik überhaupt nicht an: nämlich dass mindestens ein Teilnehmer eines Kommunikationsvorgangs durch das HO bei einem anderen Teilnehmer irritiert werden kann, weil er irgendeine - ihm völlig unverständliche - Beeinträchtigung (z.B. durch Unterbrechung/Verzögerung/Qualitätsveränderung/Kostenänderung/....) der Datenübertragung in diesem Kommunikationsvorgang erfährt. Als Folge dessen versuchen diese Schriften auch keine Lösung dieses Problems. Das erfindungsgemäße HOCIS-Verfahren liefert dagegen die Technik, um diese Problematik umfassend zu lösen, wie nachfolgend erläutert wird.
■ speziell als "nahtlose (seamless) MIH" (= "Media Independent HO") - also für die TLNs des TK-Vorgangs nicht wahrnehmbar - erörtert die US 2006/0099948 A1 speziell für ein Telefongespräch. Deren BACKGROUND-Abschnitt und die Beschreibung ihres erfindungsgemäßen Verfahrens legt diesen Stand der Technik zutreffend dar. Und noch breiter angelegt als in der vorstehend genannten Schrift erörtert die "IEEE802.21-Übersichts-Publikation" von Vivek Gupta u.a. (**DCN 21-06-0706-00-0000**) die verschiedenen technischen Varianten der Realisierung eines HOs. Auch die jüngsten Publikationen zum Stand der HO-Technik - z.B. die WO 2007/004846 A2 und die WO 2006/124514 A2 - bekräftigen dessen Fokussierung auf MIHs.
   Aus allen diesen Schriften ist klar ersichtlich: Im gesamten Stand der HO-Technik wird die o.g. mögliche Irritation der TLNs eines PTKVs bei einem HO
   ○ nicht als eigenständiges Problem angesehen, das einer eigenständigen Lösung bedarf, weil es mittels der HO-Techniken des Standes der Technik nicht lösbar ist - welche HO-Technik in einem HO auch immer zum Einsatz kommt - und
   ○ erst recht nicht, dass diese Lösung mindestens eines zusätzlichen und eigenständigen "Sekundär-Kommunikationsvorgangs" alias "Sekundär-TK-Vorgangs" (STKVs) alias "HOCIS-Kommunikationsvorgangs/TK-Vorgangs" bedarf, womöglich unter Einbeziehung eines "HOCIS-Servers".
   Der Stand der HO-Technik hat folglich mit der Lösung dieses Problems in Form des HOCIS-Verfahrens an keiner Stelle irgendetwas zu tun.
■ speziell auf der L7 des OSI-Referenzmodells realisiert - wie in der o.g. diskutierten "IEEE802.21-Übersichts-Publikation" grundsätzlich erwähnt - ist mittels der Architektur des **USHA-Modells** (USHA = "Universal Seamless Handover Architecture") von L.-J. Chen (**UCLA Computer Science Department Technical Report CSD-TR No. 040012**) möglich. Aber das USHA-Modell ist gleichermaßen ausschließlich auf die Technik einer HO-Realisierung beschränkt: Es hat deshalb mit dem erfindungsgemäßen HOCIS-Verfahren ebenfalls absolut nichts zu tun - aus den im vorstehenden Aufzählungspunkt bereits skizzierten und weiter unten ausführlich dargelegten Gründen.
■ zieht bis heute viel Aufmerksamkeit auf sich, wie aus den Arbeiten von **Stefanov** (21.11.2006: **"Entwurf und Implementierung einer Visualisierungssoftware für "Seamless Handover" in drahtlosen Netzen**") oder **Sonnenberg** (27.06.2005: "**Seamless Vertical Handoff**") ersichtlich. Sie bestätigen nochmals - vor allem deren Übersichten über den Stand der HO-Technik - dass die vom HOCIS-Verfahren gelöste Problematik "oberhalb der HO-Technik" liegt und mittels des Standes der HO-Technik nicht gelöst werden kann. Die Ursache hierfür: Der hier referierte Stand der HO-Technik beruht auf der Annahme, eine "Komunikationsvorgangs-Teilnehmer-HO-Problematik" sei auf HO-kommunikationstechnizistische Weise von vorn herein vermeidbar, nämlich durch "seamless HOs".
■ ist zwar auch Gegenstand der Patente von Birnie et al. (27.02.2007, US 7,184,765 B1) und Bartle et al. (25.01.2000, US 6,018,655, 24.03.1998, US 5,732,347, 24.02.1998, US 5,722,068). Sie alle geben zwar vor einem Verbindungsabbruch oder während oder nach einem HO eines mobilen Endsystems - aus welchem Grund auch immer - an dessen Benutzer ein akustisches Signal heraus. Aber hinsichtlich eines HOCIS des in diesen Vorgang indirekt involvierten Endsystem-Benutzers ist in ihnen nichts offenbart, ein solcher Benutzer kommt in ihnen überhaupt nicht vor.
■ und möglicherweise irgendwie begleitet durch eine nebensächliche "nützliche Information" des darin indirekt involvierten Kommunikationsvorgangs-Teilnehmers, diskutiert die Arbeit von G. A. Mills-Tettey & D. Kotz (Mobile Voice over IP (MVOIP): An Application-level Protocol for Call Hand-off in Real Time Applications, Proc. of the "21. IEEE International Performance, Computing, and Communications Conference", April 2002). Sie entwickelt den Stand der HO-Technik im bisherigen rein technischen Sinne weiter, indem sie für ein spezielles Mobilität-bedingtes HO-Problem eine Lösung entwickelt, die mit einer "Mobility Alert Message" beginnt (siehe ihre Unterabschnitte 3.1 und 3.2). Diese ist zwar eine HO-relevante Information, aber für das nicht direkt involvierte "host system" und nicht für dessen Benutzer - nämlich um es von einer vorschnellen Reaktion in einem HO abzuhalten (weil die L3-Verbindung zur Übertragung von Teilnehmer-Daten wegen des IP-Nummern-Wechsels temporär unterbrochen ist). Der Empfang dieser MVOIP-PDU kann optional zwar das Auslösen einer "useful message to the user during the hand-off process" bewirken, aber deren Sinngehalt ist ein anderer als im HOCIS. Tatsächlich unterscheidet sich diese spezielle MVOIP-PDU, alias "Mobility Alert"-Nachricht, in mindestens 7-facher Hinsicht und jeweils fundamental von einem HOCIS, wie nachfolgend gezeigt wird:
   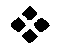 Zum ersten
      ○ ist eine HO-relevante Information des HOCIS-Verfahrens an den Benutzer des HOCIS-Endsystems zu dessen Unterstützung gerichtet, nicht an das von ihm benutzte Endsystem (dort "host"/Wirts-System genannt) und zu dessen Unterstützung, wie es im MVOIP-Verfahren der Fall ist, also z.B. an einen Telefonierenden und nicht an sein Telefon,
      ○ kommuniziert eine derartige HO-relevante Information dem Benutzer (des diese Information an ihn übergebenden Endsystems) vom Absender-Gerät festgelegten HO-Situations-spezifischen Sinngehalt, der mit einem IP-Nummer-Wechsel nichts zu tun hat - was mittels des "Mobility Alert" des MVOIP-Verfahrens unmöglich ist,
      ○ ist die Codierung und/oder Übermittlung und/oder lokale Präsentation einer empfangenen erfindungsgemäßen HO-relevanten Information im Empfänger-System für den Teilnehmer durch diesen gestaltbar - was im MVOIP-Verfahren auch nicht geht, weil es die vorstehend skizzierten Inhalte von HO-relevanten Informationen gar nicht gibt (wegen des im vorstehenden Aufzählungspunkt Gesagten).
      Eine vergleichbare erfindungsgemäße HO-relevante Information dient also dem HOCIS eines in ein HO indirekt involvierten PTKV-TLNs durch die Information über den spezifischen HO-Status, die ihm ein anderes Endsystem übergeben hat. Dagegen dient eine "Mobility Alert"-PDU einem ganz anderen Zweck: Sie dient der Steuerung eines (in ein HO "indirekt" involvierten) Wirts-Systems, dessen Benutzer dabei absolut keine Rolle spielt. Eine dort lokale und inhaltlich nicht vom direkt involvierten Endsystem festgelegte "useful message" an ihn ändert daran nichts - sie ist keine HO-relevante Information gemäß HOCIS-Verfahren.
   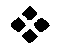 Zum zweiten gibt es für eine erfindungsgemäße HO-relevante Information einen Übertragungsweg, der einer MVOIP-/"Mobility Alert"-PDU absolut verschlossen ist - nämlich den von Teilnehmer-Daten benutzten Übertragungsweg - sodass auch dies zeigt: sie ist keine HO-relevante Information gemäß HOCIS-Verfahren.
      D.h. insbesondere: Beim HOCIS-Verfahren braucht - anders als beim MVOIP-Verfahren - das Empfänger-Wirtssystem auf den Empfang einer solchen HO-relevanten Information in einem Kommunikationsvorgang nicht erst zu lauschen ("listen", wie es z.B. heutige Mobiltelefone während eines Gesprächs nicht können), um sie empfangen zu können.
      ○ Vielmehr wird eine solche HO-relevante Information von ihrem "Ziel-Endsystem" immer empfangen (oder von diesem lokal bereitgestellt) und dem Teilnehmer unbedingt zur Kenntnis gebracht - also ohne das auf "Empfangen" gerichtete Zutun des "hosts" beim MVOIP-Verfahren,
      ○ und erst recht braucht in diesem Fall das Empfänger-Wirtssystem beim HOCIS-Verfahren nicht auf eine bestimmte, einen seiner "Protokoll-Stacks" adressierende (also: nicht seinen Benutzer) PDU zu lauschen, sodass
      ○ das erfindungsgemäße HOCIS-Verfahren deshalb auch Benutzer von heutigen Mobiltelefonen unterstützen kann, was dem MVOIP-Verfahren absolut unmöglich ist.
   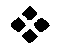 Zum dritten bietet der erfindungsgemäße HOCIS einem in ein HO indirekt involvierten PTKV-TLN die Möglichkeit, hinsichtlich eines beliebigen aktuellen oder potentiellen oder retrospektiven HOs eine HO-relevante Information vom darin direkt involvierten Endsystem anzufordern. Das MVOIP-Verfahren bietet keinerlei derartige Möglichkeit. Auch dies zeigt: MVOIP-PDUs enthalten keine HO-relevante Information gemäß HOCIS-Verfahren.
   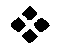 Zum vierten ist das MVOIP-Verfahren schon allein hinsichtlich seiner möglichen Startzeitpunkte mit dem HOCIS-Verfahren überhaupt nicht vergleichbar. Ersteres wird gestartet genau dann, wenn das mobile (also das direkt involvierte) Endsystem einen IP-Adressen-Wechsel vollzieht, der Start des Letzteren zu genau diesem Zeitpunkt ist ausgeschlossen - es startet immer früher, da es bei seinem Start erst bei Vollzug eines IP-Adressen-Wechsels die an es gestellte Anforderung nicht mehr erfüllen kann. Das HOCIS-Verfahren ist von solchen bezüglich eines HOs sehr späten Technizitäten völlig unabhängig, wird also immer bei zunächst noch gleich bleibender IP-Adresse gestartet, weil sich irgend eine Benutzungsqualität eines Netzes (wie etwa dessen Benutzungskosten oder Jitter) ändert, oder ein prophylaktischer Wunsch eines Benutzers nach Qualitäts-Sicherheit während eines Kommunikationsvorgangs spontan auftritt, oder wird bei einem IP-Adressen-Wechsel gar nicht gestartet (weil es vorher weiß, dass ein seamless HO bevorsteht). Dies zeigt gleichermaßen, dass MVOIP-PDUs keine HO-relevante Information gemäß HOCIS-Verfahren darstellen können.
   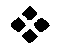 Zum fünften schließt das MVOIP-Verfahren ein HOCIS-Verfahren-gemäßes Signal - das durch das Merkmal gekennzeichnet ist, außerhalb der Endsysteme des PTKVs entstehen und/oder vorliegen zu können - explizit aus (es kennt überhaupt keinen STKV) und damit jegliche Möglichkeit des HOCIS eines PTKV-TLNs.
   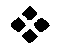 Zum sechsten schließt das MVOIP-Verfahren explizit aus, dass sein PTKV-TLN eine HO-relevante Information von einem anderen als dem mobilen Endsystem erhält - es muss eine solche Information verwerfen, kann sie also seinem TLN nicht übergeben - während dies im HOCIS-Verfahren vorgesehen ist.
   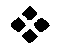 Zum siebten schließt das MVOIP-Verfahren explizit aus, dass die MVOIP-PDU o.Ä. dem in das HO direkt involvierten PTKV-Endsystem zugeschickt wird und dessen TLN darüber informiert wird - während das HOCIS-Verfahren geeignet ist, dem direkt involvierten TLN eine HO-relevante Information zu übergeben.

Schon diese 7 Unterschiede zeigen, dass das MVOIP-Verfahren an keiner Stelle das HOCIS-Verfahren vorwegnimmt - hier: das Verfahren der HOCIS-Erbringung für einen darin indirekt involvierten PTKV-TLN - und das MVOIP-Verfahren auch kein (in seiner Druckschrift lediglich nicht offenbarter) Spezialfall des HOCIS-Verfahrens ist: Die "Mobility Alert"-Nachricht des MVOIP-Verfahrens hat nämlich nur die Bedeutung eines der vielen kommunikationstechnisch u.U. sinnvollen und den TLNs nicht sichtbaren HOCIS-Protokoll-Parametern in erfindungsgemäßen Ausführungsformen des HOCIS-Verfahrens, die mit dem HOCIS der TLNs eines Primär-TK-Vorgangs hinsichtlich eines aktuellen oder potentiellen HOs der darin involvierten Teilnehmer nichts zu tun haben - und die hier nicht betrachtet werden.

Den Vergleich mit dem Stand der HO-Technik zusammenfassend und auf das technisch Wesentliche fokussierend: Die in einem HO zu erhaltende "Service-Kontinuität" einer OSI-Verbindung wird vom
■ **Stand der HO-Technik** primär durch Verbergen dieses HOs vor den Benutzern dieser OSI-Verbindung - jedenfalls vor dem in ein HO indirekt involvierten Benutzer - in einer "HO*mechanistischen"* Weise angestrebt. Sind die diese OSI-Verbindung benutzenden PTKV-TLNs nur einfache Automaten, so sind diese auf eine solche Vorgehensweise heute i.d.R. sogar angewiesen - d.h. die Service-Kontinuität muss hier innerhalb der Moduln der OSI-Verbindung des PTKVs bewerkstelligt werden (d.h. größtenteils auf deren L2), andernfalls sie braucht für deren Benutzer-Automaten nicht gegeben zu sein- nicht aber HO-verständige TLNs, wie etwa Menschen.
■ **HOCIS-Verfahren** durch geeignetes Bewusstmachen dieses HOs bei den PTKV-TLNs (dieser OSI-Verbindung) angestrebt, also in einer auf deren *"HO-Verständnis beruhenden"* Weise. Benutzen HO-verständige PTKV-TLNs, etwa Menschen, die OSI-Verbindung dieses PTKVs, so sind sie auf diese Vorgehensweise oft sogar angewiesen - sie sind dann nämlich mental häufig ganz anders strukturiert als einfache Automaten. Z.B. dürften HO-verständige PTKV-TLNs, etwa Menschen, HO-relevante Informationen i.d.R. erhalten wollen bevor dieses HO tatsächlich erfolgt und/oder darauf flexibler reagieren können wollen als einfache Automaten - sodass dafür ein eigenständiger Sekundär-/HOCIS-TK-Vorgang (STKV) kommunikationstechnisch angebracht ist, der mit dem PTKV und dem HO-Vorgang irgendwie zeitlich überlappt und für die PTKV-TLNs den HOCIS erbringt. Ein solcher STKV kann dann seinerseits mindestens ein HOCIS-System an der Erzielung dieser Service-Kontinuität beteiligen - mit seiner in vielen Fällen früher einsetzenden und/oder länger anhaltenden Konnektivität z.B. zu einem indirekt in das HO involvierten PTKV-TLN, die es ihm ermöglicht, ihn "conveniently" mit HO-relevanter Information zu versorgen, um ihm so diese Service-Kontinuität zu gewährleisten.
   Diese Service-Kontinuität wird also in den PTKV-TLNs ihren Bedürfnissen entsprechend mittels mindestens eines STKVs erzeugt - anders ist für sie diese Service-Kontinuität gar nicht zu gewährleisten - d.h. außerhalb der Moduln der OSI-Verbindung des PTKVs hergestellt.

In ersterem Fall, den vom Stand der HO-Technik angestrebten seamless MIHs, wäre es rein theoretisch u.U. überflüssig, bei einem HO in einer PTKV-OSI-Verbindung den Benutzern in deren Endsystemen einen HOCIS zur Gewährleistung der so verstandenen Service-Kontinuität zu erbringen, um dadurch eine negative Beeinträchtigung dieser PTKV-TLNs durch dieses HO zu vermeiden. Jedoch weiß jedermann, was von "reiner Theorie" in diesem ingenieurtechnischen Kontext zu halten ist - dass sie nämlich oft auf "tönernen Beinen" steht (siehe hierzu auch den drittletzten Absatz in Abschnitt **B**.).

Im Gegensatz dazu bewirkt das erfindungsgemäße HOCIS-Verfahren bei einem HO in einem PTKV, dass mindestens ein PTKV-TLN, d.h. ein **Benutzer** eines darin involvierten Endsystems (der OSI-Verbindung dieses PTKVs), mindestens eine HO-relevante Information genau zum Zweck des "convenience information support" über/bei dieses/m HO erhält - damit dieses HO den PTKV nicht negativ beeinträchtige, oder die PTKV-TLNs es besser gestalten können, oder ganz vermeiden, oder ... (siehe Abschnitt **B**. zu den eben benutzten Termini).

In anderen Worten: Das HOCIS-Verfahren erzielt die "Service-Kontinuität" in einem HO auf der Verständnisebene der PTKV-TLNs (und verzichtet auf das illusionsträchtige Erfordernis bzw. das "wishful thinking" eines großen Teils des Standes der HO-Technik, HOs vor diesen TLNs auf technischem Wege stets komplett verbergen zu können) indem es dieses HO mittels mindestens einem nicht-menschlichen M(HOCIS)-Modul in mindestens einem HOCIS-Server/IAD/Endsystem zu diesem Zweck einsetzt (siehe insbesondere Abschnitt **D**.).

Das HOCIS-Verfahren gehört deshalb, also wegen seiner Zielorientierung, in den zukünftigen und sich gerade erst entwickelnden Bereich der "**Convenience**"-Technik der technischen Kommunikation, d.h. in seiner Intentionalität nicht in den klassischen Bereich der "HO-Technik". Mit der HO-Technik hat ein HOCIS-Verfahren technisch nichts gemein, da es
■ von HOs potentiell oder aktuell verursachte psychische Probleme der PTKV-TLNs zu lösen gestattet, indem es in geeigneten Zeitpunkten und Darstellungen einem in ein HO involvierten PTKV-TLN zu diesem "convenience information support" zu gewähren ermöglicht,
■ jedoch kein Verfahren ist, mit dem ein HO eines PTKV-Endsystems bewerkstelligt - also ein technisch einfaches Problem gelöst - werden könnte, sondern es eine technische Komplexität verkörpert, wie sie für die Lösung dieses o.g. diffusen psychischen Problems unerlässlich ist.

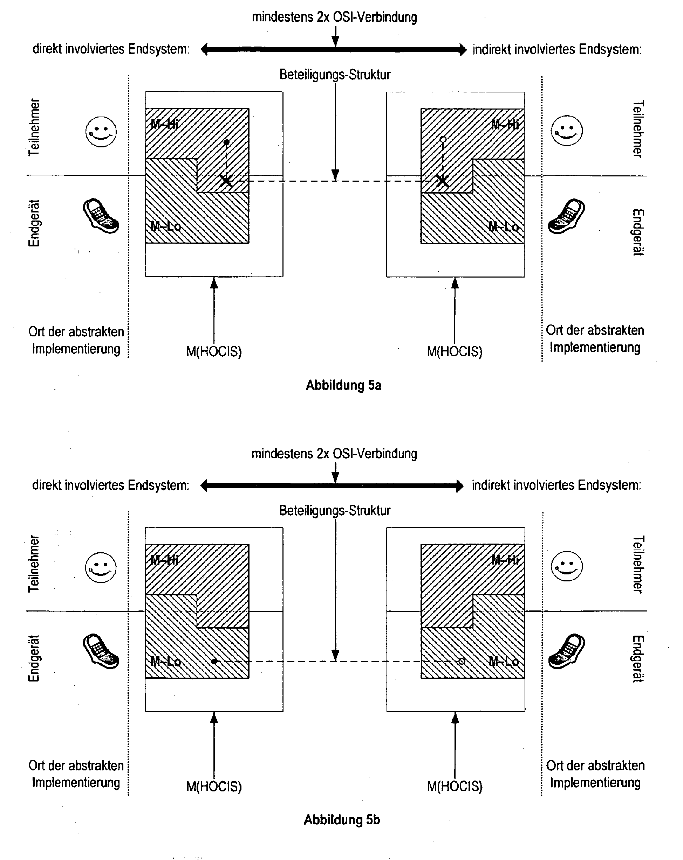

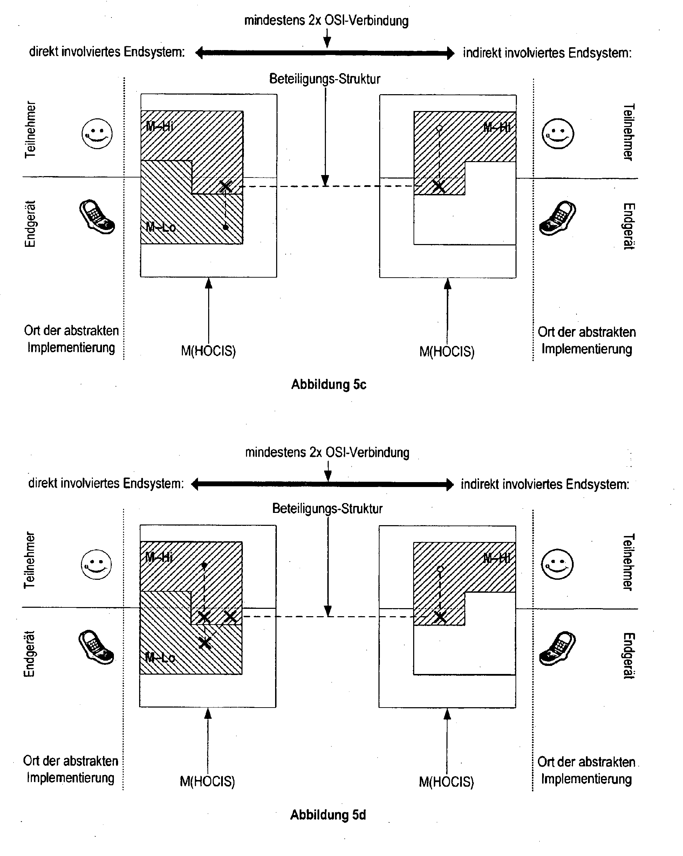

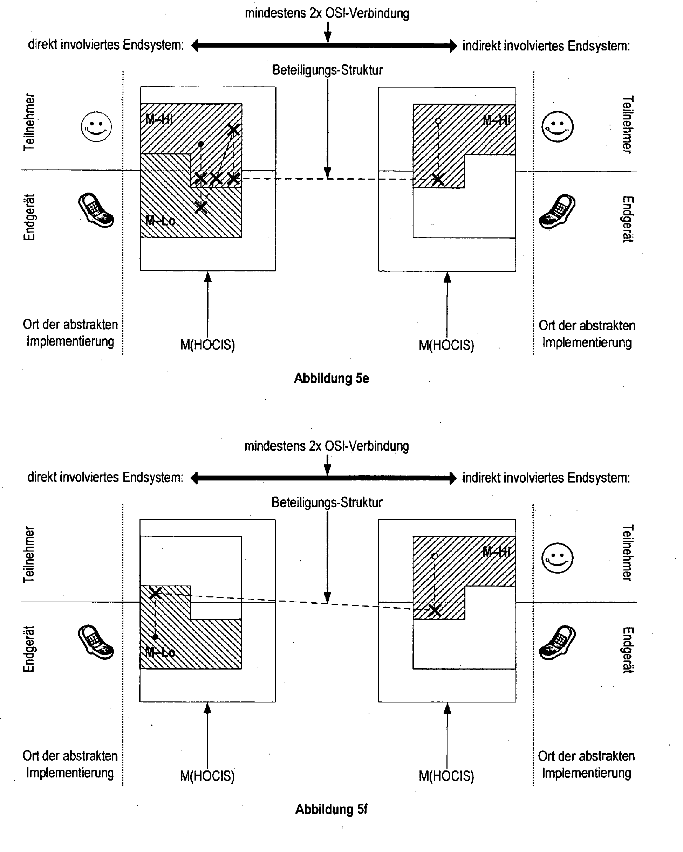

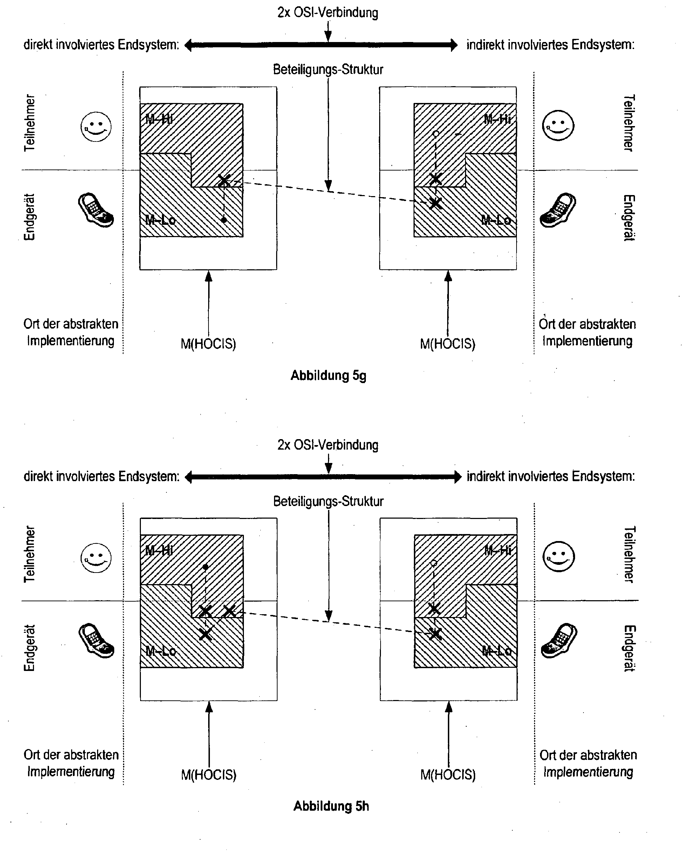

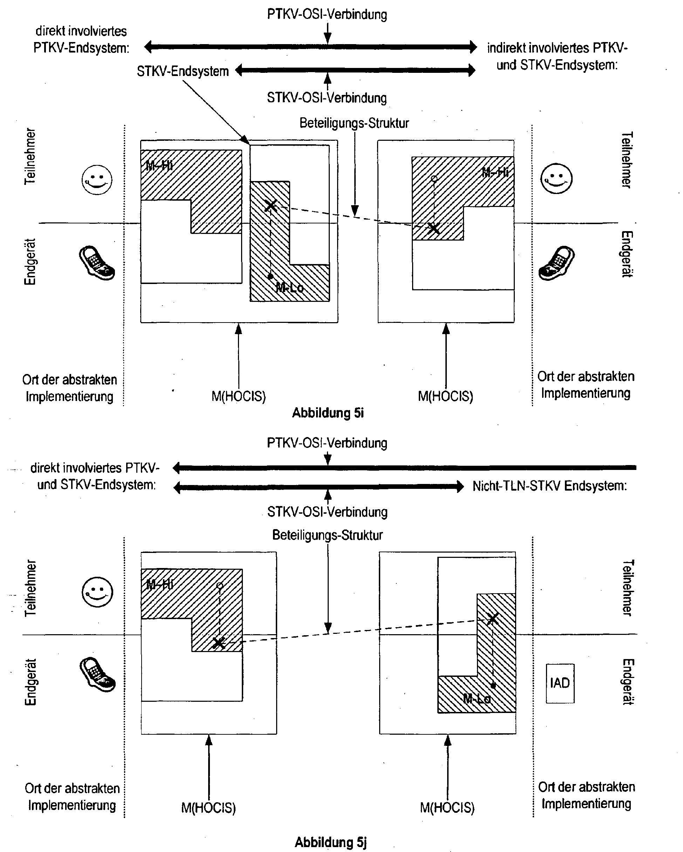

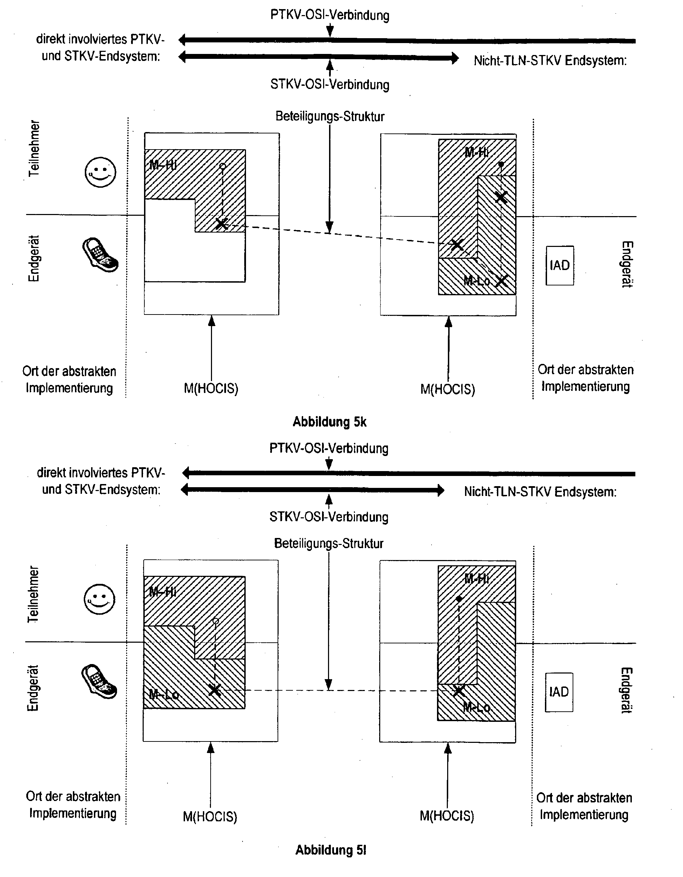

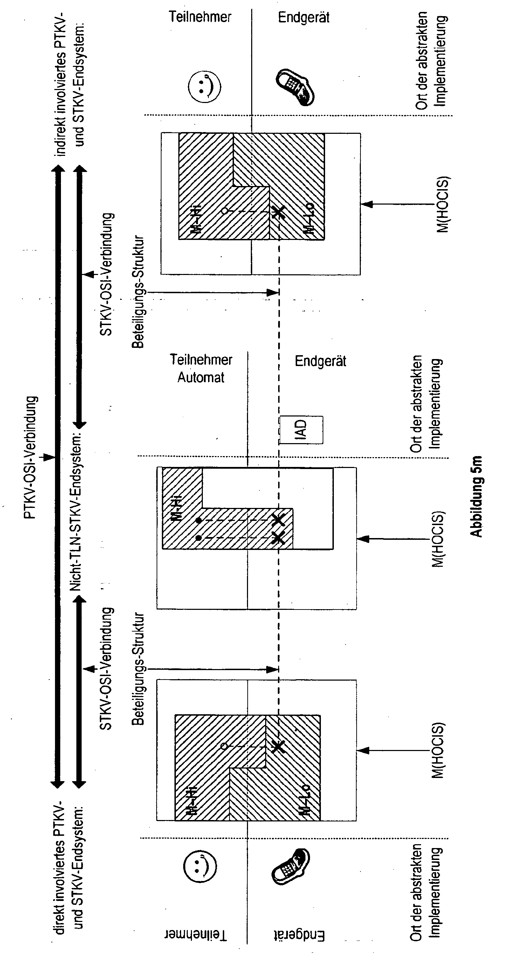

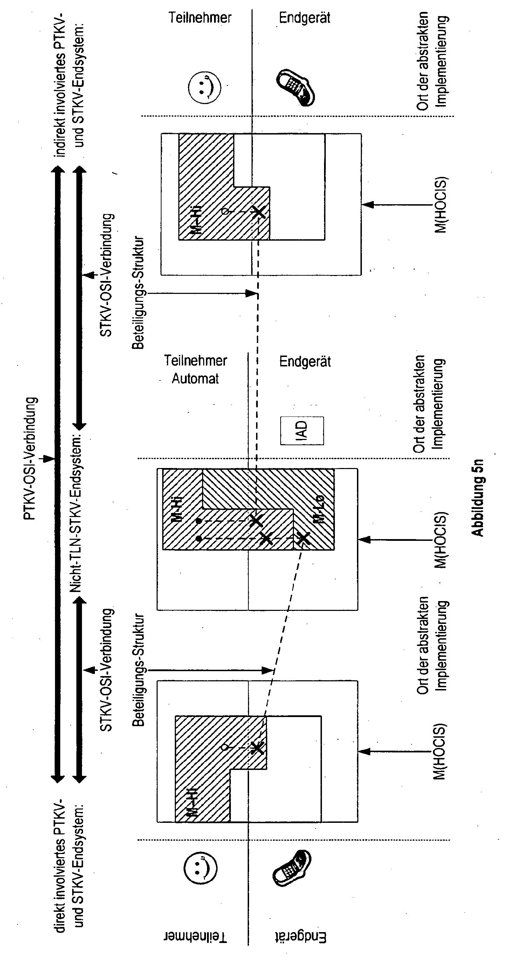

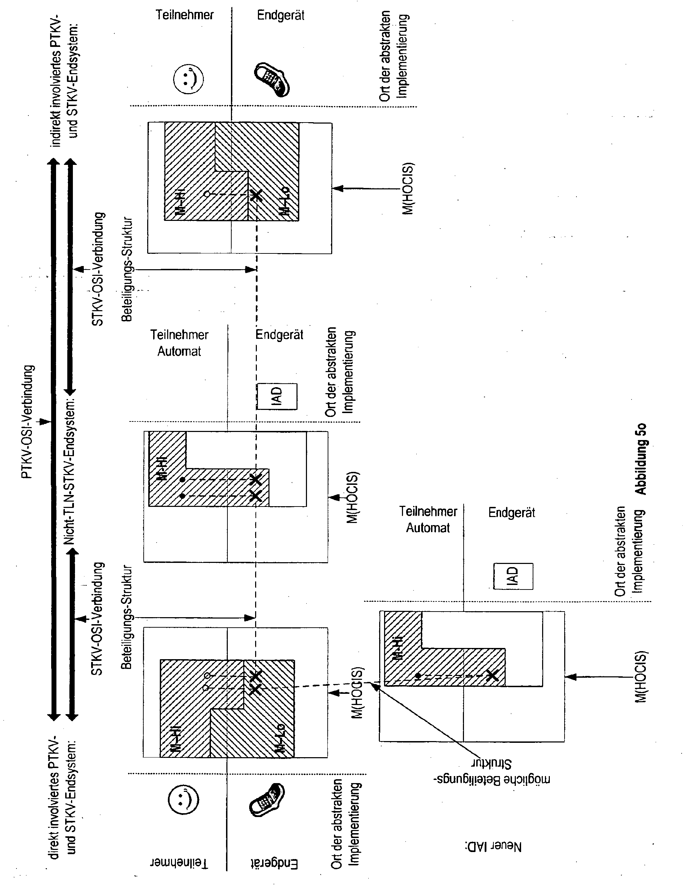

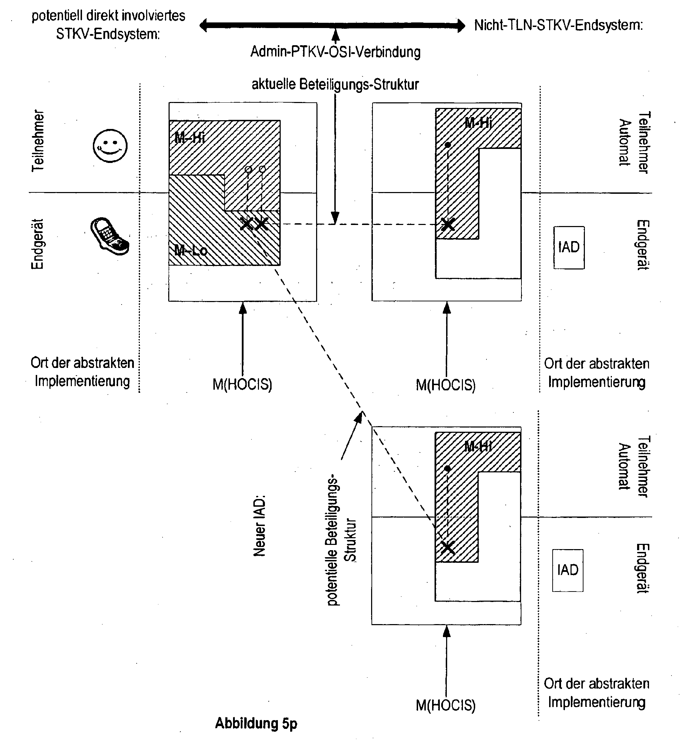

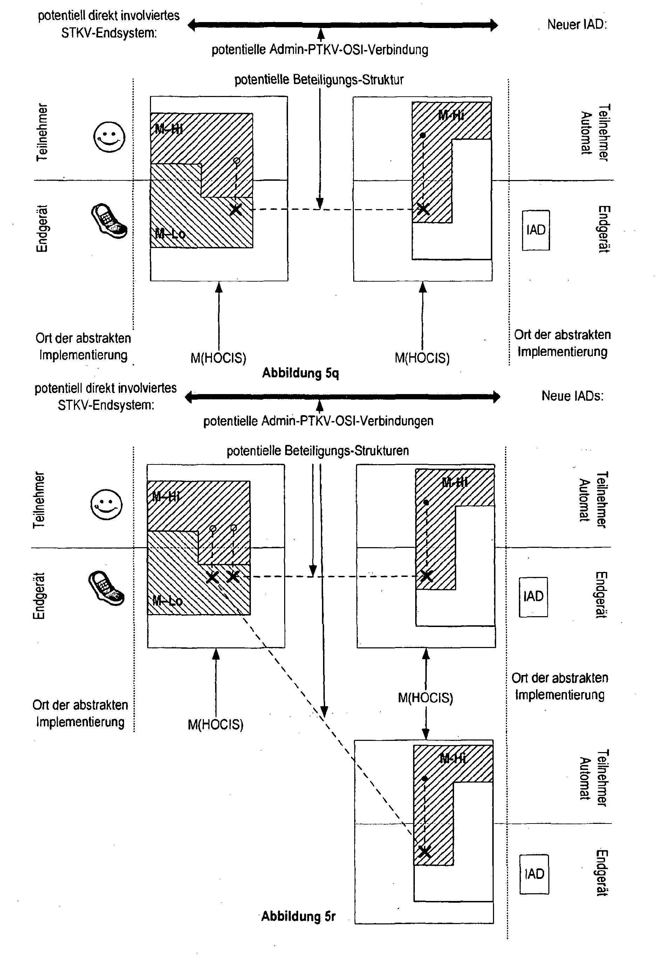

Diese große technische Komplexität des HOCIS-Verfahrens klärt vor allem der Abschnitt **D**., insbesondere in seinen Erläuterungen der **Abbildungen 5**.

Die Druckschrift WO 02/19736 A2 beschreibt ein Verfahren und ein technisches Gerät zur Aufrechterhaltung einer Funkverbindung zwischen Teilnehmern an der Funkverbindung, von denen wenigstens einer ein mobiler Teilnehmer ist. Ein aktuell benutzes erstes Funknetz eines technischen Standards erster Art ist vor Ort von einem zweiten technischen Funknetz eines technischen Standards zweiter Art überlagert. Unter Verwendung des Merkmals "identifiziertes Anklopfen" baut der mobile Teilnehmer eine zweite Verbindung zu dem gleichen weiteren Teilnehmer unter Nutzung des zweiten Funknetzes auf. Dabei werden über das aktuell benutzte erste Funknetz zusätzlich Identifikationsinformationen betreffend den mobilen Teilnehmer übersandt, anhand derer der weitere Teilnehmer feststellen kann, dass der zweite Verbindungsaufbau von dem bereits an der aktuellen Verbindung beteiligten mobilen Teilnehmer stammt. Damit dienen bei der WO 02/19736 A2 die beiden Funkverbindungen und die zusätzlichen Identifikationsinformationen der technischen Durchführung eines Handovers. Auch liegt keine Netztransparenz hinsichtlich der für ein Handover bereitgestellten Informationen vor, da die WO 02/19736 A2 hierfür den Dienst "identifiziertes Anklopfen" des ersten Fubknetzes nutzt.

### B. Zusammenfassung sowie Termini/Begrifflichkeit und Wesen der HOCIS-Erfindung

Die Erfindung stellt ein Verfahren mit den Merkmalen des Anspruchs 1 und ein System mit den Merkmalen des Anspruchs 12 bereit.

Das erfindungsgemäße (HOCIS-) Verfahren will HOs "convenient" machen bei der Benutzung von Drahtlos-Kommunikationsnetzen so wie sie heute sind. Genauer gesagt: Es bietet die Möglichkeit, deren Benutzern in einfacher Weise die angenehme Gewissheit zu vermitteln, das HOCIS-Verfahren - es ist heute i.d.R. außerhalb dieser Netze anzusiedeln - informiere und unterstütze sie bei deren Benutzung hinsichtlich der möglichen "Holprigkeiten" der potentiellen und aktuellen unvermeidlichen HOs zwischen ihnen ständig und auf angenehme Weise.

Der Charme des HOCIS-Verfahrens folgt also schon allein daraus, dass derzeit nicht absehbar ist,
■ wann sämtliche heutigen Drahtlos-TK-Netre, die für HOs etwa in Telefongesprächen in Frage kommen, eines der derzeit diskutierten "seamless HO"-Verfahren ermöglichen werden,
■ ob diese "seamless HO"-Verfahren dann für die Teilnehmer von Kommunikationsvorgängen denn tatsächlich völlig transparent (= nicht wahrnehmbar/störend) sein werden und
■ ob der Markt diese (vielleicht nur vermeintlichen) "seamless HO"-Verfahren überhaupt akzeptiert - mit ihrer strikten Nichtinformation der Kommunikationsvorgangs-Teilnehmer über ein HO, selbst wenn dieses länger dauert oder ganz fehlschlägt, obwohl es eine Kostenänderung implizieren kann - oder er ein HOCIS-Verfahren vorziehen wird (mit seiner prophylaktischen Informations-/Unterstützungsmöglichkeit dieser Teilnehmer über HOs),
ganz abgesehen davon, dass diese "seamless HO"-Philosophie ohnehin die grundsätzlichen HO-Probleme völlig ignoriert, die sich aus der absehbaren Vielfachüberdeckung der Wirtschaftsregionen mit unterschiedlichsten, sowohl in ihrer Größe als auch allen ihren Leistungsmerkmalen sehr stark variierenden, i.d.R. einfach zugänglichen und meistens privaten Drahtlos-TK-Netzen für mobile Netz-Benutzer ergeben. Am Ende dieses Abschnitts **B**. und vor allem von Unterabschnitt **D.4.9.** wird dieser letztere Aspekt etwas ausführlicher dargestellt.

Für ein potentielles oder aktuelles HO eines Endsystems eines Primär-Tefekommunikationsvorgangs (PTKVs) umfasst die Erfindung vielfältige (Netz-transparente) Möglichkeiten, menschliche oder nichtmenschliche Benutzer in mindestens einem anderen Endsystem dieses PTKVs hinsichtlich dieses HOs "convenient information support" zu gewähren, vor allem dem mindestens einen in das HO indirekt involvierten Teilnehmer (TLN) eines PTKVs. In vielen Fällen startet dieser HOCIS für einen indirekt in ein HO involvierten PTKV-TLN ohne dessen Anforderung, hat also "soziale" Züge. Um dies klar beschreiben zu können, werden nun die dafür benötigten Termini und zugehörigen Begriffe geklärt.

Gegenstand der Erfindung ist ein generisches HOCIS-Verfahren sowie eine generische Vorrichtung zu seiner Verwirklichung (generisch = eine Vielzahl von Varianten der eigenen Art gestattend). Die Beschreibungen beider in dieser Schrift sind - ebenso wie ihre Termini und Begriffe - rein **funktional**, d.h. völlig **abstrakt**, also absolut unabhängig von einer konkreten **materiellen** Implementierung alias Ausführungsform. Aus Gründen ihrer Veranschaulichung werden jedoch gelegentlich auch mögliche materielle Implementierungen dieses Verfahrens, dieser Vorrichtung und dieser Termini/Begriffe erläutert. Dabei ist zu beachten, dass die nachfolgenden Erläuterungen dieser TerminilBegriffe - durchgängig im Sinne des OSI-RMs - der Klärung des Wesens des/r erfindungsgemäßen Verfahrens/Vorrichtung dienen, also keine Grundsatzklärung von anderweitigen kommunikationstechnischen Fragen anstreben, sondern an vielen Stellen ganz direkt die praktische Bedeutung der Anspruch-Wortlaute dieser Schutzschrift klarstellen. Ins Einzelne gehende Präzisierungen der nachfolgenden Klarstellungen leistet Abschnitt **D**.

Vorab: Ein HO eines Kommunikationsvorgangs erfolgt zwischen mindestens zwei entweder Kommunikationsnetzen oder/und Zugangspunkten eines Netzes oder/und Leistungsmerkmalen an einem Zugangspunkt eines Netzes. Die vorliegende Erfindung betrachtet also nicht nur "vertikale" HOs, d.h. HOs zwischen verschiedenen Netzen, sondern auch HOs zwischen Zugangspunkten oder/und Leistungsmerkmalen des gleichen Netzes, sog. "horizontale" HOs, und jede Mixtur zwischen beiden HO-Arten.

Nun zu den Termini und deren Begriffen (= Bedeutungen = Sinngehalten = Semantiken, genauer: auch kommunikationstechnischen Pragmatiken) dieser Patentanmeldung.

**Begrifflich** (d.h. rein **funktional**, völlig **abstrakt**) - dies ist wichtig -
■ erfolgt ein abstrakter "**Kommunikationsvorgang**" alias "**Telekommunikationsvorgang, TK-Vorgang, TKV**" zwischen mehreren menschlichen und/oder nicht-menschlichen "**Teilnehmern**" (TLNs) daran, die ihrerseits "**Benutzer**" - oder deren Stellvertreter/Teilfunktionalitäten/Ergänzungsfunktionalitäten sind, wie z.B. Anrufbeantworter, Mailboxes, MP3-Players, IVR-Systeme, Schrift-/Handschrift-/Grafik-/Symbol-/Sprach-/...-/DTMF-Erzeuger/DTMF-Erkenner/Interpreter/Filter aktiver und/oder passiver Art, allgemein: "**Kommunikations-Anwendungssysteme**" (siehe unten) - von "**Endsystemen**" (siehe unten) sind und diesen angehören, wobei diese Endsysteme Zugang zu mindestens einem Netz haben. Netze/Endsysteme/Benutzer bewerkstelligen gemeinschaftlich die (abstrakten) technischen Realisierungen von TKVs.
   Dabei heißt:
   ○ ein Kommunikationsvorgang alias TKV
      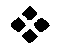 "**potentiell**", falls für ihn mindestens in einem an ihm beteiligten TKV-Endsystem eine konkrete Maßnahme zwar durchgeführt wurde, aber noch in keinem Gerät seiner TKV-Endsysteme (d.h. erst in mindestens einem TKV-TLN in mindestens einem dieser TKV-Endsysteme, siehe unten),
      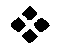 "**aktuell**", falls in mindestens einem solchen Endgerät dies bereits geschah und 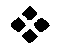
      "**gestartet**" alias "**begonnen**" in jedem der beiden Fälle,
      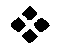 "**retrospektiv**" alias "**beendet**", falls für ihn in keinem an ihm beteiligten TKV-Endgerät eine konkrete Maßnahme mehr erfolgt.
      Man beachte, dass ein TKV also spätestens dann begonnen/gestartet wurde, wenn in mindestens einem Endgerät (z.B. einem Telefon) eines seiner Endsysteme mindestens eine ihn betreffende Maßnahme gestartet/begonnen wurde (z.B. das Abheben des Telefonhörers, oder die lokale Ein-/Ausgabe oder auch nur die lokale Auswahl einer Telefonnummer eines Anzurufenden durch einen an dem TKV irgendwie Beteiligten, oder der manuelle oder automatische Start eines Timers bei dessen Ablauf ein Anruf erfolgt, oder ... ).
   ○ ein aktueller TKV
      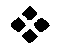 so lange "**im Verbindungsaufbau**" befindlich, bis ein TLN-Daten-Austausch in ihm begonnen hat,
      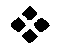 "**anlaufend**", sobald dieser TLN-Daten-Austausch begonnen hat, und
      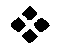 "**laufend**", sobald der TLN-Informations-Austausch begonnen hat,
      wobei ein " **Austausch**" begonnen hat, sobald der Austausch mindestens eines "**TLN-Datums**" bzw. einer "**TLN-Information**" eines TKV-TLNs zwischen mindestens einem TKV-Endsystem und mindestens einem von diesem aktuell benutzten Netz begonnen hat. Dabei ist ein TLN-Datum bzw. eine TLN-Information eine letztendlich/ursprünglich TLNwahrnehm-/erzeugbare Information, die mittels dieses Endsystems an/von diesen/m (nichtmenschlichen oder menschlichen) TLN ausgegeben wird bzw. eingegeben oder ausgewählt wurde. Der Unterschied zwischen beiden besteht darin, dass TLN-Daten i.d.R. nur zur ggf. erforderlichen Verwaltung (= Herstellung, Unterbrechung, ..., Beendigung) eines TKVs, während TLN-Informationen zur Zweckerfüllung des TKVs ausgetauscht werden, in beiden Fällen zwischen dessen TLNs oder o.g. Stellvertretern/Teilfunktionalitäten/....
   Diese Schrift unterscheidet mindestens zwei Arten von Kommunikationsvorgängen alias TK-Vorgängen alias TKVs: **Primär-Kommunikationsvorgänge** alias **Primär-TK-Vorgänge** alias **PTKVs** und - zu je einem HO darin gehörig - mindestens einen **Sekundär-Kommunikationsvorgang** alias **Sekundär-TK-Vorgang** alias **STKV** alias **HOCIS-TKV**. Jeder TKV hat eine eigene OSI-Verbindung (siehe unten). Beide Arten von TKVs und deren Endsysteme können in ihrer abstrakten und/oder materiellen Realisierung jedoch weitestgehend gleiche oder verschiedene abstrakte/materielle Betriebsmittel benutzen.
   Diese TKV-Termini/Begriffe gelten dabei universell, also auch für ein HO alias einen HO-Vorgang, falls dieses/r ein Kommunikationsvorgang/TKV ist - dann ist es/er eine dritte Art von TKVs. Ob ein HO alias HO-Vorgang auch ein (Tele-) Kommunikations-Vorgang ist, hängt davon ab, ob seine TK-Technik während eines HOs eine Kommunikation zwischen den TLNs des diesem HO zugrunde liegenden PTKVs impliziert oder nicht, was hier aber irrelevant ist: Das HOCIS-Verfahren ist in beiden Fällen anwendbar - und kann in ersterem Fall den HO-TKV ggf. nutzen und/oder als PTKV ansehen, wie z.B. aus den Erläuterungen zu den letzten **Abbildungen 5** im Abschnitt **D**. hervorgeht.
   Gleich hier wird darauf hingewiesen, dass spätestens aus den eben angesprochenen TK-Konfigurationen auch hervorgeht, dass der Anspruch-1-Wortlaut/Sinngehalt sich hinsichtlich eines HOs auf einen oder mehrere PTKVs und auf einen oder mehrere STKVs bezieht.
■ sind die in dieser Patentanmeldung verwandten kommunikationstechnischen Termini im international standardisierten "*ISO 7498-1, Information technology- Open Systems Interconnection - Basic Reference Model: The basic model",* kurz: **ISO/OSI-Referenzmodell** oder **OSI-RM**, definiert. Es bildet für den maßgeblichen Fachmann die verbindliche gedankliche/konzeptionelle Grundlage dieser Patentanmeldung.
   Zur Klarstellung des eben Gesagten: Die Wortlaute des/der erfindungsgemäßen HOCIS-Verfahrens/-Vorrichtung in den beiden Hauptansprüchen 1 und 80 beruhen - trotz ihrer "pseudo-natürlich-sprachlichen" Abfassung - auf der im OSI-RM definierten Terminologie/Begrifflichkeit, haben also schon die kommunikationstechnischen Präzisierungen/Beschränkungen des OSI-RMs, die viele Unbestimmtheiten ihrer "rein natürlich-sprachlichen" Bedeutungen eliminieren, erfahren. Noch weitergehend benutzt die Beschreibung des/der erfindungsgemäßen HOCIS-Verfahrens/- Vorrichtung OSI-RM-Termini/Begriffe, die in den pseudo-natürlich-sprachlichen Wortlauten/Sinngehalten der Ansprüche 1 und 80 nicht verwandt werden - und die zur "künstlichen" Terminologie/Begrifflichkeit des OSI-RMs gehören. Damit macht die Beschreibung Gebrauch von der Unmissverständlichkeit des Artikulationsvermögens des maßgeblichen Fachmanns per OSI-RM-Kunstworten/Kunstbegriffen. Dies wird der maßgebliche Fachmann als behilflich ansehen zur Vergewisserung des korrekten Verständnisses der pseudo-natürlich-sprachlichen Beschreibung des/der HOCIS-Verfahrens/-Vorrichtung in ihrem jeweiligen Hauptanspruch. Zu dieser Benutzung der OSI-RM-Kunstworte/-begriffe siehe auch Abschnitt **D.**. Zum nachfolgenden Gebrauch der OSI-Terminölogie/Begrifflichkeit und speziell zu den OSI-RM-Kunstworten/-begriffen in dieser Schrift sei vorab noch angemerkt, dass letztere sie
   ○ einerseits nicht vollständig rekapitulieren kann, sodass ersatzweise auf den o.g. internationalen Standard verwiesen wird, wobei im Zweifelsfall diese Schrift maßgeblich ist, und
   ○ andererseits an einigen Stellen hinsichtlich der Gegebenheiten bei einem HO- und dem zugehörigen HOCIS-Vorgang konkretisiert (siehe Abschnitt **D**.).

   Terminologisch/Begrifflich im Sinne des OSI-Referenzmodells gibt es in jedem "n-Punkt-Kommunikationsvorgang", n >= 2, zwischen zwei beliebigen seiner Endsysteme, z.B. **A** und **Z**, eine abstrakte "**OSI-Verbindung**" - die sich auch auf Kommunikations-Anwendungssysteme in diesen beiden Endsystemen erstreckt, wie unten erläutert wird.
   Jede OSI-Verbindung ist gemäß OSI-RM grundsätzlich immer untergliedert in mindestens 7 "übereinander liegende" abstrakte "**Li-Verbindungen**" (1 <= i <= 7), mittels denen dieser Kommunikationsvorgang zwischen diesen beiden Endsystemen **A** und **Z** erfolgt (wobei "L" für "layer" steht).
   Das OSI-RM definiert damit - auf Grund seiner "7-Schichten" stets prinzipiell gleicher "Abstraktions-Semantik" seiner Li-Verbindungen in jeder OSI-Verbindung - die "**OSI-Kommunikations-Architektur**", die ihrerseits auf dieser "7-Schichten-Struktur" der grundsätzlichen Abstraktions-Semantik aller OSI-Verbindungen beruht. Diese grundsätzlichen 7 Abstraktions-Schichten seiner Kommunikations-Architektur nennt das OSI-RM - ganz unabhängig von einzelnen OSI-Verbindungen - naheliegenderweise jeweils "**Li**"', 1 <= i <= 7.
   In einer einzelnen OSI-Verbindung kann es für jedes "i" mehrere Li-Verbindungen geben. Jede solche Li-Verbindung muss zu ihrer Verwirklichung mindestens eine Lj-Verbindung der gleichen OSI-Verbindung benutzen, wobei immer j < i ist - abgesehen von
   ○ einer L7-Verbindung (d.h. i = 7), die dazu eine andere L7-Verbindung benutzen kann, und
   ○ einer L1-Verbindung, die dazu i.d.R. ein "physikalisches Medium" benutzt,
   wobei eine Lk-Verbindung (1 <= k <= 7) von mehreren OSI-Verbindungen benutzt werden kann oder in einer OSI-Verbindung von mehreren Lk+i-Verbindungen (1 <= i <= 7-k).
   Eine L7-Verbindung einer OSI-Verbindung wird oft als "**Kommunikationsverbindung**" bezeichnet, da in ihr von alleiniger Bedeutung ist die "**Kommunikation**" im Sinne des dieser OSI-Verbindung zugrunde liegenden spezifischen TK-Vorgangs bzw. des ihn unterstützenden "**Kommunikations-Anwendungssystems**" (letzteres angesiedelt in mindestens den beiden Endsystemen der OSI-Verbindung). D.h.: Eine L7-Verbindung abstrahiert völlig von den Modalitäten der in dieser Kommunikation - eines Kommunikations-Anwendungssystems, das ggf. menschliche TLNs in ihm treiben - benutzten Informationsübertragung (= L1- bis L4-Funktionatität), Informationsuntergliederung (= L5-Funktionalität) und Informationspräsentation (= L6-Funktionalität): Eine L7-Verbindung kennt nur die "**Interaktionen**" in dieser "**Kommunikations-Anwendungs**"-Kommunikation.
   Eine OSI-Verbindung eines TK-Vorgangs "**besteht**"
   ○ örtlich nicht nur zwischen dessen beiden (TK-Vorgangs-) Endsystemen **A** und **Z**, - genauer: zwischen diesen beiden Endsystemen **A** und **Z** besteht die L3-Verbindung dieser OSI-Verbindung - sondern mittels ihrer L7-Verbindung auch zwischen den Kommunikations-Anwendungssystemen bzw. deren TLNs in diesen Endsystemen **A** und **Z**, und
   ○ zeitlich sobald dieser TK-Vorgang begonnen hat - insbesondere besteht ab diesem Zeitpunkt die L7-Verbindung dieser OSI-Verbindung zwischen diesen Kommunikations-Anwendungssystemen bzw. TLNs dieses TK-Vorgangs - und bleibt solange bestehen, bis diese beiden Kommunikations-Anwendungssysteme bzw. TLNs diesen TK-Vorgang als beendet ansehen (was das OSI-RM als Beendigung dieser L7-Verbindung und OSI-Verbindung modelliert).

   Demnach besteht diese OSI-Verbindung - wegen des Beginns der sie kreierenden Kommunikation ihres Kommunikations-Anwendungssystems, d.h. des Beginns des TK-Vorgangs - allerspätestens ab dem Zeitpunkt, ab dem in einem Endgerät des Endsystems des sie/ihn kreierenden (Kommunikationsvorgangs-) TLNs in **A** oder **Z** irgendeine Maßnahme für sie/ihn erfolgt. Irgendeine Li (1 <= i <= 7) dieser OSI-Verbindung braucht zu diesem Zeitpunkt aber noch nicht (abstrakt) realisiert oder realisierbar zu sein. Das Bestehen einer Li-Verbindung impliziert also nicht deren (abstrakte) Realisierung oder Realisierbarkeit. Und allgemeiner: Mit einer OSI-Verbindung bestehen auch ihre mindestens 7 Li-Verbindungen, von denen jedoch keine einzige Lj-Verbindung - und ihre Zusammenarbeit mit den anderen Li-Verbindungen dieser OSI-Verbindung - abstrakt realisiert zu sein braucht (materielle Realisierungen/Implementierungen betrachtet das OSI-RM ohnehin nicht). Eine (abstrakte) Realisierung einer Li-Verbindung braucht es nur während ihrer aktuellen (abstrakten) Benutzung zu geben.
   Dies impliziert, dass die OSI-Verbindung zwischen den beiden Endsystemen **A** und **Z** für diesen TKV bestehen bleibt, auch wenn insbesondere ihre mindestens eine L3-Verbindung nicht realisiert oder realisierbar ist, wie es in HOs ihrer Endsysteme oft vorkommt.
   Dass jedenfalls die L7-Verbindung einer PTKV-OSI-Verbindung in einem HO-Fall bestehen bleibt, kann mittels des erfindungsgemäßen HOCIS-Verfahrens sichergestellt werden (siehe Abschnitt **A**.), da es dafür sorgt, dass stets mindestens ein PTKV-TLN in **A** oder **Z** weiß, dass dieser PTKV (d.h. die PTKV-OSI-Verbindung) noch nicht beendet ist, obwohl in ihr z.B. eine L3-Verbindungsunterbrechung auftritt - wobei dieser TLN dies von dieser L7-Nichtbeendigung gelegentlich ohnehin weiß, auch ohne HOCIS-Verfahren, weil sich diese Nichtbeendigung für ihn aus seiner Anwendungs-Kommunikation ergibt, die er in den der L3-Verbindungsunterbrechung vorangehenden Sekunden tätigte. Das HOCIS-Verfahren bestätigt in einem solchen Fall die entsprechenden TLN-Mutmaßungen oder stellt sie richtig. Letzteres z.B., wenn der in das HO direkt involvierte TLN während des HOs - also während einer L3-Verbindungsunterbrechung - die OSI-/L7-Verbindung (d.h.: den zugehörigen PTKV) einseitig beendet.
   Hier wird nochmals darauf hingewiesen, dass eine PTKV-OSI-Verbindung im erfindungsgemäßen Verfahren nicht die gleichen Endsysteme zu verbinden braucht wie eine zu ihr gehörige STKV-OSI-Verbindung: In beiden ist jedoch der jeweilig betrachtete TLN der gleiche (was Abschnitt **D**. vertieft).
■ enthalten abstrakte "**Endsysteme**" neben ihren abstrakten menschlichen Benutzern und/oder nichtmenschlichen Benutzern (= Benutzer-Automaten) und/oder deren o.g. Stellvertretern/ Teilfunktionalitäten - alle als TKV-TLNs zu verstehen - abstrakte "Endgeräte", deren Gesamtheit in einem Endsystem nachfolgend gelegentlich ebenfalls als "Endgerät" bezeichnet wird, d.h. nichtmenschliche Funktionsgruppen, wie etwa die von LANs, WLANs, Großrechnern, Datenbanken, PBXes, RASes, Firewalls, Switches aller Art, aber auch die von Netz-Zugängen, IADs, E/A-Geräten. Nicht-menschliche (abstrakte oder materielle Implementierungen von) Funktionsgruppen in Endsystemen werden nachfolgend häufig als "**Moduln**" bezeichnet.
■ können abstrakte einzelne "**Endgeräte**" eines Endsystems separiert voneinander betrachtet werden, insbesondere
   ○ ein "terminales Endgerät", stets mit elektronischer/physischer/akustischer/optischer "logischer" Benutzeroberfläche (die häufig mobil ist, z.B. in einem Mobiltelefon),
   ○ ein "nicht-terminales Endgerät", mit oder ohne Netz-spezifischem "Terminal Adapter" (TA) für dessen "Netz-Abschluss" (NT = "Network Terminator"), jedenfalls ohne eine solche eben skizzierte Benutzeroberfläche, wobei
   ○ Teilnehmer-terminale und nicht-terminale Endgeräte eines Endsystems über physikalische/kommunikationstechnische Schnittstellen und/oder weitere Endgeräte miteinander zusammenarbeiten, von denen i.d.R. nur einige standardisiert sind, und
   ○ ein nicht-terminales Endgerät (und sogar dessen TA und zugehöriger NT, siehe Abschnitt C.) und ein terminales Endgerät in einer materiellen Implementierung integriert sein können - insbesondere in einem mobilen Endgerät (z.B. einem Mobiltelefon), in dem dann ersteres ebenfalls mobil ist.

   Der Anspruch 1 dieser Patentanmeldung impliziert die Existenz mindestens eines funktionalen Moduls "**M(HOCIS)**" in einem Endsystem eines HOCIS-TKVs alias STKVs. Dieser M(HOCIS) ist funktional weitergehend untergliedert, wie Abschnitt **D**. ausführlich darlegt, um das Gewinnen eines präzisen Verständnisses des Anspruch-1-Wortlauts/Sinngehalts zu erleichtern. Zu dieser Untergliederung eines OSI-RM-konformen Endsystems in Moduln (wie insbesondere im Abschnitt **D**. weiter ausgeführt) wird angemerkt, dass das OSI-RM auf den ersten Blick eine Endsysteme-Untergliederung vermeidet, es sie aber tatsächlich vornimmt. Ursache hierfür ist die gedankliche Notwendigkeit der Untergliederung von Kommunikations-Anwendungen (wie die abstrakte HOCIS-Kommunikations-Anwendung, die zur abstrakten Realisierung des HOCIS-Verfahrens gedanklich unerlässlich ist, die i.d.R. auf der L7 in den Endsystemen angesiedelt sind), um sie zu verstehen. Diese Notwendigkeit führte in den Festlegungen zur L7 (im einschlägigen internationalen Standard **ISO/IEC 7498** aus 1994 und der identischen **ITU-T Recommendation X.200**, u.A. Seite 32/33, und spezifischer im internationalen Standard **ISO/IEC 9545** aus 1994 und der identischen **ITU-T Recommendation X.207**) zur Definition der funktionalen Struktur einer **OSI-RM-konformen abstrakten Kommunikations-Anwendung**, die logischerweise die ihr entsprechende funktionale Untergliederung der sie beherbergenden Endsysteme impliziert - und zwar in deren Bereich der von ihnen beherbergten OSI-RM-konformen abstrakten Kommunikations-Anwendung.
■ sind abstrakte "**Server**" alias "**Server-Endsysteme**" alias "**Endsysteme-ohne-menschliche-TK-Vorgangs-Teilnehmer**" Funktionsgruppen in oder an einem Netz - unter der Verwaltung dessen Netzbetreiber(s) stehend oder nicht - die in dieser Schrift ebenfalls als Endsysteme/Endgeräte angesehen werden, letztere jedoch nicht als in terminal/nicht-terminal zu untergliedern sind.
■ sind abstrakte "**Systeme**" entweder Endsysteme/Endgeräte oder in ein Netz irgendwie integrierte Computer.
■ brauchen die vielen möglichen Li-Relay-Rollen eines Servers und/oder Systems in einer PTKV- oder STKV-OSI-Verbindung in dieser Schrift nicht alle einzeln erläutert zu werden - die Diskussion der Relay-Beispiele in den **Abbildungen 5** schaffen hierzu für den maßgeblichen Fachmann Klarheit. Bedeutsam ist hier vor allem ein (stationärer oder mobiler) "**HOCIS-Server**" und/oder ein "**HOCIS-System**" in einem HOCIS-TKV - der zu einem HO eines PTKVs gehört - als Endsystem mindestens einer dessen einen oder mehreren HOCIS-OSI-Verbindungen (siehe die Erläuterungen der letzten **Abbildungen 5** im Abschnitt **D**.), das auch ein HOCIS-Server oder ein HOCIS-System in einem Netz sein kann.
■ heißt ein PTKV-Endsystem (und dessen PTKV-TLN) in ein HO potentiell oder aktuell oder retrospektiv "**direkt involviert**", wenn es an seinem Netzzugangspunkt (über den der PTKV geroutet ist) während dieses HO-Vorgangs auf der L3 einerseits einen totalen oder partiellen und andererseits permanenten oder temporären Netz-/Netzzugangspunkt-/Netzleistungsmerkmal-Nutzungsmerkmal-Wechsel potentiell oder aktuell oder retrospektiv vornimmt und dabei seine PTKV-OSI-Verbindung (alias seinen PTKV) beibehält. Ein PTKV-Endsystem (und dessen TLN) heißt in dieses HO "**indirekt involviert**", wenn es in dieses HO nicht direkt involviert ist.
■ braucht diese Schrift nur den Fall zu betrachten, dass es in einem PTKV **zu einem Zeitpunkt nur ein einziges HO** gibt - also abstrakte "Ein-direkt-involviertes-System"-HOs. Von jeder PTKV-Ausführungsform, die den Eindruck vermittelt, sie behandele auch ein abstraktes "Mehrere-direktinvolvierte-Systeme"-HO - was in der Praxis sinnvoll ist - kann nämlich leicht gezeigt werden, dass sie in Wirklichkeit auf der Behandlung einer Sequenz von zeitlich überlappenden "Ein-direktinvolviertes-System"-HOs beruht, die diese Patentanmeldung behandelt. Daraus folgt:
   ○ Für ein/en HO/-Vorgang ist die oben eingeführte **potentiell-/aktuell-/retrospektiv-** Attributierung eines TKVs anwendbar.
   ○ Da die (abstrakte) Realisierung einer PTKV-OSI-Verbindung alias deren PTKV n >= 2 PTKV-Systeme umfasst, sind in ein HO in diesem PTKV n-1 Systeme indirekt involviert.
■ gilt für einen HOCIS-TKV alias STKV zu einem HO eines PTKVs, dass er beginnt/startet mit dem Entdecken des Vorliegens - wo und wie auch immer in mindestens einem seiner PTKV- und/oder zugehörigen HOCIS-TKV- alias STKV-Systeme - eines erfindungsgemäßen "**Signals**" alias "**HOCIS-Signals**". Für einen STKV ist die oben eingeführte **potentiell-/aktuell-/retrospektiv-** Attributierung eines TKVs mit diesem Startzeitpunkt ebenfalls anwendbar.
   Die Startzeitpunkte von PTKVs, deren HOs und deren STKVs in einem HOCIS-Verfahren können - sofern nichts anderes gesagt ist - zeitlich in beliebiger Reihenfolge angeordnet sein/werden.
   Ein HOCIS-TKV alias STKV alias dessen STKV-OSI-Verbindung - zu einem potentiellen oder aktuellen oder retrospektiven HO eines PTKVs - kann mit diesem PTKV insbesondere insofern zu tun haben, als er zu seiner/ihrer (abstrakten und/oder materiellen) Realisierung, d.h. zur Realisierung seiner STKV-OSI-Verbindung, also deren STKV-Li-Verbindungen, eine oder mehrere der Li-Verbindungen der PTKV-OSI-Verbindung (d.h. deren abstrakte und/oder materielle Implementierungen an deren Endpunkten in den PTKV-Endsystemen) benutzen kann. Aber die Realisierungen beider OSI-Verbindungen (in abstrakten und/oder materiellen Implementierungen) können auch völlig unabhängig voneinander erfolgen.
   Wichtig dabei ist lediglich, dass das HOCIS-Verfahren auf einer Übergabe HO-relevanter Information von einem HOCIS-System (gewisser Modalität) an einen TLN beruht - ganz gleich wie die dafür (gemäß Anspruch 1) unerlässliche HOCIS-OSI-Verbindung realisiert ist. Dem steht auch nicht entgegen, dass der Start des HOCIS -/Sekundär-TKVs dieser OSI-Verbindung durch das Vorliegen eines (HOCIS-) Signals in einem PTKV- und/oder HOCIS-/Sekundär-System erfolgt.
   Zu beachten ist außerdem, dass die Art des Zustandekommens/Entstehens/Vorliegens eines derartigen (HOCIS-) Signals in mindestens einem dieser Systeme in keiner Weise beschränkt ist, es mit dem Zustandekommen/Entstehen/Vorliegen irgendwelcher HO-relevanter Information nicht verwechselt werden darf und es in dieser Schrift im Einzelnen nicht erläutert zu werden braucht.
■ ist das jeweils betrachtete **HOCIS-Verfahren** - genauer: ein **HOCIS-TKV** als dessen abstrakte Ausführungs-Instanziierung betrachtet - einem HO eines PTKVs eindeutig zugeordnet.
■ impliziert ein STKV keineswegs ein aktuelles HO: Er gehört z.B. zu einem potentiellen HO.
■ impliziert ein STKV (zu einem potentiellen oder aktuellen oder retrospektiven HO eines PTKVs), dass mindestens einmal der Versuch begonnen wurde, eine von mindestens einem M(HOCIS) bereitgestellte HO-relevante Information einem TLN dieses PTKVs zu übergeben.
   Dieser "**Versuch einer Übergabe**" bedeutet (siehe **Abbildungen 5** und deren Erläuterungen)
   ○ entweder
      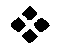 einen Versand-/Empfangs-Versuch HO-relevanter Information über/von mindestens ein/einem Netz durch einen M(HOCIS) in mindestens einem PTKV-/STKV-System,
      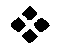 und/oder der Versuch deren lokaler Übergabe/Entgegennahme an/von dessen TLN,
   ○ oder der M(HOCIS) des Endgeräts dieses TLNs hat lokal - per vorab zwischen diesen beiden M(HOCIS)s vereinbartem Protokoll, etwa auf der Grundlage eines "Time out"- Mechanismus, wie es/er/sie dem Fachmann bekannt ist/sind - eine solche Information generiert, ohne dass diese über ein Netz versandt und/oder empfangen worden wäre.

   Dies ist der "Kern" der vorliegenden Erfindung, der dem Anspruch-1-Wortlaut/-Sinngehalt zugrunde liegt - der nachfolgend (insbesondere im Abschnitt **D**.) mehrfach und detaillierter erläutert wird.
■ ist eine "**HO-relevante Information**" eine letztendlich TLN-wahrnehmbare Information mindestens über das in das HO direkt involvierte Endsystem, die
   ○ in einem terminalen STKV-/PTKV-Endsystem dessen PTKV-TLN übergeben wird,
   ○ nachdem sie dazu mittels eines M(HOCIS) erfasst und bereitgestellt und übergeben wurde.

   Sie entspricht letztendlich der "HO-convenience-information-support-Eignung" des HOCIS-Verfahrens hinsichtlich eines in ein HO involvierten (und in den Beispielen dieser Patentanmeldung i.d.R. menschlichen) PTKV-TLNs. Sie ist letztendlich für/auf die/der Abstraktionsebene dessen "automatisierter" und/oder physischer und/oder syntaktischer und/oder semantischer und/oder pragmatischer/mentaler Wahrnehmungsfähigkeit konzipiert/artikuliert/kodiert/präsentiert/angesiedelt:
   ○ Pragmatisch/mental/psychisch ist eine HO-relevante Information auf das Anliegen hin konzipiert, für TLNs von vor allem solchen PTKVs einen HOCIS zu erbringen, in denen mindesten ein PTKV-TLN mobil ist (sodass zukünftig schon allein deshalb HOs häufig auftreten dürften) und zwar so, dass er i.d.R. von den TLNs als willkommen empfunden wird. Sie kann zwar - soweit dies aus irgendeinem Grund für diese TLNs sinnvoll ist - Netz- und Gebühren-Information beim Eintreten elementarer TK-Ereignisse in dem aktuellen PTKV enthalten, darf sich aber nicht auf solche "Pragmatik-/Mental-/Psycho-Trivialitäten" beschränken. Vielmehr muss ein HOCIS sich in die "Seelen dieser TLNs einschmeicheln" und diese TLNs hinsichtlich ihres PTKVs und dessen HOs mit zuversichtlich/erfreut stimmenden Informationen versorgen - möglichst flexibel, einfühlsam und individuell. Man beachte, dass ein HOCIS z.B. einem TLN das ständige erneute Einchecken in WLANs, die er kurzfristig nacheinander durchläuft, vollständig abnehmen kann und ihn ggf. nur über einen Netz-Wechsel informiert, wenn dies z.B. von ihm so vorgegeben wurde. Der maßgebliche Fachmann kann von einer einem TLN übergebenen HO-relevanten Information i.d.R - von einem komplexeren HOCIS sofort - unterscheiden, ob sie/er erfindungsgemäß ist oder dem o.g. Trivialbereich angehört, den der einschlägige Stand der Technik ansatzweise auch bereits erschlossen hat.
   o Semantisch/syntaktisch ist eine HO-relevante Information, wie für Informationen allgemein üblich, etwa in einer Präsentation/Kodierung einer menschlichen natürlichen Sprache und/oder Schrift und/oder Zeichen und/oder .... dargestellt. Dies schließt jedoch keine andere Informationsdarstellung in ihr aus, etwa TK-übliche syntaktische Kodierungen, etwa in Form international standardisierter und dem Fachmann bekannter PDUs, z.B. "ASN.1-PDUs", und deren irgendwie geartete Semantik-Belegung.

   Dies impliziert Gestaltungs-/Darstellungsvarianten einer HO-relevanten Information
   o einerseits als TLN-adäquaten HOCIS, der auf mindestens einer **"HOCIS-SDU"** (SDU = Service Data Unit) beruht. Dabei sind SDUs zu unterscheiden von ihrer materiellen Implementierung mittels mindestens einer **"HOCIS-IDU"** (= Interface Data Unit), die diese Schrift nicht betrachtet und
   o andererseits als TK-adäquate mindestens eine **"HOCIS-PDU"** (PDU = Protocol Data Unit). Diese Schrift vereinfacht diese OSI-Terminologie insofern, als sie SDUs ebenfalls als PDUs ansieht. Folglich ist eine HO-relevante Information in dieser Patentanmeldung immer eine so verstandene HOCIS-PDU.

   Zur Vereinfachung der Abbildung des vorstehend Gesagten auf das OSI-RM sei auch noch geklärt: Hinsichtlich eines PTKV/STKV-TLNs beinhaltet der abstrakte Begriff "HO-relevante Information" die o.g. mindestens eine HOCIS-SDU, die mittels mindestens eines diese SDU erbringenden OSI-RM-gemäßen **"HOCIS-Service-Elements"** an diesen TLN übergeben wird, wobei
   o diese abstrakten **"HOCIS-SEs"** i.d.R. die möglichen materiellen Implementierungen der HOCIS-Maßnahmen für diesen TLN hinsichtlich eines HOs spezifizieren.

   Merkmale einer materiellen Implementierung alias Ausführungsform eines HOCIS-Verfahrens werden in dieser Patentanmeldung aber gar nicht betrachtet.
   D.h.: Nachfolgend sind die Termini **"HO-relevante Information", "HOCIS"** und **"HOCIS-Service**" insofern letztendlich Synonyme, als sie die letztendliche materielle Information eines materiellen TLNs eines (aktuellen oder potentiellen oder retrospektiven) materiellen PTKVs hinsichtlich eines dessen (aktuellen oder potentiellen oder retrospektiven) materiellen HOs auf OSI-RM-konforme Weise modellieren.
■ erzielt ein HOCIS-TKV seinen HOCIS eines PTKV-TLNs hinsichtlich eines HOs (und beeinträchtigt damit ggf. auch die Auslösung bzw. Modifikation bzw. Unterdrückung dieses HOs oder eines Berichts darüber) ohne Modifikation eines der zur PTKV-/HO-Realisierung benötigten Netze. Letztere brauchen gar nichts von einem Anspruch-1-gemäßen HOCIS-TKV für einen PTKV zu erfahren, da ersterer i.d.R. auf der L4-L7 seiner zugrunde liegenden STKV-OSI-Verbindungen angesiedelt ist - auch wenn seine HO-relevante Information sich auf L1-/L2-Gegebenheiten in "seinen" PTKV-OSI-Verbindungen bezieht. Ein STKV ist also komplett **"Netz-transparent"** und kann so auch materiell implementiert werden.
■ kann ein Benutzer eines Endsystems/-geräts
   o möglicherweise für sich die Darstellung eines ihm angebotenen HOCIS und/oder die Modalitäten seiner Entgegennahme eines HOCIS bestimmen/reduzieren/abschalten - kurz: **"konfigurieren" -** und zwar für die Zeit vor und/oder während und/oder nach der Durchführung des eigentlichen HOs,
   o HOCISs mit beliebigen anderen Vorgängen/Anwendungen austauschen und
   o die Entgegennahme mindestens eines HOCIS in mindestens einer Weise bestätigen oder nicht bestätigen müssen, wobei eine solche Bestätigung/Nichtbestätigung den Verlauf des HOCIS-TKVs verändern kann oder nicht.
■ ist hinsichtlich des Verhältnisses zwischen einem Endsystem und einem Netz zu unterscheiden zwischen der rudimentären Konnektivität dieses Endsystems zu diesem Netz, sowie dessen Internet-Konnektivität und dessen Kommunikationsanwendungs-Konnektivität über dieses Netz: Seine
   o **"rudimentäre Konnektivität"** zu einem Netz ist gegeben, sobald es auf der L1 und L2 von diesem Netz mindestens eine PDU empfangen kann (es hat dann bereits ein **"rudimentäres** HO" zu diesem Netz durchgeführt),
   o **"Internet-Konnektivität"** darüber ist gegeben, sobald es darüber Verbindungen zu anderen Internet-Endsystemen benutzen kann - was neben seiner L1/L2-Konnektivität auch seine **"Admin-Konnektivität"** zu diesem Netz voraussetzt, d.h. dass es bei diesem Netz **"eingecheckt"** ist (siehe die Erläuterungen der letzten **Abbildungen 5** im Abschnitt **D.**) - und
   o **"HOCIS-Konnektivität"** alias **"spezielle An**w**endungs-Internet-Konnektivität"** darüber ist gegeben, sobald es darüber Verbindungen zu anderen Intemet-Endsystemen benutzen kann, wobei diese Internet-Verbindungen über dieses spezielle Kommunikations-Anwendungssystem geroutet sein müssen.

   Diese Patentanmeldung unterscheidet - sofern sie nichts anderes sagt - nur zwischen dieser eben beschriebenen rudimentären Konnektivität und HOCIS-Konnektivität, sodass letztere auch spezielle Anwendungs-Internet-Konnektivitäten umfasst, insbesondere **"Netsurfing-Internet-Konnektivität"** alias *"***LANsurfing-Internet-Konnektivität".**
   Ein nur rudimentär zu einem Netz konnektiertes Endsystem muss - wenn es dieses Netz benutzen will um seine Internet-Konnektivität darüber zu realisieren - direkt involviert ein HO zwischen den Dienstmerkmalen dieses Netzes durchführen: Es muss in diesem HO zwischen den von ihm benutzten Dienstmerkmalen dieses Netzes "L1+L2-Dienst" und "L1+L2+L3-Dienst" wechseln.
   Zu beachten ist auch der Unterschied, den es zwischen einem rudimentären HO eines Endsystems zu einem Netz gibt gegenüber dem Einchecken dieses Endsystems in dieses Netz: Ersteres ist eine notwendige TK-Maßnahme dieses Endsystems hinsichtlich dieses Netzes, damit dieses Endsystem anschließend bei diesem Netz sein Einchecken durchführen kann. Dabei braucht das Einchecken eines Endsystems in ein Netz noch keine weitergehende Nutzungsmöglichkeit dieses Netzes durch dieses Endsystem zu implizieren, insbesondere keine Internet-Konnektivität dieses Endsystems - was der maßgebliche Fachmann alles weiß.
   Der Feststellung der rudimentären Konnektivität eines Endsystems zu einem Netz kommt im HOCIS-Verfahren besondere Bedeutung zu: Sie verwirklicht dessen Startzeitpunkt.
■ bedarf es auch noch der Klärung der Begriffe
   ○ **"paare"** STKV-/PTKV-Systeme: Dieses Attribut/Merkmal von mindestens zwei STKV- oder PTKV-Systemen besagt, dass sie in einem STKV bzw. PTKV miteinander kommunizieren. An dieser Stelle sei daran erinnert, dass in einer Ausführungsform alias materiellen Implementierung des HOCIS-Verfahrens, ein System sowohl mindestens ein STKV- als auch PTKV-System beinhalten kann - das ändert nichts daran, dass abstrakt ein STKV- bzw. PTKV-System nur jeweils mit einem paaren System die diesem TKV entsprechende STKV- bzw. PTKV-OSI-Verbindung betreibt.
   ○ **"aktiver Kommunikationsversuch"** eines STKV-/PTKV-Systems: Dieser Begriff bezeichnet einen Versuch dieses Systems, über mindestens ein Netz mindestens eine PDU zu einem paaren System zu senden und/oder irgendeine Bestätigung für deren Empfang zu erhalten.

Das im Abschnitt **B.** mit vielen Worten und grundsätzlich beschriebene und fundamental Neue am HOCIS-Verfahren wird nachfolgend in wenigen Worten und Praxis-orientiert wiederholt: Das HOCIS-Verfahren sieht vor, hinsichtlich eines - potentiellen oder aktuellen oder früheren - HOs eines Endsystems eines PTKVs mindestens einen PTKV-TLN durch mindestens einen HOCIS alias eine HOCIS-Maßnahme zu unterstützen. Er/Sie wird gestartet durch das Feststellen des Vorliegens mindestens eines HOCIS-Signals in mindestens einem PTKV- oder STKV-Endsystem. Als Folge dessen wird eine diesbezügliche HO-relevante Information mindestens einem PTKV-TLN übergeben (entweder nachdem sein STKV-Endsystem diese über ein Netz erhielt oder sie ersatzweise selbst konstruierte). Dieser TLN erhält diesen HOCIS aber nicht weil er ihn angefordert hätte, sondern weil er durch dieses HO möglichst wenig negative Beeinträchtigung erfahren sollte. Das HOCIS-Verfahren ist also "sozial" begründet.

Das HOCIS-Verfahren verleiht PTKV-Endsystemen damit ein Verhalten, das hinsichtlich ihrer potentiellen und/oder aktuellen oder retrospektiven HOs bisher nichteinmal angedacht wurde. Genauer: Es verleiht PTKV-Endsystemen/-geräten hinsichtlich HOs - um deren TLNs zu unterstützen - ein völlig neuartiges "soziales Verhalten" diesen TLNs gegenüber: Bisher gab es keine Spur einer derartigen Idee.

Allein deshalb unterscheidet es sich fundamental vom gegenwärtigen Stand der HO-Technik (siehe Abschnitt **A.**): Er ignoriert nämlich das "zwischenmenschliche" HO-Problem - dass nämlich bei einem HO mindestens ein darin indirekt involvierter Teilnehmer eines PTKVs über dieses HO und dessen Fortgang zumindest zeitweise im Dunkeln gelassen und damit ggf. erheblich irritiert wird, geschweige denn, dass ihm irgend eine Reaktion darauf ermöglicht würde. Er begreift seine totale "Missachtung der Benutzerinteressen hinsichtlich HOs" noch nicht einmal als Problem.

Das HOCIS-Verfahren ist der technische Kern einer Lösung dieses tatsächlichen Problems: Diese Schrift offenbart damit eine Grundlage einer Technik, mittels der jeder PTKV-TLN (seinen Bedürfnissen entsprechend) über ein (potentielles oder aktuelles oder früheres) HO in diesem PTKV informiert/unterstützt werden kann - also auch ein in ein HO nicht direkt involvierter TLN.

Das HOCIS-Verfahren ist auch dazu geeignet, TLNs bei seamless MIHs zu unterstützen. Ein Beispiel der Sinnhaftigkeit einer solchen Untertützung: Beim Download einer großen Datei per WLAN-Technik auf einen PDA bewegt sich sein Benutzer aus dem dafür benutzten WLAN hinaus. Soll ein MIH-Verfahren hier greifen und das Download auf einem teureren und/oder wesentlich langsameren GSM-Netz weiterlaufen lassen, oder soll es erst bei Verfügbarkeit eines anderen WLANs weitergeführt werden, oder soll es nun möglicherweise ganz abgebrochen werden? Den Benutzer über diese Alternativen nicht informieren zu wollen - wie es beim seamless MIH vorgesehen ist - dürfte an den Marktbedürfnissen vorbeigehen.

Während es augenfällig ist, dass das erfindungsgemäße HOCIS-Verfahren bei einem HO zwischen einem/r WLAN/Femtocell und Mobilnetz sinnvoll ist, kann dies auch bei allen anderen Netzen/Teilnetzen/ Netztypen gelten, die der Anspruchswortlaut/-sinngehalt alle erfasst, insbesondere "HOs beim Mobilnetz/Mobilnetz-Roaming" - auch wenn die Beispiele/Abbildungen dieser Schrift nur den erstgenannten Fall konkretisieren.

Das HOCIS-Verfahren ist eine fundamentale Weiterentwicklung der bekannten Unterstützung eines Benutzers bei dessen Arbeiten mit seinem real oder virtuell lokalen Anwendungssystem, etwa MS-Word oder MS-Explorer oder auch dem Navigationssystem seines Autos. Es ist eine fundamentale Weiterentwicklung dieser Unterstützung, weil ein Benutzer bei dieser Arbeit bisher lediglich hinsichtlich Determinanten seines aktuellen Handelns unterstützt wird, die **seinen ihm bekannten und sich nicht selbsttätig ändernden Einflussbereich reflektieren,** während ihn das HOCIS-Verfahren zusätzlich hinsichtlich neuartiger Determinanten seines aktuellen Handelns auf neuartige Weise unterstützt, die einen **ihm unbekannten und sich aus seiner Sicht selbsttätig ändernden und von ihm unbeeinflussbaren** Bereich reflektieren (hier: hinsichtlich dortiger HO-relevanter Geschehnisse aller Art). Die fundamentale Innovation des HOCIS-Verfahrens besteht also in seinem neuartigen "convenience information support" der TLNs eines PTKVs hinsichtlich deren neuartiger Determinanten ihres aktuellen Handelns in HOs.

Zum Abschluss dieses Abschnitts **B**. sei folgendes angemerkt. In den bisherigen Beschreibungen des HOCIS-Verfahrens stand dessen Unterstützung eines in ein HO indirekt involvierten PTKV-TLNs bzw. dessen FMC-Telefons im Vordergrund, und dies gilt auch für die meisten der nachfolgenden Abschnitte dieser Schrift. Da der Abschnitt **B**. u.A. das Wesen des HOCIS-Verfahrens deutlich machen sollte, wird nun ausdrücklich darauf hingewiesen und kurz begründet, dass und warum es auch einen in ein HO direkt involvierten PTKV-TLN unterstützen kann - und zwar am allgemein bekannten praktischen Beispiel eines FMC-Telefons und dessen Feststellung seiner rudimentären IAD-Konnektivität (wobei der Anspruch 1 weder diese "FMC"- noch diese "Telefon"-, noch diese "IAD"-Beschränkung kennt).

Der HOCIS in diesem speziellen Anwendungsbeispiel des erfindungsgemäßen Verfahrens (für einen in ein HO direkt involvierten PTKV-TLN = FMC-Telefon-Benutzer) demonstriert die Markt-Relevanz des HOCIS-Verfahrens, indem er vor allem dessen praktisches FMC-Nutzungsvereinfachungs-Potential verdeutlicht. Ein solcher "HO convenience information support" unterscheidet sich nämlich - nachdem das FMC-Telefon seine rudimentäre IAD-Konnektivität (siehe oben) festgestellt hat - klar von der
■ heute bekannten Benutzer-Information durch das Telefon über dieses Ereignis, wobei diese Information dem Benutzer
   ○ nur als Folge nicht-trivialer Benutzer-Aktivität auf dem Telefon zugänglich wird, und
   ○ die Durchführung letzterer jede andere Benutzer-Aktivität auf dem Telefon unterbindet, und
   ○ dies beides den Benutzer nicht unterstützt hinsichtlich seiner Bewertung/Forcierung/Inkaufnahme/Hinterfragungsmöglichkeit/Vermeidungsmöglichkeit/... dieses potentiellen HOs,
■ während der zukünftige Benutzer-HOCIS, ganz anders als diese dürftige Benutzer-Information,
   ○ keine Benutzer-Aktivität auf dem Telefon erfordert und/oder
   ○ keine Benutzer-Aktivität darauf behindert, und
   ○ ihn vor allem hinsichtlich eines HOs sehr weitgehend unterstützen kann - z.B. indem er ein "one-touch-HO" zu diesem IAD ermöglicht (indem er diesen rudimentär konnektierten IAD sofort, automatisiert und im Hintergrund prüft: ob der Benutzer bei ihm ggf. einchecken und ihn dann auch noch zu einem bestimmten Zweck nutzen könnte, etwa zum o.g. "Netsurfing") - sodass der Benutzer dann dieses one-touch-HO nutzen kann um aus der rudimentären IAD-Konnektivität seines FMC-Telefons dessen Internet-Konnektivität (via diesen IAD) oder sogar dessen Netsurfing-Internet-Konnektivität (zusätzlich via seinem Home-IAD) zu machen.

Ein solches (per HOCIS-Verfahren realisiertes) one-touch-HO oder sogar zero-touch-HO o.Ä. (wie etwa vom Telefon-Benutzer für dieses HO konfiguriert), gestaltet die Benutzung eines FMC-Telefons viel angenehmer und zudem i.d.R. kostengünstiger als dies ohne das HOCIS-Verfahren möglich ist - sodass es auch von diesem in ein HO direkt involvierten PKTV-TLN als willkommen angesehen wird.

Dabei kann dieser HOCIS (z.B. per one-touch-HO) für einen Benutzer eines in ein HO direkt involvierten Telefons den weiter oben erläuterten HOCIS für einen in das gleiche HO indirekt involvierten PTKV-TLN nahtlos ergänzen. Der Unterabschnitt **D.,** insbesondere **D.4.9**. und die zugehörigen **Abbildungen 5**, insbesondere die Erläuterungen der **Abbildungen 5o-r**, vermitteln dazu ein weitergehendes Verständnis.

### C. Ausführungsformen-Varianten des HOCIS-Verfahrens - und Klärung weiterer zugehöriger kommunikationstechnischer Termini/Begriffe

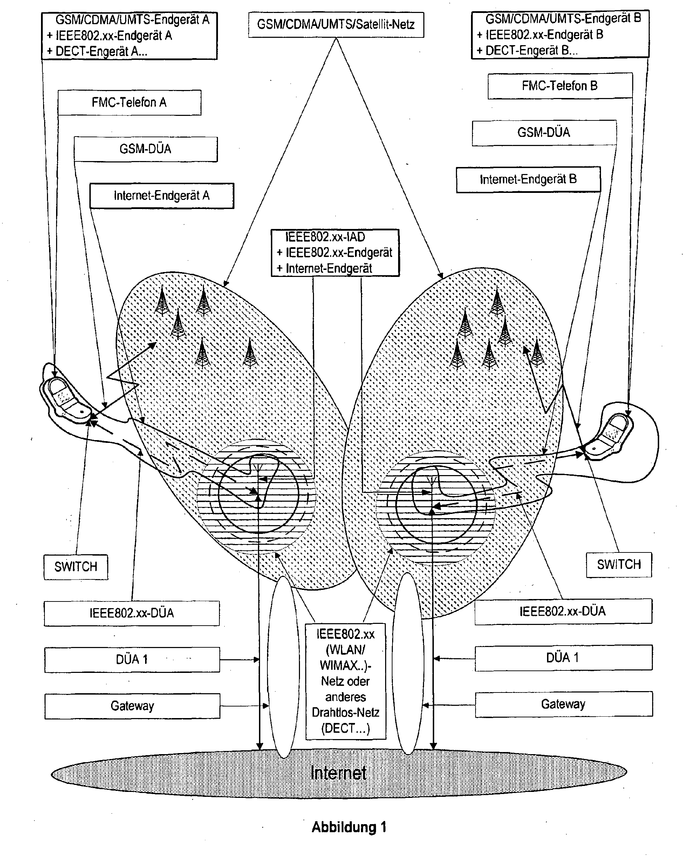

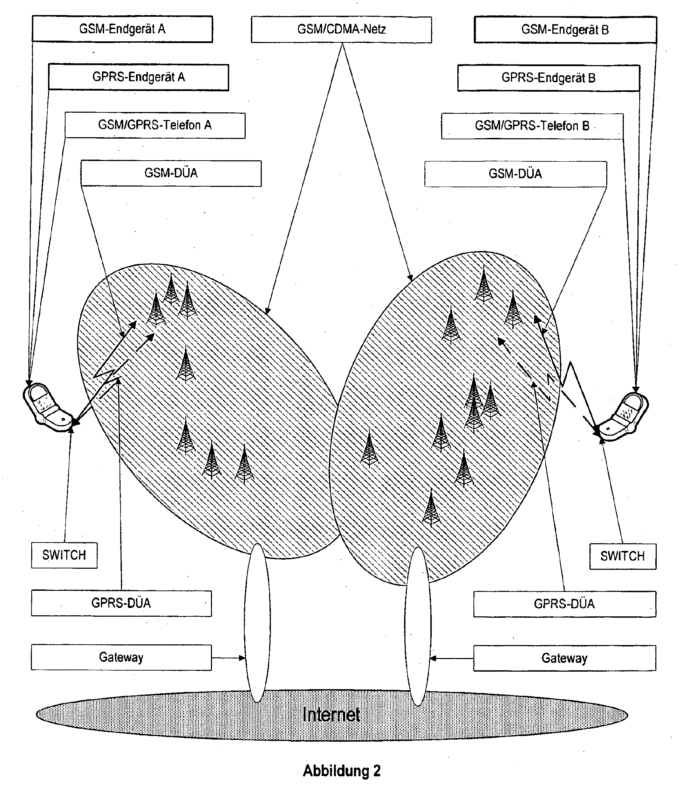

Die HOCIS-Verfahrens-Skizzen in diesem Abschnitt C. und die zugehörigen **Abbildungen 1** und **2** beschränken sich auf die Betrachtung des HOCIS-Verfahrens in Telefon-Anrufen unter Einbeziehung mobiler Endgeräte, d.h. insbesondere auf HOs in Zweier-PTKVs in (fast) Realzeit bei Nutzung mindestens eines Mobil- und/oder drahtlos-Netzes. Diese Spezialfälle erfassen keine "asynchronen" PTKVs an denen deren TLNs nicht zeitgleich teilzunehmen brauchen, wie etwa Email-basierte PTKVs, und keine HOs unter Beteiligung mindestens eines Festnetzes, und sie streifen nur HOs innerhalb eines Drahtlos-Netzes (etwa unter Einbeziehung von "Femtocells" oder WiFi-WLANs und ähnlicher Konstrukte in einem GSM/CDMA/UMTS/Wimax/...-Netz) - selbstverständlich ohne dadurch die zugehörigen nicht betrachteten HOCIS-Verfahrens-Spezialfälle dem Anspruchswortlaut-/-sinngehaltgemäßen Schutzbereich zu entziehen.

Diese Skizzen sollen also lediglich einige der erwarteten häufigen "Mobilität-bedingten" HOs in TK-Anordnungen verdeutlichen, in denen das HOCIS-Verfahren behilflich sein kann. Dabei sollen sie insbesondere zeigen, dass seine Realisierung - mittels mindestens eines nicht-menschlichen M(HOCIS)-Moduls - vollständig oder teilweise angesiedelt sein kann insbesondere in:
**1.** Mobilnetz- oder mindestens Drahtlos-Telefonen,
**2.** mobilen oder stationären IADs (IAD = "Integrated Access Device" eines WLANs, deren Vorläufer technisch einfacher waren und "Access Points", APs, genannt wurden, wobei das WLAN des IADs auch eine "Femtocell" eines GSM/CDMA/UMTS/Wimaxi....-Netzes sein kann),
**3.** Systemen/Servem/IADs in oder an einem Kommunikationsnetz,
möglicherweise für jeden TLN eines PTKVs anderswo.

Da in der nachfolgenden Erörterung der Begriff "Zugang" zu einem Kommunikationsnetz eines Endsystems dieses Netzes von wesentlicher Bedeutung ist, wird zunächst sein - dem maßgeblichen Fachmann bekannter - Sinngehalt (in für diese Schrift ausreichendem Umfang) geklärt: Dessen so angelegte fachmännische Definition lautet: Ein (abstraktes) Endsystem eines Netzes (das bei diesem also eingecheckt ist, s.o.) hat zu einem Zeitpunkt **"Zugang"** zu diesem Netz, wenn es zu diesem Zeitpunkt L3-Datenübertragung betreiben kann auf den OSI-Schichten L1-L3 seiner Verbindung mit
■ mindestens einem (abstrakten) Zugangspunkt dieses Netzes oder sogar
■ mindestens einem (abstrakten) Endsystem dieses Netzes über dieses Netz.

Daraus folgt insbesondere, dass ein Endsystem eines Netzes nicht permanent Zugang zu diesem zu haben braucht - wie es bei Endsystemen von Mobilnetzen bekanntlich oft der Fall ist.

Der **"Zugangspunkt"** zu diesem Netz ist dabei (insbesondere im Falle seiner potentiellen oder aktuellen Benutzung für eine Datenübertragung in/aus dieses/diesem Netz) die Stelle des Übergangs (vom Betreiber dieses Netzes an den Verantwortlichen für dieses Endsystem/Endgerät) der juristischen/geschäftlichen und ggf. technischen Verantwortlichkeit für die Funktionsfähigkeit der Schichten L1-L3 auf dem mindestens einen **"Datenübertragungsabschnitt"** (DÜA) zwischen Endsystem/Endgerät und Netz. Das Netz-seitige (abstrakte) Abschlussgerät eines DÜAs am Zugangspunkt heißt **"Netzabschluss"** ("network terminator", NT), das Benutzer-seitige (abstrakte) Abschlussgerät dieses DÜAs am Zugangspunkt heißt **"Terminaladapter",** TA. In einer materiellen Implementierung eines Netzzugangspunktes können diese beiden (abstrakten) Funktions-Einheiten, NT und TA, weitestgehend integriert sein - wie es bei Mobiltelefonen i.d.R. der Fall ist.

Nach dieser Klärung der beiden Begriffe Netz-Zugang und Netz-Zugangspunkt ist auch klar, dass ein in ein HO direkt involvierbares mobiles (abstraktes) Endsystem/Endgerät, insbesondere heute ein (abstraktes) Mobiltelefon, z.B. ein terminales und drei nicht-terminale (abstrakte) Endgeräte enthalten kann:
■ Sein terminales Endgerät dient definitionsgemäß primär der (abstrakten) Realisierung der (abstrakten) akustischen/optischen/mechanischen Benutzeroberfläche eines TKVs, und
■ seine i.d.R. drei (abstrakten) nicht-terminalen Endgeräte dienen seinem Zusammenarbeiten mit den mindestens zwei verschiedenen Mobilnetzen/Zugangspunkten/Leistungsmerkmalen in einem HO - wobei sich letztere im Bereich der "Femfocell"-Varianten beliebig geringfügig voneinander unterscheiden mögen. Diese drei nicht-terminalen Endgeräte sind
   ○ einerseits der (abstrakte) "Switch" zur (abstrakten) Datenvermittlung zwischen seinen Endgeräten - der ggf. marginalisiert sein kann, z.B. beim Einsatz von Femtocell-Technik, weil es bei ihr i.d.R. keinen Bedarf an Switching-Funktionalität gibt - und
   ○ andererseits zwei TAs/NTs zu/für dem/das jeweilige/n Netz/Zugangspunkt/Leistungsmerkmal (ggf. nur ein TA/NT bei Femtocell-Technik).

Wenn diese Fähigkeit eines Telefons zum "direkten HO" sich auf ein GSM/CDMA/UMTS/Satelliten/Wimax/ ....-Netz einerseits und andererseits ein Internet-verbundenes WiFi- oder Femtocell-WLAN bezieht, wird es gelegentlich **"FMC-Telefon"** genannt (FMC = Fixed/Mobile Convergence): Es unterstützt dann nämlich die Konvergenz der Benutzbarkeit sowohl der Festnetztechnik des Internets als auch der Mobilnetztechnik der GSM/CDMA/UMTS/Satelliten/ /Wimax/...-Netze, hier beim Telefonieren.

Die **Abbildung 1** zeigt dies beispielhaft mittels eines abstrakten FMC-Telefons (der Unterabschnitt **C.0** erklärt die Bedeutung ihrer graphischen Symbole), das
■ einerseits über den GSM-TA/-NT - er ist in das FMC-Telefon integriert - den temporären Zugang hat zum GSM-Mobilnetz (wobei der GSM-DÜA zwischen der nächsten stationären Antenne des GSM-Netzes und dem GSM-NT im mobilen FMC-Telefon, umgangssprachlich: die "GSM-Luftschnittstelle", zum GSM-Netz gehört), und
■ andererseits über den IEEE802.xx-TA/-NT - er ist ebenfalls in das FMC-Telefon integriert - den temporären Zugang hat zusätzlich zu einem WLAN (wobei der zeitweise IEEE802.xx-DÜA zwischen dem IEEE802.xx-IAD und dem IEEE802.xx-NT im FMC-Telefon, umgangssprachlich: die "WLAN-Luftschnittstelle", zum WLAN gehört), das seinerseits über seinen "aDSL-Modem"-TA Zugang hat zum Internet-Festnetz (d.h. zu dessen "aDSL-Splitter"-NT und Telefon-Kupferdoppelader-/aDSL-DÜA).

Man beachte, dass das IAD Luftschnittstellen-seitig (= nicht Internet-seitig) einen "Switch" enthält (genau wie das FMC-Telefon Luftschnittstellen-seitig): Wie aus der **Abbildung 1** ersichtlich, kann die Datenübertragung (für ein und denselben Kommunikationsvorgang) zwischen FMC-Telefon und IAD einerseits über dessen WLAN-NT (und das paketvermittelte WLAN) und andererseits über den GSM-NT (und das leitungsvermittelte GSM-Netz) erfolgen.

Aus Obigem ist ein GSM-/CDMA/UMTS-Merkmal ersichtlich: Bei diesen Netzen müssen alle Basisstationen - technisch/lizenzrechtlich/finanziell bedingt, da sie Betreiber großer Zellen sind - unter der rechtlichen und geschäftlichen Verantwortlichkeit von großen Betreibern stehen und sind damit in der Praxis-Einführung von Innovationen träge. Dagegen stehen IEEE802.xx-IADs/-APs unter der rechtlichen und geschäftlichen Verantwortlichkeit ihrer jeweiligen viel kleineren Betreiber, sodass sie eine technische Plattform bieten, auf der Innovationen aller Art - wie die dieser Schutzschrift - kurzfristig zum Einsatz kommen können.

Weiterhin kann ein FMC-Telefon - wie **Abbildung 2** zeigt (siehe Unterabschnitt **C.0**) - mit nur einem TA/NT auskommen, beispielsweise einem gemeinsamen GSM-/GPRS-TA/NT für sowohl das leitungs- als auch das paketvermittelte GSM-Netz, sodass dabei auf ein IEEE802.xx.-IAD völlig verzichtet werden kann. Trotzdem kann hier in einem Kommunikationsvorgang zwischen der Benutzung einerseits ausschließlich einer i.d.R. teureren leitungsvermittelten L3-Verbindung und andererseits zumindest teilweise etwas billigeren paketvermittelten L3-Verbindung gewechselt werden. Ein derartiger Wechsel ist kein Netz-HO sondern ein Leistungsmerkmale-HO (siehe Abschnitt **B.**).

Im Übrigen wird in den nachfolgenden Abbildungen links das Endgerät des in ein HO direkt involvierten Teilnehmers ausgewiesen. Die Darstellung auch der rechten Seite erinnert daran, dass das HOCIS-Verfahren vor allem für Teilnehmer eines Kommunikationsvorgangs vorgesehen ist, die in dieses HO nur indirekt involviert sind.

### C.0. Erläuterungen zu den Abbildungen 1 und 2

In **Abbildung 1** gehören unidirektionale Pfeile zu den Bezeichnern in den Rechtecken an ihren Pfeilenden, bidirektionale Pfeile stehen für Datenübertragungsabschnitte (DÜAs), die beiden schräg stehenden Ellipsen repräsentieren jeweils ein leitungsvermitteltes Fernnetz (z.B. GSM/ CDMA/UMTS/Satellit/..., hier auch **"Netz-I.**" genannt), und darin eingebettet je ein IEEE802.xx-WLAN (**"Netz-II."**) mit seinem IEEE802.xx-IAD/AP, das/der i.d.R. permanent Zugang zum Internet hat ("**Netz-III.**"). Der Bereich ausreichender Signalstärke eines IADs/APs wird durch den durchgezogenen Kreis darum angedeutet, die dazu konzentrischen gestrichelten/gepunkteten Kreise deuten abfallende bzw. verschwindende Signalstärken an.

Netz-II. hat für die Kosten eines Primär-Kommunikationsvorgangs zwischen A und B keine Bedeutung, sondern nur Netz-I. und Netz-III., sodass diese auch für HOs maßgeblich sind. Bei dieser Betrachtungsweise besteht das gesamte HO-Endgerät in dem Primär-Kommunikationsvorgang zwischen den Teilnehmern A und B hinsichtlich
■ Netz-I. aus dem FMC-Telefon allein und
■ Netz-III. aus dem FMC-Telefon zusammen mit seinem IEEE802.xx-IAD,

wobei das FMC-Telefon permanent Zugang zu Netz-I. hat und das IAD zu Netz-III.

Geht man vom Netz III. aus, so ist das komplette HO-Endgerät also das IAD + FMC-Telefon.

Geht man vom FMC-Telefon aus, so
■ ist es ein komplettes HO-Endsystem hinsichtlich Netz I. und Netz II.,
■ aber hinsichtlich Netz-III. nur Teil des vorstehend genannten HO-Endgeräts.

Geht man vom Primär-Kommunikationsvorgang aus, so kann als komplettes HO-Endgerät sowohl das FMC-Telefon allein als auch das FMC-Telefon + IAD angesehen werden.

In **Abbildung 2** besteht das komplette HO-Endgerät hinsichtlich beider Leistungsmerkmale (des einzigen Netzes)
■ sowohl hinsichtlich des Leistungsmerkmals "Leitungsvermittlung"
■ als auch hinsichtlich des Leistungsmerkmals "Paketvermittlung"
allein aus dem GSM-Telefon.

### C.1. Beispielsanwendung des HOCIS-Verfahrens allein im FMC-Telefon

In der **Abbildung 1** zeigen beide Seiten:
**I.** ein Mobilnetz (hier auf GSM-Basis) und
**II.** ein IEEE802.xx-Drahtlosnetz ("xx" z.B. ="11" für WLAN oder ="16" für WIMAX) und zugehörigen IEEE802.xx-IAD
**III.** mit Zugang zum Internet,
sowie ein FMC-Telefon mit regional unbeschränktem/beschränktem Zugang zu Netz-I./Netz-II..

In der Anfangsphase der Markteinführung der FMC-Technik dürfte **Abbildung 1** eine häufig auftretende HO-relevante TK-Anordnung sein. In den nachfolgend skizzierten beispielsweisen HO-Situationen A) bis H) kann das linke FMC-Telefon in ein aktuelles oder potentielles HO direkt (oder indirekt, was hier nicht weiter elaboriert wird) involviert sein:
A) Der A-Benutzer befindet sich sowohl in einer **I**.-Zelle als auch in einer **II**.-Zelle und verlässt letztere, obwohl er daraus gerade mit dem B-Benutzer telefoniert.
B) Der A-Benutzer befindet sich sowohl in einer I.-Zelle als auch in einer **II**.-Zelle und verlässt letztere, obwohl er daraus gerade den B-Benutzer anruft, diese "call set-up"-Prozedur aber noch nicht abgeschlossen ist.
C) Der A-Benutzer befindet sich sowohl in einer I.-Zelle als auch einer II.-Zelle und kommt in deren Grenzbereich, während er daraus gerade mit dem B-Benutzer telefoniert.
D) Der A-Benutzer befindet sich sowohl in einer I.-Zelle als auch in einer II.-Zelle und kommt in deren Grenzbereich, während er daraus gerade den B-Benutzer anruft (also diese "call set-up"-Prozedur noch nicht abgeschlossen ist).
E) Der A-Benutzer befindet sich in einer **I**.-Zelle und tritt in eine **II**.-Zelle ein, während er aus ersterer gerade mit dem B-Benutzer telefoniert.
F) Der A-Benutzer befindet sich in einer **I**.-Zelle und tritt in eine **II**.-Zelle ein, während er aus ersterer gerade den B-Benutzer anruft (also diese "call set-up"-Prozedur noch nicht abgeschlossen ist).
G) Der A-Benutzer befindet sich in einer **I**.-Zelle und tritt in den Grenzbereich einer **II**.-Zelle ein, während er aus ersterer gerade mit dem B-Benutzer telefoniert.
H) Der A-Benutzer befindet sich in einer **I**.-Zelle und tritt in den Grenzbereich einer **II**.-Zelle ein, während er aus ersterer gerade den B-Benutzer anruft (also diese "call set-up"-Prozedur noch nicht abgeschlossen ist).

Das erfindungsgemäße HOCIS-Verfahren kann in einer naheliegenden Vielzahl weiterer potentieller oder aktueller HO-Situationen anlaufen/laufen/terminieren. Auch wird nicht exemplifiziert, wie eine Teilnehmer-Information/-Unterstützung erfolgt.

Im Abschnitt **C.1.** ist allein das FMC-Telefon A - ggf. mit Unterstützung durch das Telefon B - mit der Abwicklung des erfindungsgemäßen HOCIS-Verfahrens betraut. Dies hat zur Folge, dass die "Internet-Konnektivität" zwischen den FMC-Telefonen A und B zu seiner Abwicklung abbricht, sobald A den Erreichbarkeitsbereich seines WLANs verlässt.

Die HO-TK-Anordnung der **Abbildung 2** unterscheidet sich auf zweierlei Weise von der vorigen HO-TK-Anordnung: sie gestattet zum einen überhaupt nur ein Leistungsmerkmal-HO aber kein Netz-HO und zum anderen aber auch allen "nur-GSM/GPRS"-Telefonen ein solches HO.

### C.2. Beispielsanwendung des HOCIS-Verfahrens allein im stationären IAD

Hier wird wiederum ausgegangen von der HO-TK-Anordnung der **Abbildung 1**. In allen HO-Vorgängen - 8 beispielsweise wurden vorstehend in A)-H) skizziert - erfolgt nun die Abwicklung des erfindungsgemäßen HOCIS-Verfahrens jedoch im stationären IEEE802.xx-IAD des FMC-Telefons A. Das "Internet-Konnektivitäts"-Zeitintervall dieses IADs mit dem FMC-Telefon B zur Abwicklung des HOCIS-Verfahrens ist größer als das dafür zur Verfügung stehende "Internet-Konnektivitäts"-Zeitintervall im Unterabschnitt **C.1.** - was diesem gegenüber eine Verbesserung des HOCIS des B-Benutzers hinsichtlich eines HOs des A-Benutzers ermöglicht.

Z.B. würde im obigen Fall A) das IEEE802.xx-IAD A seine L3-Verbindung zum FMC-Telefon B über das Internet dem HOCIS-Verfahren während dieses Telefongesprächs zur Verfügung stellen können, damit es über diese dem B-Benutzer mitteilen kann, dass die A-seitige IEEE802.xx-Konnektivität abgebrochen ist. Und weitergehend: In mehreren der obigen Fälle kann das IEEE802.xx-IAD A in allen kritischen Phasen potentieller und/oder tatsächlicher HOs des Telefonanrufs/-gesprächs beiden Kommunikationspartnern darüber HOCISs ermöglichen - insbesondere also dem in ein HO von A nur indirekt involvierten Kommunikationspartner B, der ja von der technischen HO-Gefahr/-Notwendigkeit des HOs von A andernfalls gar nichts weiß. Dabei kann ein in ein HO direkt involviertes IAD wesentlich früher mit dem HOCIS-Verfahren beginnen und/oder länger daran arbeiten, als dies für ein darin direkt involviertes terminales Endgerät möglich/sinnvoll ist.

### C.3. Beispielsanwendung des HOCIS-Verfahrens allein im Internet-Server

Die FMC-Telefone und deren IADs/APs können genau so angeordnet sein wie es die **Abbildung 1** veranschaulicht - letztere würde hier lediglich um einen Server am Internet erweitert - sodass keine weitere Abbildung nötig ist.

Die große Bedeutung der Nutzung dieser TK-Konfiguration für die Realisierung des HOCIS-Verfahrens ergibt sich daraus, dass die meisten der heutigen Millionen von bereits installierten IEEE802.xx-IADs/APs und deren IEEE802.xx-/GSM-/CDMA-/...-Telefone selbst - auf Grund ihrer technischen Unzulänglichkeiten - irgendwelche HOCIS-Funktionalitäten nicht leisten können, sehr wohl aber ein geeignet konzipierter "HOCIS-Internet-Server" (z.B. eine geeignete HOCIS-Erweiterung eines bereits im Regelbetrieb eingesetzten SIP- oder Announcement- oder ...-Servers) für sie tätig werden kann, indem er die Qualität ihrer jeweiligen Konnektivität hinsichtlich eines HOs beobachtet und mittels dieser HO-relevanten Informationen, die er anstelle der und über die Telefone bereitstellt, für deren Benutzer daraus ableitbare HOCIS-Dienste erbringt.

### C.4. Mischdesign-Beispielsanwendung des erfindungsgemäßen HOCIS-Verfahrens

Wie man leicht sieht, können die Qualitäten der HOCIS-Funktionalitäten des erfindungsgemäßen Verfahrens im Einzelnen in vielerlei Hinsicht verbessert werden, wenn es von allen 3 vorstehend skizzierten abstrakten "Design-Varianten eines HOCIS-Dienstes" Gebrauch machen kann. Der Verfahrens-1-Anspruchswortlaut trägt diesem "Mischdesign-Vorteils-Aspekt" Rechnung: Sein Wortlaut/Sinngehalt ist unabhängig von allen "Funktionsverteilungs-Aspekten" in allen drei Arten von Vorgängen (siehe Abschnitt **B**.) des HOCIS-Verfahrens.

Das HOCIS-Verfahren ist auch nicht beschränkt in seiner Zusammenarbeit mit irgendeinem anderweitigen Dienst - von wem dieser auch immer angeboten und/oder erbracht wird, etwa mit einem MIH-Dienst. Zur Erläuterung einer solchen Funktionsverteilungs- und Kooperationsmöglichkeit nun ein Beispiel:
Ein GSM-Netzbetreiber könnte für WLAN-Anrufe von FMC-Telefonen an seinem GSM-Netz aus eine Art von (attraktiv tarifierter) "stand-by"-Verbindungen im eigenen GSM-Netz vorhalten, auf die solch ein WLAN-Anruf jederzeit und verzögerungsfrei ein "lokales GSM-Fallback" (für die L3-Verbindung zwischen FMC-Telefon und seinem IAD) oder ein "globales GSM-Fallback" (für die L3-Verbindung zwischen FMC-Telefon und dem zweiten Telefonapparat) durchführen kann - vorausgesetzt der Mobilnetzbetreiber wäre imstande, die mit einem solchen "prä-HO-Service" einhergehenden Probleme kostengünstig zu lösen. Erst dessen Zusammenarbeit mit einem erfindungsgemäßen HOCIS-Verfahren würde ihn aber wirklich benutzerfreundlich und damit am Markt attraktiv machen. Ein solches GSM-Fallback (alias HO) eines Telefongesprächs gewährleistete nämlich ohne das Benutzerfreundlichkeit-steigernde HOCIS-Verfahren keineswegs die gewünschte Qualität der "Service-Kontinuität":
   ■ Vor allem dann nicht, wenn ein globales GSM-Fallback durchgeführt wird und der "nicht direkt" in dieses HO involvierte Teilnehmer davon nur implizit dadurch erführe, dass die aktuelle Telefonverbindung unerwartet zusammenbricht, anschließend sein Telefon erneut klingelt und er nach der Annahme des Anrufs unerwartet feststellt, dass er nun den eben unterbrochenen Kommunikationsvorgang weiterführen kann - falls er den Netzwechsel für den Kommunikationsvorgang überhaupt wahrnimmt und die Unterbrechung nicht einfach als Störung empfindet.
   ■ Auch der darin direkt involvierte Teilnehmer kann über den Fortgang des GSM-Fallbacks zumindest teilweise im Dunkeln gelassen werden: Er weiß nichts darüber, ob - nachdem es von seiner Seite aus irgendwie ausgelöst wurde - das GSM-Fallback des Kommunikationsvorgangs tatsächlich insofern erfolgreich erfolgte, als kein anderer GSM-Anruf beim Kommunikationspartner "dazwischengekommen" ist.
   ■ Und beide Teilnehmer können zusätzlich verwirrt werden, wenn sich das GSM-Fallback - trotz der prä-HO-Serviceleistung des Mobilnetzbetreibers - aus irgendeinem Grund doch verzögert, weil womöglich die Netztechnik zwischenzeitlich kurz "bockt".

Dieses Beispiel zeigt, dass - um hohe Qualität der Service-Kontinuität in einem HO zu erzielen - sogar ein "seamless MIH" in vielen Fällen die Unterstützung durch ein benutzerfreundliches HOCIS-Verfahren benötigen wird, wobei dessen konkrete Implementierung hinsichtlich Inhalt, Funktionsverteilung und Kooperation mit anderweitigen Diensten in keiner Weise beschränkt ist.

### C.5. Zur Benutzer-Steuerung des HOCIS-Verfahrens

Während in den vorigen Abschnitten an HOCISs der Aspekt ihrer inhaltlichen und zu einem HO zeitnahen Benutzer-Information im Vordergrund stand, soll nun kurz daran erinnert werden, dass das HOCIS-Verfahren auch die Gestaltung wichtiger anderer Aspekte ermöglicht: Es räumt mindestens einem Benutzer in einem HOCIS-Vorgang die Fähigkeit ein, mittels seiner HOCIS jederzeit unterschiedliche:
■ Aktuelle Status-Informationen zu mindestens einem HO und/oder dem mit ihm assoziierten HOCIS-Vorgang und deren Vergangenheit und ggf. Zukunft abzurufen (wie bei Benutzeroberflächen von Kraftfahrzeug- oder Flugzeug-Navigationssystemen).
■ Aktuelle Anweisungen zur Weiterführung mindestens eines HOs und/oder des mit ihm assoziierten HOCIS-Vorgangs einzugeben.
■ Aktuelle Anweisungen einzugeben zur Auswahl der ihm zur Verfügung stehenden Funktionalität und/oder zur lokalen Darstellung dieser HOCISs an seinem Endgerät.

Einige Beispiele für die hier angesprochenen und vom Benutzer bestimmbaren Funktionalitäten der HOCISs und deren lokale - auch zeitliche - Darstellung wurden/werden an mehreren Stellen dieser Schrift angesprochen. Demnach sind die inhaltlichen Einzelheiten dieser Funktionalitäten und ihrer lokalen Darstellungen nicht Gegenstand dieser Schrift. Ihre Ansprüche beschäftigen sich lediglich mit der grundsätzlichen Tatsache solcher erfindungsgemäßer Funktionalitäten des HOCIS-Verfahrens, d.h. der in der im Abschnitt **B.** ausführlich dargestellten "sozialen" funktionalen Reaktion eines in ein HO direkt involvierten Endsystems/-geräts (bei Vorliegen eines HOCIS-Signals in einem der Endgeräte eines Kommunikationsvorgangs), auferlegen deren inhaltlicher und darstellungsmäßiger Gestaltung jedoch keinerlei Beschränkung.

### C.6. Mehr zur Modellierung des/der erfindungsgemäßen HOCIS-Verfahrens/-Vorrichtung

Die Prinzipien der OSI-RM-basierten Modellierung des/der erfindungsgemäßen abstrakten HOCIS-Verfahrens/-Vorrichtung wurde im Abschnitt **B**. diskutiert. Die Anwendung dieser Prinzipien führt in dieser Patentanmeldung auf abstrakte HOCIS-Verfahrens-Systeme und abstrakte HOCIS-Vorrichtungs-Systeme, die im Abschnitt **B**. einheitlich als HOCIS-Systeme bezeichnet werden (alias STKV-Systeme). Gemäß OSI-RM beinhalten beide Arten von HOCIS-Systemen abstrakte funktionale Komponenten (= Funktionsgruppen), die es **"**Entitäten" nennt. Es betra htet diese Entitäten alias funktionale Komponenten nur, sofern sie zur abstrakten Realisierung von OSI-Verbindungen von Kommunikations-Anwendungen und deren Diensten relevant sind.

Die hier vorliegende Kommunikations-Anwendung ist erfindungsgemäß zweiteilig und besteht aus dem HOCIS-Verfahren und der HOCIS-Vorrichtung - daher die beiden o.g. Arten von HOCIS-Systemen. Deren o.g. Entitäten alias funktionale Komponenten finden sich in einer materiellen Implementierung (= Ausführungsform) des HOCIS-Verfahrens bzw. der HOCIS-Vorrichtung in den Software- und/oder Hardware-Komponenten dieser Ausführungsform unvermeidlicherweise wieder.

Dementsprechend betrachtet diese Schrift insbesondere ihre abstrakte HOCIS-Vorrichtung - sie nennt sie auch "STKV-Vorrichtung", siehe Anspruch 80 - aus abstrakten HW-/SW-Funktionskomponenten bestehend, wobei diese Zuordnung einer funktionalen HOCIS-Vorrichtungs-Komponente zur HW/SW völlig irrelevant ist. Wichtig ist lediglich, dass die abstrakte Realisierung der funktionalen Komponenten einer abstrakten HOCIS-Vorrichtung mittels
■ eigenständiger funktionaler HOCIS-Vorrichtungs-HW-/SW-Komponenten oder
■ funktionsgleicher und/oder funktional geeigneter PTKV-HW/-SW-Komponenten oder
■ funktionsgleicher und/oder funktional geeigneter HW-/SW-Komponenten ganz anderer TKVs und/oder Systeme (etwa von mindestens einem Betriebssystem und von diesem verwaltete funktionale HW-Komponenten)
erfolgen kann. Abgesehen vom ersten Fall erfolgt ein "abstraktes HW/SW resource sharing" zwischen der HOCIS-Vorrichtungs-Komponenten und funktionalen Komponenten der anderen genannten Systeme. Dieses abstrakte HW/SW resource sharing kann sich in einer materiellen Implementierung alias Ausführungsform dieser HOCIS-Vorrichtung wieder finden oder nicht und heißt im ersten Fall "materielles HW/SW resource sharing". D.h.: Eine abstrakte Realisierung einer solchen HOCIS-Vorrichtung in deren funktionalen HOCIS-Vorrichtungs-Endsystemen bei PTKV-TLNs, denen HOCIS gewährt werden soll, kann dort jeweils funktionsgleiche oder funktion-geeignete HW/SW-Komponenten eines PTKVs und/oder Betriebssystems (und von diesem verwaltete funktionale HW-Komponenten) des TLNs per abstraktem resource sharing mit-benutzen.

Im Umkehrschluss: Eine *abstrakte* Implementierung eines HOCIS-Vorrichtungs-Endsystems eines TLNs benötigt u.U. überhaupt keine eigenständige abstrakte HW-Erweiterung dessen mindestens einen PTKV-Endsystems, da die *abstrakten* HW-Komponenten des letzteren für diese abstrakte Realisierung mittels "abstraktem HW resource sharing" ausreichen. Dies kann dann auch für eine *materielle* Implementierung dieses HOCIS-Vorrichtungs-Endsystems mittels dieses *materiellen* PTKV-Endsystems gelten. Dies ist aber kein notwendiges Merkmal einer Ausführungsform alias materiellen Implementierung eines HOCIS-Vorrichtungs-Endsystems, damit sie Anspruch 80 verwirklichen könne.

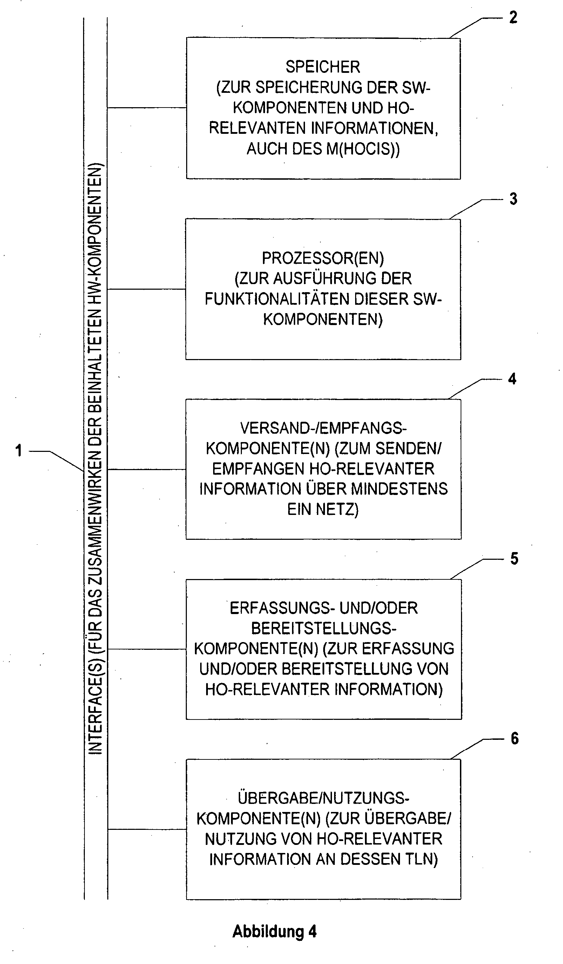

Ein abstraktes HOCIS-Vorrichtungs-Endsystem - der HOCIS-Verfahrens-Hauptanspruch ist nur mit gewissen funktionalen HOCIS-SW-Komponenten befasst, die er als ausführbar ansieht und insgesamt M(HOCIS) nennt - beinhaltet die folgenden abstrakten HW-/SW-Komponenten (siehe **Abbildung 4**), die zur Verwirklichung der Mittel in den Ansprüchen 80-91 dienen:
■ mindestens einen Speicher (2) zur Speicherung seiner SW-Komponenten und HO-relevanten Informationen, auch des M(HOCIS),
■ mindestens einen Prozessor (3) zur Ausführung der Funktionalitäten dieser SW-Komponenten,
■ mindestens eine Versand-/Empfangs-Komponente (4) von HO-relevanter Information über mindestens ein Netz,
■ mindestens eine Erfassungs- und/oder Bereitstellungs-Komponente (5) von HO-relevanter Information,
■ mindestens eine Übergabe-/Nutzungs-Komponente (6) von HO-relevanter Information an dessen TLN,
■ mindestens ein Interface (1) für das Zusammenwirken dieser HW-Komponenten, sofern beinhaltet.

Diese Schrift zielt derzeit primär ab auf Ausführungsformen des/der HOCIS-Verfahrens/- Vorrichtung, die vollständig mittels der bei einem PTKV-TLN ohnehin vorhandenen materiellen PTKV-Endsysteme und/oder materiellen PTKV-Server/-IADs verwirklicht sind, indem darauf zusätzlich je mindestens ein HOCIS-Modul angesiedelt wurde (was aus ihnen spezielle materielle PTKV-&STKV-Systeme macht). Ihr Schutzbereich ist aber nicht auf solche Ausführungsformen beschränkt, sondern er umfasst - gemäß den Anspruchs-Wortlauten/-Sinngehalten 1-91 - auch eine Vielzahl von Ausführungsformen des/der HOCIS-Verfahrens/-Vorrichtung, die diese o.g. materiellen PTKV-Systeme eines TLNs z.B. um je mindestens ein zusätzliches materielles HW-Gerät ergänzen.

Die obige Diskussion um eine Modellierung der abstrakten HW-/SW-Komponenten von HOCIS-Systemen - im Abschnitt D. wird sie wesentlich sublimiert - dient lediglich zur elementaren Verdeutlichung der rein funktionalen Art der (Anspruch-Wortlaut/-Sinngehalt-gemäßen) HOCIS-Merkmale, anhand deren Verwirklichung durch eine konkrete HOCIS-Ausführungsform zu entscheiden ist, ob letztere in den Schutzbereich dieser Schrift eingreift oder nicht.

### C.7. Ein M(HOCIS)-Design als HOCIS-ISR-Server (ISR = Interactive Signal Response)

Eine für den Massenmarkt interessante abstrakte/konkrete Realisierungs-Implementierungs-Konzeption des erfindungsgemäßen HOCIS-Verfahrens, genauer: eines M(HOCIS)s dafür, ist ein HOCIS-ISR-Server (siehe Abschnitt **D**. und dessen **Abbildungen 5j-I**). Ein solcher HOCIS-ISR-Server kann das Auftreten irgendeines Signals in irgendeinem Datenstrom entdecken und darauf reagieren, indem er die davon betroffenen Teilnehmer darüber mit geeigneten HOCISs versorgt.

Die Anmeldung und/oder Anfrage eines Primär-Kommunikationsvorgangs-Teilnehmers bei einem HOCIS-ISR-Server z.B. kann vokal erfolgen und/oder durch Eingabe einer Tastenkombination oder einer SMS oder ohne jede Eingabe von dessen Seite, sondern etwa seitens seines ISPs oder MSPs oder eines Dritten. Die "HOCIS-Signal-Response" vom Server - falls er das von ihm gesuchte Signal im von ihm zu beobachtenden Datenstrom entdeckt - zum darüber zu informierenden Teilnehmer kann ebenfalls über jedes beliebige Netz erfolgen, von dem das Telefon dieses Teilnehmers eine Nachricht empfangen kann.

### D. Zur Verständnis-Präzisierung des Anspruch-1-Wortlauts/Sinngehalts

Die Ausführungen in Abschnitt D. zum Anspruch 1, zum Anspruch-1-Wortlaut, zu Unteransprüchen 2-79, zu Unteranspruchsgruppen sowie Pseudoansprüchen 1' und 1" betreffen nicht die Ansprüche des vorliegenden Patents, sondern diejenigen der ursprünglichen Anmeldung, wie sie als WO 2008/064918 A2 veröffentlicht wurde, und stellen insofern nicht Ausführungsformen der Erfindung dar. Sie stellen jedoch Erläuterungen bereit, die das Verständnis der Erfindung erleichtern. Das eben Gesagte gilt nicht für die in den Abschnitten D.3 und D.4 erläuterten Ausführungsbeispiele der Abbildungen 5c bis 5r, die Ausführungsbeispiele der Erfindung darstellen.

Dieser Abschnitt D. soll vermeiden helfen, dass der Sinngehalt und/oder Schutzbereich der vorliegenden Patentanmeldung aus ihren sehr limitierten konkreten Beispiels-Beschreibungen ermittelt und darauf beschränkt wird - was zwar "patentlogisch" abwegig und vor allem patentrechtlich strikt unzulässig ist, aber trotzdem den Verfassern dieser Schrift bei anderen ihrer Patente in Rechtsstreitigkeiten widerfuhr und deshalb die Abfassung dieser Patentanmeldung sehr stark prägt - und nicht aus ihrem absichtlich abstrakter angelegten und daher deutlich weiterreichenden Anspruchswortlaut. Der Primat der Interpretationsweise, d.h. des Sinngehalt-Bestimmungsverfahrens, eines Patents aus dessen Anspruchswortlauten (gegenüber allen anderweitigen Möglichkeiten einer/s Interpretationsweise/ Sinngehalt-Bestimmungsverfahrens eines Patents) ist nämlich in allen Patentrechtsnormen unmissverständlich festgelegt.

Aus diesen beiden Gründen erläutert/verdeutlicht Abschnitt D. nachfolgend das Wesen der Erfindung der vorliegenden Patentanmeldung vor allem anhand ihres Verfahrens-Hauptanspruchs 1 sowie insbesondere mittels einer Vielzahl ihm nachgeordneter Ansprüche - und zwar durch gezieltes Exponieren der einzelnen Wesensmerkmale des erfindungsgemäßen (generischen) HOCIS-Verfahrens in Unteranspruchs-Gruppen. Das präzise Wesen eines technologisch derartig komplexen Verfahrens (wie des erfindungsgemäßen HOCIS-Verfahrens) kann sich nämlich - wie der maßgebliche Fachmann weiß - nicht allein aus den klassischen Patentschrift-Bestandteilen
**(a)** allgemein angelegtem Anspruch-1-Wortlaut/-Sinngehalt und
**(b)** speziellen Beschreibungen konkreter Ausführungsformen (ggf. mit Abbildungen)
einfach erschließen. Eine solche Vereinfachung der Gewinnung dieses präzisen Verständnisses des Wesens des Anspruch-1-Wortlauts/Sinngehalts leistet aber eine Darstellungs-Auffächerung dieses Sinngehalts mittels einer Vielzahl von Unteransprüchen, und zwar gegliedert in Verfahrensmerkmale exponierende Unteranspruchs-Gruppen (wie **D.1**. erläutert). Dabei kann dahingestellt bleiben, ob dieses Vorgehen auch eine Präzisierung des einzigen Verfahrens-Hauptanspruchs-Sinngehalts (der festgelegt ist durch die o.g. EPÜ-gemäße Interpretation von **(a)** unter Berücksichtigung von (**b**)) beinhaltet.

Eine gesonderte Erläuterung der Darstellungs-Auffächerung des Vorrichtungs-Hauptanspruchs-Sinngehalts von Anspruch 80 und 82 zum Zweck ihrer Verständnis-Präzisierung mittels vergleichbarer Unteransprüche und Unteranspruchsgruppen erscheint danach nicht erforderlich.

Vorab sei jedoch an zwei - teilweise in dieser Schrift bereits angesprochene - Aspekte erinnert:
■ Die einzelnen Wesensmerkmale des/der erfindungsgemäßen Verfahrens/Vorrichtung unterliegen keiner in dieser Schrift nicht genannten Beschränkung - insbesondere keiner Beschränkung durch einen "Gesamtzusammenhang" der einzelnen Merkmale des/der erfindungsgemäßen Verfahrens/Vorrichtung, von wem ein solcher "Gesamtzusammenhang" auch immer gemutmaßt und wie auch immer er konstruiert sei, da er mit keinem Wort dieser Schrift zu rechtfertigen wäre.
■ Da alle ihre Anspruchswortlaute/-sinngehalte diese Merkmale des/der erfindungsgemäßen Verfahrens/Vorrichtung einzig und allein in ihrem Wesen definieren, besagt diese Schrift absolut nichts zu den konkreten Implementierungs-Varianten dieser Merkmale - die für den maßgeblichen Fachmann offensichtlich sind - in irgend einer Ausführungsform der Erfindung, vielmehr sind diese Merkmale "funktional" alias "abstrakt", also "rein begrifflich".

### D.1. Anspruchsgruppen und Verständnis-Präzisierungs-Vereinfachung des Anspruchs 1

Dem eben Gesagten Rechnung tragend, erleichtert diese Schrift die Verständnispräzisierung des Anspruch-1-Wortlauts/-Sinngehalts, indem sie ihn in die Unteransprüche **2**-**79** aufgefächert darstellt und diesen gesamten Fächer in 11 "Unteranspruchs-Gruppen" untergliedert: In jeder solchen Unteranspruchs-Gruppe stellen sich die in ihr erläuterten Merkmale und/oder deren Varianten in ihrer unmittelbaren Gegenüberstellung (mittels der einzelnen Unteransprüche dieser Gruppe) nämlich sehr viel deutlicher dar als ohne deren Exponieren in einer solchen Unteranspruchsgruppe - sodass nachfolgend schon eine schlagwortartige Beschreibung des "Sinngehalts-Fokus" jeder Unteranspruchsgruppe das präzise Verständnis deren Merkmale/Merkmals-Varianten/MerkmalsKombinationen (des EPÜ-gemäß feststehenden Anspruch-1-Wortlauts/Sinngehalts) klärt. Diese Unteranspruchsgruppen-Technik erleichtert also die Gewinnung dieses präzisen Verständnisses ganz erheblich.

Genauer und in anderen Worten nochmals: Das Verständnis der einzelnen Merkmale bzw. deren Varianten von Anspruch-1-gemäßen Ausführungsformen wird durch diese Unteranspruchs-Gruppen und deren jeweilige Kurz-Beschreibung unvermeidlich gemacht und geschärft. Diese Unteranspruchs-Gruppen (und deren Kurzbeschreibungen in diesem Abschnitt **D.**) erzielen also eine Vereinfachung des Gewinnens des präzisen Verständnisses des Anspruch-1-Wortlauts-/Sinngehalts durch die Auffächerung deren beider Darstellung - gegenüber dessen Gewinnung allein aus dem gedanklich zwar absolut klaren aber mental doch komplexen Anspruch-1-Wortlaut/-Sinngehalt. Dabei ist trivial, dass diese Erleichterung der Erzielung des gebotenen präzisen Verständnisses des Anspruch-1-Wortlauts/Sinngehalts - nämlich durch seine Auffächerung mittels Unteransprüchen - diesen in keiner Weise verändert. Es ist deshalb irrelevant, dass eine solche Auffächerung i.d.R. weder systematisch noch vollständig vorgenommen werden kann (schon allein, weil die Begriffe "Systematik" und "Vollständigkeit" für diesen Bereich i.d.R. gar nicht definierbar sind), sondern dass sie nur einige beispielsweise der zu bedenkenden möglichen Interdependenzen zwischen den jeweiligen Merkmalen/Merkmals-Varianten aufzeigen kann.

Diese Vorteilhaftigkeit der nachfolgend praktizierten Unteranspruchsgruppen-Bildung wird anhand des Beispiels der **Unteranspruchsgruppe 10-19** nachgewiesen (siehe auch Unterabschnitt **D.5**.): Diese Unteransprüche exponieren das Merkmal der "Zeitlichkeit eines Vorgangs" in einem HOCIS-Verfahren und machen insbesondere bewusst, in welchen Kombinationen es diese Merkmals-Varianten verwirklichen kann - sodass sich daraus ganz unmittelbar eine Vereinfachung der Gewinnung des präzisen Verständnisses dieser Merkmals-Varianten und ihrer Bedeutung im Anspruch-1-Wortlaut/-Sinngehalt ergibt.

Wie man sieht, besteht diese Gruppe hinsichtlich der Varianten des Merkmals "Zeitlichkeit eines Vorgangs" aus mindestens 10 Kombinationsmöglichkeiten, die hier als 10 "Überlappungs"-Unteran-sprüche aufgefächert dargestellt sind. Diese Unteranspruchsgruppe des HOCIS-Verfahrens-Hauptanspruchs offenbart zwar nicht alle zeitlichen Überlappungsmöglichkeiten der drei Anspruch-1-gemäßen Vorgänge (PTKV, STKV und HO) explizit, also nicht die gesamte Menge aller "Spezialfälle" des HOCIS-Verfahrens hinsichtlich dieser Merkmals-Varianten, d.h. derartiger Überlappungen. Die gesamte zu diesem Merkmal gehörige "Spezialfälle-Gruppe" des HOCIS-Verfahrens ist jedoch mittels dieser 10 Unteransprüche inhaltlich derartig engmaschig beschrieben, dass auf der Grundlage des so hervorgerufenen präzisierten/geschärften Überlappungsmöglichkeiten-Verständnisses jede weitere derartige Überlappungs-Möglichkeit (alias Merkmals-Varianten-Kombination) für den maßgeblichen Fachmann lediglich eine offensichtliche Variation der in dieser Unteranspruchsgruppe explizit ausgewiesenen derartigen Überlappungen/Kombinationen ist.

Auf der Grundlage dieses präzisierten/geschärften Überlappungsmöglichkeiten-Verständnisses kann also ein HOCIS-Vorgang mit einer derartigen Überlappung - nur weil sie in dieser speziellen Unteranspruchsgruppe nicht explizit ausgewiesen ist - nicht als nicht zum Schutzbereich des vorliegenden erfindungsgemäßen HOCIS-Verfahrens gehörig angesehen werden.

Nun wieder unabhängig von der speziellen Anspruchs-Gruppe 10-19: Nachfolgend wird durchgängig Gebrauch gemacht von dieser Unteranspruchsgruppierungs-Technik zur Präzisierung des Verständnisses des Anspruch-1-Wortlauts/-Sinngehalts. Dem maßgeblichen Fachmann offenbart nämlich das Raster einer solchen Unteranspruchsgruppe bereits alle Elemente gemäß Anspruch-1-Wortlaut/-Sinngehalt der zu ihr zugehörigen "Spezialfälle-Gruppe": Jedes solche Anspruchsgruppen-Raster identifiziert
■ zum einen die Gruppe von mindestens einem Merkmal un d dessen/deren Varianten (des HOCIS-Verfahrens gemäß Anspruch-1-Wortlaut/-Sinngehalt) und
■ zum anderen die Kombinationsmöglichkeiten dieses/r Merkmals/e und dessen/deren Varianten.

Logischerweise besteht demnach die zu einer betrachteten Unteranspruchsgruppe gehörige - genauer: die zu dem Verständnis des mittels dieser Anspruchsgruppe aufgefächert dargestellten Anspruch-1-Wortlauts/-Sinngehalts gehörige - gesamte "Spezialfälle-Gruppe" des HOCIS-Verfahrens aus allen denjenigen seiner Spezialfälle, die allen kombinatorischen Möglichkeiten dieser Merkmals/e- und Merkmalvarianten-Menge entsprechen. Dabei ist die Bestimmung aller dieser Kombinationsmöglichkeiten eine zwar gelegentlich äußerst umfängliche aber trotzdem i.d.R. triviale "mechanistische" Aktivität, nachdem die betrachtete Unteranspruchsgruppe die Kombinationsmöglichkeiten dieses/r Merkmale und seiner/ihrer Varianten im Grundsätzlichen aufgezeigt hat. Aber siehe den untenstehenden Disclaimer zu solchen Unteranspruchsgruppen.

Damit kann also ein Spezialfall des erfindungsgemäßen HOCIS-Verfahrens mit einer Merkmal-/Merkmalvarianten-Kombination, der nicht explizit ausgewiesen ist in mindestens einem Unteranspruch der diese Merkmale-/Merkmalsvarianten-Menge exponierenden Unteranspruchs-gruppen, nicht als nicht offenbart vom Anspruch-1-Wortlaut/-Sinngehalt angesehen werden - nur weil eine dieser Unteranspruchsgruppen nicht alle Kombinationsmöglichkeiten der von ihr identifizierten Merkmal-/Merkmalvarianten-Menge ausschöpft (indem sie alle zugehörigen Spezialfälle explizit aufführt). Vielmehr muss ein solcher Spezialfall des erfindungsgemäßen HOCIS-Verfahrens i.d.R. als von dieser Unteranspruchsgruppe offenbart angesehen werden, da aus ihr - für das von ihr geschärfte/präzisierte Anspruch-1-Wortlaut-/-Sinngehalt-Verständnis - sowohl ihre speziellen Merkmale/Merkmalsvarianten als auch deren Kombinationen (wie sie diese Unteranspruchsgruppe beispielsweise anzeigt) elementar ableitbar sind.

Wollte man auf diese Unteranspruchsgruppen-Technik verzichten und nur diejenigen Spezialfälle des HOCIS-Verfahrens, die in mindestens einem seiner nachgeordneten Ansprüche explizit offenbart sind, als zum Anspruch-1-Wortlaut/-Sinngehalt und/oder -Schutzbereich gehörig ansehen, so erforderte eine derartige Definition des gleichen Schutzbereichs eine ins Unendliche gehende Anzahl von nachgeordneten Ansprüchen. Ein solcher Verzicht wäre aber nicht nur unpraktikabel, sondern er widerspräche auch der Rechtsfigur des "maßgeblichen Fachmanns", dessen Erkenntnisvermögen der für eine Unteranspruchsgruppe relevanten Merkmale-/Merkmalsvarianten-Menge und deren Kombinationen er in Abrede stellte.

Im Übrigen gibt es für die Identifikation weder von Unteranspruchsgruppen, noch von allen deren Merkmalen und/oder Merkmalsvarianten noch von allen deren sinnvollen Kombinationsmöglichkeiten eine einheitliche Systematik, wie oben bereits gesagt. Diese Verständnisbildungs/-schärfungs-/-präzisierungs-Schritte hinsichtlich des Anspruch-1-Wortlauts/-Sinngehalts müssen vielmehr jeweils eigenständig durchgeführt werden, sind aber i.d.R. recht einfach, und erfolgen
■ meistens redundant - um nicht zu sagen "hoch-redundant" - d.h. ein Merkmal und/oder eine Merkmalsvariante bzw. deren Kombinationsmöglichkeiten werden durch mehr als eine Unteranspruchsgrüppe und/oder in einer von ihnen in mehr als einem deren (Teil-) Unteransprüche erläutert,
■ manchmal jedoch nicht-redundant, d.h. es/sie wird durch genau einen (Teil-) Unteranspruch in der Menge aller Unteransprüche erläutert - was dieses/diese Merkmal/-Variantel-Kombination als "konstruiert" erscheinen lassen mag, was aber nichts daran ändert, dass es/sie dadurch spätestens an dieser Stelle dem präzisen Verständnis explizit zugeführt ist (selbst wenn sie an anderer Stelle der Beschreibung explizit ausgeschlossen wird),
und gründen keineswegs nur auf der Menge der Unteransprüche, weil die Erläuterung eines Merkmals bzw. einer Merkmalsvariante bzw. einer deren Kombinationsmöglichkeiten geleistet sein kann
■ in einer anderweitigen Beschreibung des erfindungsgemäßen Verfahrens in dieser Schrift - falls der Anspruch-1-Wortlaut/-Sinngehalt dieses Merkmal und/oder diese Merkmalsvariante und/oder diese Kombination nur nicht ausschließt,
und/oder
■ aus dem Anspruch-1-Wortlaut/Sinngehalt unmittelbar hervorgeht - falls dieses Merkmal bzw. diese Merkmalsvariante bzw. diese Kombinationsmöglichkeit in den anderweitigen Beschreibungen des erfindungsgemäßen Verfahrens nur nicht ausgeschlossen ist/sind.

Die beiden letzten Aufzählungspunkte enthalten einen klaren Disclaimer zu der eben beschriebenen "Viele-Unteransprüche-Technik"/"Unteranspruchsgruppen-Technik": Sie implizieren, dass selbst mittels dieser Technik der Anspruch-1-Wortlaut/Sinngehalt nicht in allen seinen Verästelungen und nicht in seiner gesamten Reichweite mit dem Prädikat "per Unteranspruch explizit ausgewiesen" versehen werden kann. Vielmehr dient diese Technik lediglich dazu, eine Art "harten Kerns" aller dieser Verästelungen und dieser gesamten Reichweite mit dem Prädikat "per Anspruch explizit ausgewiesen" zu versehen. Soweit der Anspruch-1-Wortlaut/-Sinngehalt über diesen harten Kern hinausgeht - entweder hinsichtlich seiner Verästelungs-Feinheit oder hinsichtlich seiner Gesamt-Reichweite - bleibt es letztendlich dem maßgeblichen Fachmann überlassen, dies festzustellen.

Trotzdem bringt die Durchführung dieser Erkenntnis-/Analyse-Schritte, die zur Unteranspruchsgruppen-Bildung unerlässlich sind, einen großen Vorteil mit sich: Diese Unteranspruchsgruppen schaffen Übersichtlichkeit in der großen Anzahl von Merkmalen und Merkmalsvarianten und deren Kombinationen des Anspruch-1-Wortlauts/-Sinngehalts, die die unvermeidlicherweise vielen Unteransprüche bzw. Teil-Unteransprüche explizit adressieren/exponieren müssen, um die angestrebte Vereinfachung der Gewinnung des präzisen/geschärften Anspruch-1-Wortlaut/-Sinngehalt-Verständnisses zu erzielen.

Soweit also die allgemeine Rechtfertigung - falls nicht sogar der Notwendigkeits-Nachweis - des Einsatzes dieser Unteranspruchsgruppen-Technik, sobald das zugrunde liegende technische Verfahren sich in den Bereich des Software-Engineerings erstreckt, was in dieser Schrift der Fall ist. Die nachfolgende nochmalige Zusammenfassung ihrer Vorteile erscheint daher angemessen.

Im vorliegenden konkreten Fall des HOCIS-Verfahrens ist der Ausweis dessen Anspruch-1-Wortlaut/-Sinngehalt-"harten Kerns" mittels dieser Technik zwar bereits recht voluminös. Der maßgebliche Fachmann erkennt aber sofort, dass er trotzdem nicht erschöpfend ist - d.h. der über diesen harten Kern hinausgehende Anspruch-1-Wortlaut/-Sinngehalt ist sowohl differenzierter als auch weiterreichend. Dieser - per vielen Unteransprüchen und deren Unteranspruchs-Gruppen - explizit ausgewiesene "harte Kern" des Anspruch-1-Wortlauts/-Sinngehalts stellt lediglich ein "Wegweiser-System" in letzterem dar, kennzeichnet ihn aber keineswegs erschöpfend. Dies leistet erst dessen präzises/geschärftes Verständnis, das mittels dieses harten Kerns induziert/gewonnen wurde.

Bevor die einzelnen Ansprüche bzw. Unteranspruchsgruppen im Unterabschnitt **D.5.** erläutert werden, wird in den Unterabschnitten **D.2.-D.4.** das begriffliche Instrumentarium bereitgestellt für ein ins Einzelne gehendes Verständnis des Anspruch-1-Wortlauts/-Sinngehalts:
■ Der Unterabschnitt **D.2.** stellt zunächst die Strategie dieser Schrift zur "Vereinfachung der Präzisierung des Verständnisses" des Anspruch-1-Wortlauts/-Sinngehalts dar und erläutert zu diesem Zweck die Bedeutungen der wesentlichen einzelnen Anspruch-1-Wortlaut-Bestandteile.
■ Der Unterabschnitt **D.3.** unterstützt diese Anspruch-1-Verständnis-"Präzisierungs-Vereinfachungs-Strategie", indem er ihr ein graphisch einfach darstellbares HOCIS-Referenzmodell (HOCIS-RM) zugrunde legt - das also das Schärfen/Präzisieren des Verständnisses der in **D.2.** bereits erläuterten Anspruch-1-Wortlaut-/Sinngehalt-Bestandteile vereinfacht.
■ Der Unterabschnitt **D.4.** unterstützt diese Anspruch-1-Verständnis-"Präzisierungs-Vereinfachungs-Strategie" über **D.3.** hinausgehend, indem er mit seinen 18 **Abbildungen 5** exemplarisch illustriert, wie die graphische Nutzung des HOCIS-RMs das präzise Verständnis des Anspruch-1-Wortlauts/Sinngehalts massiv vereinfacht.

Der maßgebliche Fachmann kennt alle in **D.2.-D.4.** dargestellten Betrachtungs- und Vorgehensweisen zur Erzielung eines präzisen Verständnisses des Anspruch-1-Wortlauts/Sinngehalts, die die Interpretation dieser Patentanmeldung unterstützen - das explizite Erläutern ersterer in dieser Schrift dient ihm also lediglich zur Vereinfachung ihrer Anwendung.

Nach diesen Erläuterungen in den Unterabschnitten **D.2.-D.4.** - hinsichtlich des präzisen Verständnisses der Merkmale des erfindungsgemäßen HOCIS-Verfahrens, auf denen der Anspruch 1 beruht - kann das präzise Verständnis der Verfahrens-Unteranspruchs-Gruppen im Unterabschnitt **D.5.** schon durch jeweils wenige Worte herbeigeführt werden.

### D.2. OSI-RM-Verständnis-Präzisierung/Vereinfachung des Anspruch-1-Wortlauts/Sinngehalts

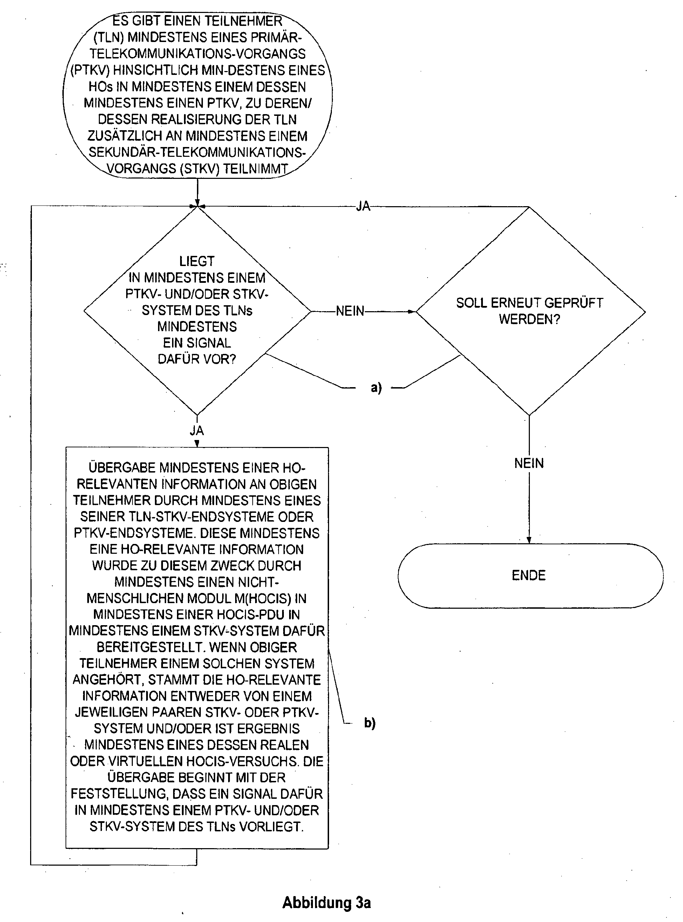

Der **Anspruch**-**1**-Wortlaut ist natürlich-sprachlicher Art, sein Sinngehalt unmittelbar klar verständlich und eindeutig. Das Ablaufdiagramm der **Abbildung 3a** zeigt seine funktionalen Verfahrensschritte. Ihr Kasten weist auf, die Verwirklichung welcher Verfahrensschritte einer Ausführungsform eines HOCIS-Verfahrens genügt, um es als Anspruch-1-gemäß zu qualifizieren. In diesem Zusammenhang wird daran erinnert, dass in dieser Patentanmeldung keine spezifischen Inhalte oder Merkmale der einzelnen oder gesamtheitlichen HO-relevanten Information betrachtet werden - sondern nur, von wem an wen sie übergeben wird und dass es sie gibt. Insbesondere wird hier also nicht betrachtet, welchen spezifischen Sinngehalt die HO-relevante Information überhaupt und wann einem Kommunikationsvorgangs-Teilnehmer gegenüber repräsentiert, außer nur der Tatsache, dass sie "irgend etwas mit einem HO zu tun hat" (was für jede HO-relevante Information in einer konkreten Ausführungsform des erfindungsgemäßen Verfahrens zweifelsfrei feststellbar ist).

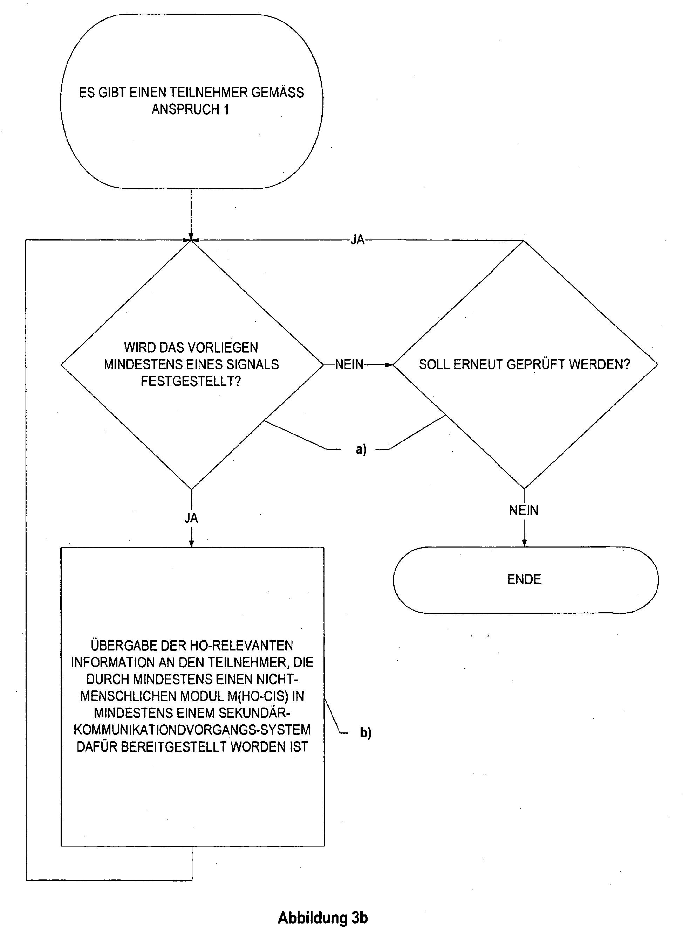

**D.2.1.** Da der maßgebliche Fachmann mit der für ihn "griffigeren" - als der natürlich-sprachlichen - OSI-RM-Terminologie/Begrifflichkeit vertraut ist, soll für ihn der nachfolgende **Pseudoanspruch 1'** das Verständnis des Sinngehalts des **Anspruch-1**-Wortlauts präzisieren. Dabei ist **Pseudoanspruch 1'** nur ein anderer Wortlaut als der Wortlaut des **Anspruchs 1**, bei identischem Sinngehalt beider Wortlaute. Das Ablaufdiagramm der **Abbildung 3b** zeigt die funktionalen Verfahrensschritte des Pseudoanspruchs 1'.

**1**': Ein **Verfahren** nach **Anspruch 1**, betrachtet als HOCIS-Dienst (gemäß OSI-Referenzmodell, d.h.
erbracht mittels einer HOCIS-OSI-Verbindung) für diesen TLN in dessen HOCIS-Endsystem (das also ein Endsystem.dieser HOCIS-OSI-Verbindung ist),
das folgende Merkmale dieses HOCIS-Dienstes aufweist: Er
I. übergibt dem TLN die HO-relevante Information, die dafür bereitgestellt wurde durch mindestens einen nicht-menschlichen Modul M(HOCIS) in der HOCIS-OSI-Verbindung,
II. beginnt mit dem Festellen des Vorliegens mindestens eines Signals dafür in mindestens einem Endsystem oder Server des Primär- und/oder eines Sekundär-TK-Vorgangs,
besteht aus mindestens den Schritten:
a) Mindestens einmaliges Prüfen des Vorliegens mindestens eines Signals gemäß II. und
b) Erbringen eines Dienstes gemäß I..

Dass der Sinngehalt von **Pseudoanspruch 1'** nicht größer ist als der von **Anspruch 1,** ist für den maßgeblichen Fachmann klar, da der Wortlaut des ersteren keinen Raum für irgendeine dies bewirkende Verallgemeinerung eröffnet.

Umgekehrt ist aber auszuschließen, dass mit der Präzisierung des Sinngehalts des **Anspruchs 1** im **Pseudoanspruch 1**' - durch dessen weitergehende Nutzung der Terminologie/Begrifflichkeit des OSI-RMs zur Sinngehaltsbeschreibung des HOCIS-Verfahrens - keine Beschränkung des **Anspruch-1**-Sinngehalts vorgenommen wird. In diesem Fall wäre der **Pseudoanspruch-1'-**Sinngehalt/Schutzbereich kleiner als der des **Anspruchs 1**. **Pseudoanspruch 1**' wäre dann ein echter Unteranspruch von **Anspruch 1**.

Der nachfolgende **Pseudoanspruch 1**" zeigt die hypothetischen Beschränkungen des **Pseudoanspruchs 1**' gegenüber dem **Anspruch 1** explizit auf: Ein **Pseudoanspruch-1**"-**gemäßes** HOCIS-Verfahren wäre logischerweise zwar Anspruch-1-gemäß aber nicht Pseudoanspruch-1'-gemäß (weil es dessen Beschränkungen nicht genügt).

### 1": Ein HOCIS-Verfahren nach Anspruch 1, für das gilt:

a) Keine Übergabe HO-relevanter Information darin ist ein HOCIS-Dienst gemäß **Pseudoanspruch 1**' und/oder
b) kein Übergabe-Beginn darin ist ein HOCIS-Dienst-Beginn gemäß **Pseudoanspruch 1**'. Der Nachweis dafür, dass es keine **Pseudoanspruch-1**"-gemäßen HOCIS-Verfahren gibt - dass also **Pseudoanspruch-1**' gegenüber dem **Anspruch 1** keinerlei Beschränkung enthält - ist trivial: Die Annahme der Existenz eines **Pseudoanspruch-1**"-gemäßen HOCIS-Verfahrens führt sofort ad absurdum, weil es sich für den maßgeblichen Fachmann als **Pseudoanspruch-1**'-gemäß erweist und damit als nicht **Pseudoanspruch-1**"-gemäß, was dieser Annahme widerspricht.

Ein erstes solches Verständnis des **Anspruch-1**-Wortlauts/-Sinngehalts wird in diesem Abschnitt **D.** durch eine Vielzahl weiterer Erläuterungen präzisiert. Dabei gilt, dass alle diese Erläuterungen zu **Anspruch 1** sinngemäß auch für **Pseudoanspruch 1**' gelten.

Diese nachfolgenden Verständnis-Präzisierungen des Wesens des HOCIS-Verfahrens bedienen sich gelegentlich seiner Beschreibung durch den **Pseudoanspruch**-**1**'-Wortlaut, d.h. des dem maßgeblichen Fachmann vertrauten "OSI-RM-Kunstworte/-begriffe"-basierten Wortlauts. Jedoch ist jeder explizite Gebrauch von "OSI-RM-Kunstworten/-begriffen" redundant insofern, als schon allein die natürlich-sprachlichen Beschreibungen des/der erfindungsgemäßen HOCIS-Verfahrens/-Vorrichtung und der zugehörigen Anspruchs-Wortlaute dessen/deren Sinngehalt klar und unmissverständlich definieren, d.h. deren zweideutige Interpretation ausschließen, d.h. dem Anliegen des OSI-RMs entsprechen. Solche expliziten Bezugnahmen auf OSI-RM-Kunstworte/-begriffe - z.B. in der Erläuterung der Anspruch-1-gemäßen Beteiligungs-Struktur eines STKVs, d.h. genauer: der STKV-OSI-Verbindung - sind nur für den maßgeblichen Fachmann vorgesehen, für seine Selbstvergewisserung der Korrektheit seines Verständnisses der nachfolgenden Verständnis-Präzisierungen des natürlich-sprachlichen Anspruchs 1.

### D.2.2. Zunächst einige einfache Klarstellungen dessen, was der Anspruch 1 nicht ausschließt.

■ Der Anspruch-1-Wortlaut/-Sinngehalt enthält für das erfindungsgemäße HOCIS-Verfahren (das einem HO eines PTKVs zugeordnet ist) **"keine Beschränkung auf Mensch/Automat-Kommunikationsvorgänge zwischen TLNs**", nämlich auf Kommunikationsvorgänge zwischen einem in das HO indirekt involvierten menschlichen Teilnehmer (auf der L7) und mindestens einem darin direkt involvierten nicht-menschlichen M(HOCIS), also einem Automaten (der darin auf irgendwelchen Li's, 1 <= i <= 7, angesiedelt ist). Vielmehr gestattet er auch Mensch/Mensch- und Automat/Automat-Kommunikationsvorgänge (siehe die Definition von TLN im Abschnitt B.).
■ Der Anspruch 1 kennt "**keinerlei technische Einzelheit hinsichtlich der internen Kommunikation in einem HOCIS-Endsystem**" **-** er benutzt den Ausdruck "Übergabe HO-relevanter Information" im generischen Sinne und dieser enthält deshalb keinerlei Beschränkung. Der Begriff "Übergabe HO-relevanter Information" ermöglicht insbesondere, dass dem TLN diese Information irgendwann und irgendwie zur Kenntnisnahme zur Verfügung gestellt wird - dass er sie dann auch tatsächlich zur Kenntnis nehmen muss impliziert dieser Begriff nicht.
■ Der Begriff der "**Übergabe**" HO-relevanter Information an den TLN in Anspruch 1 abstrahiert außerdem völlig hinsichtlich der kommunikationstechnischen oder lokalen Realisierung dieser Übergabe. Genauer: Diese Übergabe an den TLN kann über ein Netz zwischen den beiden involvierten HOCIS-Systemen unter Einbeziehung irgendwelcher Funktionalität im TLN-Endsystem erfolgen oder lokal allein in letzterem.
■ Der Begriff des "**Bereitstellens**" HO-relevanter Information zur Übergabe an den TLN im Anspruch 1 beinhaltet, dass sie von einem nicht-menschlichen Modul M(HOCIS) - im TLN- oder einem anderen HOCIS-Endsystem - erfasst und von dort aus zur Übergabe an den TLN weitergeleitet wird. Es gibt daher nur zwei Varianten, woher HO-relevante Information zu einem TLN gelangen kann: Bereitgestellt wird diese nur entweder vom M(HOCIS) eines anderen HOCIS-Endsystems und/oder vom M(HOCIS) des TLN-HOCIS-Endsystems. Heutige Telefone sind nicht imstande, einen erfindungsgemäßen HOCIS auf letztere Weise zu erbringen aber sehr wohl auf erstere (siehe die Erläuterungen zu den **Abbildungen 5**).
■ Der Begriff des Anspruch-1-gemäßen "**Prüfens des Vorliegens eines HOCIS-Signals**" ist ebenfalls in keiner Weise beschränkt: Er besagt absolut nichts hinsichtlich der Endsysteme und/oder der Formen des Vorliegens und/oder der Art des HOCIS-Signals auf die er sich beziehen kann. Das Prüfen des Vorliegens eines HOCIS-Signals erfolgt insbesondere in einem HOCIS-Endsystem und kann absolut jederzeit beginnen, wobei es hinsichtlich potentieller HOs mehr als ein prüfendes/geprüftes potentielles HOCIS-Endsystem geben kann. Dies ist kein Widerspruch dazu, dass PTKV- und STKV-Endsysteme in konkreten Ausführungsformen der vorliegenden Erfindung identisch sein können (siehe übernächsten Absatz).

Anspruch-1-gemäß greift eine konkrete Ausführungsform eines HOCIS-Verfahrens also in die von dieser Patentanmeldung angestrebten Schutzrechte ein, sobald sie - nach dem eben diskutierten Prüfen des Vorliegens irgend eines HOCIS-Signals in irgend einem Endsystem bezüglich eines potentiellen oder aktuellen HOs - die Übergabe einer für dieses HO relevanten Information (an einen in dieses HO geeignet involvierten TLN) startet. D.h.: Das Gelingen dieser Übergabe an den TLN in irgendeinem Ausmaß ist für dieses Eingreifen irrelevant.

Hinsichtlich der Verschiedenheit/Identität von-/miteinander der Endgeräte eines TLNs für seinen PTKV und mindestens einen STKV, hinsichtlich des (nichtmenschlichen) funktionalen Moduls M(HOCIS) und hinsichtlich der Originarität/Übergabe HO-relevanter Information im Anspruch 1 ist das in den vorangehenden Abschnitten dazu bereits Gesagte wie auch das dazu in diesem Abschnitt noch Ausgeführte zu beachten, insbesondere:
■ Diese PTKV- und STKV-Endgeräte können bei einem TLN (sowohl in einer abstrakten Realisierung als auch in einer konkreten Implementierung) identisch sein oder teilweise bzw. gänzlich verschieden voneinander, letzteres auch TKV- und/oder HO- und/oder TLN-spezifisch.
■ Es können ein oder mehrere HOCIS-Endsysteme (genauer: mittels deren jeweiligem M(HOCIS)) an Zustandekommen und/oder Übergabe der HO-relevanten Information beteiligt sein.
■ Das Zustandekommen und/oder die Übergabe HO-relevanter Information an einen TLN kann für mindestens einen M(HOCIS), also dessen System, "statisch" vorab vereinbart sein, d.h. dass beim Eintreten mindestens einer bestimmten Bedingung in diesem M(HOCIS)-System allein und/oder unter Zuhilfenahme mindestens eines weiteren, dieses Zustandekommen und/oder diese Übergabe HO-relevanter Information an einen TLN des PTKVs erfolgt, wobei dieses M(HOCIS)-System das TLN-HOCIS-Endsystem selbst sein kann.
   Das vorstehend Gesagte schließt insbesondere nicht aus, dass mindestens
■ einer der TLNs eines HOCIS-TKVs in einem oder beiden Endsystemen mindestens einer seiner HOCIS-OSI-Verbindungen - in jedem seiner Endsysteme kann dessen aktueller STKV-TLN ggf. jederzeit wechseln - permanent oder temporär ein Automat ist,
■ ein Endsystem und/oder TLN des PTKVs, in dem das HO erfolgt, verschieden ist von allen HOCIS-Endsystemen/-TKV-TLNs des diesem HO zugeordneten HOCIS-TKVs - und umgekehrt,
■ ein PTKV-Endsystem ein anderes Netz benutzt als ein Netz, das ein HOCIS-Endsystem (des diesem HO zugeordneten HOCIS-Vorgangs) benutzt, wobei beide Endsysteme mindestens einen gemeinsamen PTKV-/STKV-TLN beherbergen oder nicht.

### D.3. HOCIS-RM-basierte Verständnis-Präzisierung des Anspruch-1-Wortlauts/Sinngehalts

Die grundsätzliche Verständnis-Präzisierung des Anspruch-1-Wortlauts/-Sinngehalts im vorigen Unterabschnitt erfolgte, indem ihr das OSI-RM zugrunde gelegt wurde. Die Unterabschnitte **D.3.-D.5.** zeigen nun, dass es HOCIS-TKVs gibt, deren Verständnis-Präzisierung/Vereinfachung nahe legt, dass ihren Erläuterungen ein gemeinsames "**HOCIS-Referenzmodell**" **(HOCIS-RM)** zugrunde gelegt wird - weil dieses viele der Erläuterungen überflüssig macht, die andernfalls jeder dieser HOCIS-TKVs erforderte.

Angesichts der am Anfang dieses Abschnittes **D**. beschriebenen Lektion, die dem Verfasser dieser Schrift wegen anderer seiner kommunikationstechnischen Patente ärgerlicherweise erteilt wurde, scheint dieser - unter normalen Umständen als überzogen anzusehende - Aufwand zur Vereinfachung der Verständniskreierung/-präzisierung für Anspruch 1 gerechtfertigt. Normalerweise würde der maßgebliche Fachmann der Lektüre des Anspruchs 1 von sich aus ein solches Modell zugrundelegen.

Das **HOCIS-RM** ergibt sich zwingend aus dem dem OSI-RM (insbesondere dessen o.g. L7-Standard) zugrunde liegenden allgemeinen Prinzip der Analyse eines TKVs alias einer Kommunikationsanwendung. Die nachfolgend dargelegte spezielle Modul-Untergliederung seines M(HOCIS) ist dabei HOCIS-Verfahrens-spezifisch. Diese spezielle Modul-Untergliederung des M(HOCIS) und deren Benutzung in den **Abbildungen 5** ist sehr behilflich, einfach und präzise zu erkennen, ob ein bestimmtes HOCIS-Verfahren
■ Anspruch-1-gemäß (alias Pseudoanspruch-1'-gemäß) ist oder nicht, und dies
■ sowohl in dessen abstrakter als auch konkreter Realisierung/Implementierung.

Die Ausführlichkeit der nachfolgenden Erläuterungen des HOCIS-RMs und der 18 **Abbildungen 5** sollte nicht irritieren:
■ Der maßgebliche Fachmann kennt die Unvermeidlichkeit genau dieser Art der OSI-RMbasierten Modellierung der gedanklichen Grundlage eines nicht-trivialen kommunikationstechnischen Verfahrens zum Zwecke des einfachen und unmissverständlichen Verständnisses seines Beschreibungs-Wortlauts - also die Notwendigkeit des HOCIS-RMs dafür.
■ Die 18 **Abbildungen 5** dienen der Verständnis-Vereinfachung der Anwendung des HOCIS-Verfahrens - sie zeigen lediglich die wichtigsten seiner vielen Einsatzmöglichkeiten auf.
   Nun zu der Struktur des HOCIS-RMs. Nur zum Zweck und den Bereich dieser **Abbildungen 5** treffen wir die etwas vereinfachende (oben bereits angesprochene) Annahme, die abstrakte Realisierung der abstrakten STKV-Endgeräte erfolge in abstrakten PTKV- Endgeräten (d.h. hier: in abstrakten Telefonen und/oder abstrakten Servern/IADs). Bei den PTKV-TLNs gibt es dann keine eigenständigen HOCIS-Endgeräte. Diese Vereinfachung schließt aber nicht aus, dass die abstrakte Realisierung mindestens eines abstrakten HOCIS-Endgeräts
■ mittels mehr als einem abstrakten PTKV-Endgerät (also "verteilt") und/oder sogar
■ vollständig außerhalb der abstrakten PTKV-Endgeräte (also "ausgelagert")
   erfolgt - was beides in den letzten **Abbildungen 5** benutzt wird. Diese Vereinfachung ist für den Verfahrens-Hauptanspruch ohnehin irrelevant (da er von Realisierungs-Aspekten völlig abstrahiert), und Vorrichtungs-Unteransprüche offenbaren explizit, dass sie dem Vorrichtungs-Hauptanspruch nicht zugrunde liegt.

Zum Zweck der Veranschaulichung des HOCIS-RMs betrachten wir nun die wichtigsten Strukturelemente der **Abbildungen 5** (deren Einzelheiten im Unterabschnitt **D.4.** erläutert werden), weil sie das Wesentliche am HOCIS-RM sind. Das sind allein die funktionalen M(HOCIS)-Moduln und ihre Untergliederung in M-Lo-/M-Hi-Moduln, sowie die zwischen den M-Lo-/M-Hi-Moduln verlaufenden gestrichelten Linien. (Daneben enthalten diese Abbildungen einiges aber für das HOCIS-RM selbst irrelevantes Beiwerk, das lediglich dessen Umgebung andeutet. Zwei Beispiele dafür sind: Ihre fetten Doppel-Pfeile, die für je eine TKV-OSI-Verbindung stehen und ihre Endsystem-Boxen, die jeweils mindestens einen M(HOCIS) enthalten und dessen Bezug zur Realität skizzieren, wie unten erläutert wird). Man beachte, dass es hier völlig irrelevant ist, welche Entitäten alias Moduln des PTKVs es gibt - außer den PTKV-Endsystemen selbst, mehr dazu siehe oben - die hier deshalb auch nicht dargestellt sind.

Das HOCIS-RM nimmt bezüglich der Abstraktionsniveaus und Bedeutungsgehalte der OSI-RMgemäßen Schichten 4-7, und damit hinsichtlich der M(HOCIS), eine der heute oft praktizierten Vereinfachungen vor (siehe etwa J. Schiller, Mobile Communications, Seite 17, ISBN-13: 978-0-321-12381-7): Unter "**L7**" wird hier die Gesamtheit der L4-L7 des OSI-RMs verstanden - wobei der Fettdruck von **L7** diese Vergröberung der OSI-RM-Termini/Begrifflichkeit zum Zwecke der Vereinfachung der nachfolgenden Ausführungen kenntlich machen soll. Diese Notations-Vereinfachung impliziert also keinerlei Modifikation der Termini/Begriffe des OSI-RMs - die weiterhin und ohne Fettdruck benutzt werden - und keinerlei Sinngehalts-Änderung des Anspruch-1-Wortlauts. Dieser Vereinfachung entsprechend, zeigen die **Abbildungen 5** von diesen HOCIS-TKV-Endsystemen - sie sind wegen der obigen Vereinfachung meistens auch PTKV-Endsysteme, s.o. - jeweils nur deren Erbringer ihrer "**L7**-HOCIS-Funktionalität" durch die **L7**-M(HOCIS)-Moduln. Letztere sind durch die schraffierten Flächen in den beiden o.g. informellen **L7**-HOCIS-Endsystem-Boxen ausgewiesen. OSI-RM-gemäß wird die **L7**-HOCIS-Funktionalität durch **L7**-HOCIS-Interaktionen der **L7**-M(HOCIS) alias "**L7**-Entitäten" in und mittels der HOCIS-OSI-Verbindung erbracht- hier genauer: in/mittels deren **L7**-HOCIS-OSI-Verbindung.

Einige Erläuterungen zu den (anfangs je zwei) **L7**-HOCIS-Endsystem-Boxen: Ihre beiden inneren Spalten zeigen den jeweiligen **L7**-M(HOCIS), während ihre beiden äußeren Spalten den Ort der (abstrakten) Realisierung des jeweiligen **L7**-M(HOCIS) in seinem Endsystem zeigen, d.h. einen abstrakten Telefon-Apparat oder IAD bzw. dessen abstrakten Benutzer alias TLN (sofern vorhanden).

Letzteres unterteilt einen **L7**-M(HOCIS) in **abstrakte Realisierungs-** alias **Abstraktionsebenen:**
■ Die obere Abstraktionsebene modelliert die Entität der abstrakten Interaktionen des **L7-**M(HOCIS) - mit wem auch immer - zum Zweck der Anspruch-1-gemäßen Übergabe HO-relevanter Information an einen TLN.
■ Die untere Abstraktionsebene modelliert die Entität der abstrakten Interaktionen des **L7-**M(HOCIS) - mit wem auch immer - zum Zweck des Erfassens/Modifizierens/Verwertens/Erzeugens/ ... des HO-relevanten Sinngehalts mindestens eines Teils dieser Information, also das Bereitstellen HO-relevanter Information, vor deren Anspruch-1-gemäßer Übergabe (sowie die L4-L6 OSI-RM-Sinngehalte, die durch obige **L7**-Vergröberung hinzugekommen sind).

Dementsprechend, besteht im HOCIS-RM jede/r **L7**-M(HOCIS)-Entität/Modul aus einer/m "**L7-**M(HOCIS)-Hi"-Entität/Modul und einer/m "**L7**-M(HOCIS)-Lo"-Entität/Modul.

Nachfolgend wird auf den Präfix "**L7**-" und den Postfix "-Entität/Modul" meistens verzichtet - wie auch zunehmend auf die Zeichenketten "(HOCIS)" und "HOCIS", vor allem in Modul-Bezeichnern.

Weitergehende Einzelheiten
■ zu diesen beiden Arten von Interaktionen der jeweils beiden M-Hi bzw. M-Lo in jeder HOCIS-OSI-Verbindung - mit wem auch immer - und
■ zu der zu übergebenden HO-relevanten Information
werden im HOCIS-RM nicht betrachtet.

Die Frage, ob ein HOCIS-TKV Anspruch-1-gemäß ist oder nicht, entscheidet die "**Beteiligung**" der M-Hi- und M-Lo-Moduln in den HOCIS-TKV-Endsystemen an der Bereitstellung und Übergabe HO-relevanter Information an einen deren TLNs. In OSI-RM-Terminologie/Begrifflichkeit: entscheidet die Beteiligung der M-Hi- und M-Lo-Moduln an mindestens einer L7-HOCIS-OSI-Verbindung dieses STKVs (wie gleich ersichtlich wird).

Dementsprechend wird im HOCIS-RM von einem STKV überhaupt nur dessen mindestens eine **L7-**STKV-OSI-Verbindung betrachtet, wobei es deren Interaktion mit einem
■ TLN modelliert als Interaktion mit dem ihm entsprechenden M-Hi, und mit einem
■ Endgerät modelliert als Interaktion mit dem ihm entsprechenden M-Lo.

In anderen Worten: Im HOCIS-RM wird ein PTKV-/STKV-TLN in einem PTKV-/STKV-Endsystem durch einen M-Hi modelliert, und der M-Lo darin modelliert dessen Bereitstellungs-Funktionalität von HO-relevanter Information. Diese Paare - (letztgenannte Funktionalität, M-Lo) und (TLN, M-Hi) - sind im HOCIS-RM also jeweils Synonyme. Die Semantik der Interaktionen innerhalb jedes der beiden Synonyme-Paare liegt außerhalb des HOCIS-RMs.

Im HOCIS-RM kommt dem Terminus/Begriff der "**Beteiligung**" eines M-Lo bzw. M-Hi bei der Bereitstellung und Übergabe von HO-relevanter Information zentrale Bedeutung zu. Er besagt: Ein M-Lo oder M-Hi ist an der Anspruch-1-gemäßen Übergabe HO-relevanter Information "beteiligt", wenn diese von ihm partiell oder in Gänze in irgendeiner Weise erzeugt oder/und erfasst oder/und inhaltlich bzw. darstellungsmäßig abgeändert oder/und bereitgestellt oder/und weitergeleitet oder/und empfangen oder/und konsumiert wird. Diese Beteiligung eines M-Lo bzw. M-Hi steht für die Beteiligung seines jeweiligen M(HOCIS). Sie erfolgt i.d.R. automatisch, kann aber ggf. vom TLN initiiert werden.

Ein so beteiligter M-Lo oder M-Hi des HOCIS-RMs wird in dieser Druckschrift auch als "**Relay**" alias "**L7**-Relay" bezeichnet. (Ein **L7**-Relay ist also eine begriffliche Vergröberung mindestens eines OSI-RM-gemäßen Li-spezifischen Relays - der oben dargelegten begrifflichen Vergröberung der höheren Li-Verbindungen zu einer **L7**-Verbindung folgend.) Die beiden Relays im Initiator- bzw. Adressaten-Modul einer Übergabe HO-relevanter Information heißen "**Endpunkte**" dieser Übergabe, wobei (gemäß Anspruch 1) der Adressaten-Modul stets ein M-Hi ist und an der übergebenen HO-relevanten Information stets mindestens ein M-Lo beteiligt ist. Um diese beiden Initiator- bzw. Adressaten-HOCIS-Endpunkte einer Übergabe HO-relevanter Information von weiteren "**Relaypunkten**" dieser Übergabe zu unterscheiden, werden in den **Abbildungen 5** erstere durch einen fetten ausgefüllten bzw. hohlen Punkt und letztere durch ein fettes Kreuz gekennzeichnet. Eine durch die Endpunkte einer Übergabe definierte HOCIS-Relation zwischen zwei STKV-Endsystemen kann sowohl temporär oder permanent als auch bidirektional oder unidirektional oder gar nicht bestehen.

In einfachen Fällen brauchen an einer Anspruch-1-gemäßen Übergabe HO-relevanter Information zwischen zwei STKV-Endsystemen nur ein in das HO direkt involvierter M-Lo und ein indirekt involvierter M-Hi als Endpunkte beteiligt zu sein. Sie kann über den Telefon-residenten Teil (siehe unten) des direkt involvierten M-Hi "relayt" werden, was diese beiden beteiligt, oder über den indirekt involvierten M-Lo, was diesen beteiligt - falls es diese in den beiden Endsystemen gibt.

Die gestrichelten Linien der 18 **Abbildungen 5** zeigen - für eine Übergabe HO-relevanter Information - sowohl die Reihenfolgen der Einbeziehung der M-Lo/M-Hi in solche Beteiligungen als auch deren jeweilige grundsätzliche Relaying-Funktionalitäten dabei. Dieser Verlauf der gestrichelten Linie heißt "**Beteiligungs**-**Struktur**" in einer Übergabe HO-relevanter Information.

Das HOCIS-RM erleichtert das präzise Verständnis des - aus Vereinfachungsgründen in den **Abbildungen 5** beispielsweise beschränkten - Anspruch-1-Wortlauts/-Sinngehalts. Insbesondere sieht man leicht, dass in einer Anspruch-1-gemäßen Übergabe HO-relevanter Information an einen M-Hi diese dafür von einem M-Lo bereitgestellt wurde in
■ entweder einem anderen HOCIS-Endsystem als dem des M-His
■ oder/und dem HOCIS-Endsystem dieses M-His.

### D.4. Verständnis-Erleichterung des Anspruch-1-Wortlauts/Sinngehalts durch die Abbildungen 5

Nun zur Erleichterung des präzisen Verständnisses des Anspruch-1-Wortlauts/-Sinngehalts mittels des HOCIS-RMs und der 18 **Abbildungen 5**, wobei die o.g. Vereinfachungen beibehalten werden.

### D.4.1. Um Unklarheiten hinsichtlich des HOCIS-RMs in den Abbildungen 5 zu vermeiden ist außerdem zu beachten, dass eine (abstrakte) Interaktion zwischen dem

■ M-Hi und der Wahrnehmens-/Erzeugungs-Nerstehens-Funktionalität des von ihm modellierten realen Telefon-Benutzers (letzterer außerhalb des HOCIS-RMs) örtlich größtenteils in dessen Kopf angesiedelt ist, teilweise aber auch in dessen Telefon (wegen der abstrakten Hardware der Mensch/Maschine-Schnittstelle des Telefons, z.B. ihr Mikrofon, Lautsprecher, Display, Tastatur, ...). Dies bedingt die niedrige Lage eines Teils der Unterkante des M-Hi in den **Abbildungen 5.**
■ M-Lo und der von ihr modellierten realen Ber eitstellungs-Funktionalität von HO-relevanten Informationen (letztere außerhalb des HOCIS-RMs) erfindungsgemäß ermöglichen muss, dass ein M-Hi das Ergebnis dieser Interaktion erfährt. Erfindungsgemäß muss der M-Lo also mit einem M-Hi kommunizieren können und dazu die dafür erforderliche M-Hi-Funktionalität beinhalten (z.B. zur Generierung und Einblendung in den Sprachkanal an diesen M-Hi von HO-relevanter Sprach-Information an ihn) - unabhängig davon, ob der Benutzer seines eigenen Telefons am HOCIS-TKV beteiligt ist oder nicht (z.B. weil er ihn gerade für sich lokal abgeschaltet hat). Dies bedingt die hohe Lage eines Teils der Oberkante des M-Lo in den **Abbildungen 5.**

Ein M-Hi bzw. M-Lo eines M(HOCIS) ist also im HOCIS-Verfahren - und deshalb das HOCIS-RM - nicht auf seine jeweils "eigentliche" Abstraktionsebene beschränkt: Vielmehr sind im HOCIS-RM Teile sowohl der M-Hi- als auch der M-Lo-Funktionalitäten auf der jeweils anderen Abstraktionsebene angesiedelt und diese Teile heißen dann gelegentlich "**uneigentlicher**" M-Hi bzw. M-Lo.

Die Aufteilung dieser Entitäten/Moduln des M(HOCIS) auf die beiden Abstraktionsebenen des HOCIS-RMs erleichtert eine bestimmte - sehr technische - Weise der Präzisierung des

Verständnisses der Anspruchs-Wortlaute/Sinngehalte dieser Patentanmeldung. Diese Aufteilung ist jedoch verzichtbar: Keiner der Ansprüche macht nämlich von ihr Gebrauch. Sie alle verzichten auf eine rigorose Unterteilung eines M(HOCIS) und benutzen stattdessen einige - im Vergleich zu ihr umgangssprachlichere, einfachere und völlig hinlängliche - M(HOCIS)-Attribute, die Unterabschnitt **D.4.12.** zusammenstellt/definiert.

**D.4.2.** Die **Abbildungen 5a-b** zeigen zunächst, dass Anspruch 1 ein HOCIS-Verfahren nicht erfasst, dessen STKV-OSI-Verbindung (die PTKV-OSI-Verbindung wird nicht betrachtet, wie oben bereits gesagt) nur entweder allein die veranschaulichte Hi- oder Lo-Verbindung auf den L4-L7 des OSI-RMs besitzt. Der Grund für den Ausschluss aus dem Anspruch-1-Schutzbereich dieser beiden Arten von HOCIS-OSI-Verbindungen auf Grund ihrer Beteiligungs-Strukturen ist, - obwohl sie keinem Stand der HOCIS-Technik entsprechen, weil es diesen noch gar nicht gibt (siehe den Abschnitt **A**.) - dass die Beteiligungs-Struktur in **5a** eine offensichtliche (und damit nicht schutzfähige) HOCIS-Technik und die in **5b** überhaupt keine HOCIS-Technik böte:
■ In **5a** besprechen die beiden Telefonierenden mittels der Hi-Verbindung irgendetwas hinsichtlich eines HOs - verwirklichen mutmaßlich also irgendeinen HOCIS für einander - aber der in dieses HO direkt involvierte Anspruch-1-gemäße nicht-menschliche Modul dieses Endsystems ist an einer solchen HOCIS-OSI-Verbindung (und damit an der in ihr übergebenen HO-relevanten Information) nicht beteiligt.
■ In **5b** ist der in ein HO indirekt involvierte Telefon-Benutzer an einem solchen HOCIS nicht beteiligt, da die HOCIS-OSI-Verbindung hier - sie enthält auf der L4-L7 allein die o.g. Lo-Verbindung - den indirekt involvierten M-Hi nicht beteiligt, d.h. sie übergibt seinem TLN keine HO-relevante Information.
Man beachte jedoch, dass es in einer Anspruch-1-gemäßen STKV-OSI-Verbindung nicht stört, wenn diese zusätzlich eine Hi-Verbindung und/oder Lo-Verbindung enthält.

**D.4.3.** Die vier **Abbildungen 5c-f** zeigen als nächstes die Beteiligungs-Strukturen von nur vier der insofern einfachsten Anspruch-1-gemäßen HOCIS-OSI-Verbindungen, als das in das (z.B. potentielle oder aktuelle) HO indirekt involvierte Telefon keinen M-Lo enthält - d.h. die Implementierung dieses Telefons das HOCIS-Verfahren in keiner Weise unterstützt, also z.B. ein heute übliches Telefon ist.
Diese pragmatisch deshalb wichtigen Anspruch-1-gemäßen Beteiligungs-Strukturen dieser vier HOCIS-OSI-Verbindungen weisen übrigens hinsichtlich des HOCIS für einen in ein HO indirekt involvierten PTKV-TLN den Kern des Wesens der Anspruch-1-gemäßen Erfindung auf (Die Bedeutung des HOCIS-Verfahrens für den direkt involvierten PTKV-TLN wird weiter unten betrachtet). Um graphisch zu betonen, welcher der beiden PTKV-TLNs in den nachfolgenden **Abbildungen 5** durch den HOCIS jeweils begünstigt ist, wird er mit einer dickeren Umrandung (als die des anderen TLNs). dargestellt - dies ist auch der TLN, in dessen M-Hi die "Beteiligungs-Struktur endet".

Genauer: Ist man mit diesen vier Beteiligungs-Strukturen erst einmal vertraut, so offenbaren die "Anspruch-1-gemäßen Beteiligungs-Strukturen" bis zur **Abbildung 5i** hinsichtlich des HOCIS für einen in ein HO indirekt involvierten PTKV-TLN nichts mehr Missverständliches. Insbesondere sei hier angemerkt, dass - falls das indirekt involvierte Telefon keinen M-Lo enthält - es für die Kommunikation zwischen beiden Endsystemen nur den "Sprachkanal" für den Austausch von HO-relevanter Information des STKVs gibt (während es andernfalls dafür z.B. noch einen dazu nebenläufigen "Datenkanal" für HO-relevante nicht-Audio-Information des STKVs geben kann).

Angenommen wird in diesen vier Abbildungen lediglich, dass der indirekt involvierte Telefon-Benutzer den ihm in natürlicher Sprache übergebenen (und per "Sprachkanal" übertragenen) HOCIS richtig versteht. Dies artikuliert die Modellierung dieses Benutzers - also dass er diesen HOCIS richtig zu interpretieren weiss - indem sie ihm einen M-Hi zubilligt. D.h.: Die Modellierung eines absolut "HO-unverständigen" oder absenten indirekt involvierten TLNs sähe keinen M-Hi vor.
■ In **Abbildung 5c** hat der Benutzer des in ein HO direkt involvierten Telefons mit dem HOCIS-TKV nichts zu tun, sein eigentlicher M-Hi ist daran nicht beteiligt (sondern nur dessen Telefonresidenter Teil, d.h. sein uneigentlicher M-Hi, s.o.) - aus irgendeinem Grund, etwa weil er durch ihn gerade nicht gestört werden möchte und deshalb seine HOCIS-Interaktionen temporär abgeschaltet hat oder weil er sich einfach nicht darum kümmert. Hier initiiert der in das HO direkt involvierte eigentliche M-Lo den HOCIS-TKV und übergibt eine HO-relevante Information an den indirekt darin involvierten eigentlichen M-Hi - wobei diese Übergabe von ersterem zu letzterem relayt wird in dem direkt involvierten uneigentlichen M-Hi und indirekt involvierten uneigentlichen M-Hi. Das erste M-Hi-Relay erbringt dabei hinsichtlich der Anspruch-1-gemäßen Übergabe HO-relevanter Information die ihm entsprechende "Übersetzungs-Funktionalität" (hier: Für die HO-relevante Information des direkt involvierten M-Lo eine inhaltsgleiche Nachricht in menschlicher Sprache zu erzeugen und diese in den Sprachkanal zum indirekt involvierten uneigentlichen M-Hi einzublenden, d.h. zunächst zu dessen diese Nachricht zu seinem TLN relayenden Lautsprecher oder dessen Puffer - wann immer der direkt involvierte M-Lo diese HO-relevante Information, alias diesen HOCIS, dem TLN zukommen lassen möchte).
■ Das Neue der **Abbildung 5d** gegenüber **5c** besteht allein darin, dass nun der STKV, d.h. dessen HOCIS-OSI-Verbindung, vom direkt involvierten eigentlichen M-Hi initiiert wird (also vom Modell des direkt involvierten TLNs). Sie muss dann den direkt involvierten eigentlichen M-Lo (also dem Modell des direkt involvierten Telefons) beteiligen (um dort HO-relevante Information bereitzustellen für die Übergabe an den indirekt involvierten eigentlichen M-Hi) - wonach es weitergeht wie in **5c**. Das Relay im direkt involvierten uneigentlichen M-Hi auf diesem Weg erbringt nun hinsichtlich der Anspruch-1-gemäßen Übergabe HO-relevanter Information die ihm entsprechende (gegenüber **5c** zusätzlichen) Übersetzungs-Funktionalitäten, nämlich das Übersetzen der Auswahl der vom direkt involvierten Initiator der HOCIS-OSI-Verbindung ausgewählten HO-relevanten Information im/des direkt involvierten Telefon/s in deren entsprechendes Erfassen im M-Lo.
■ Das Neue der **Abbildung 5e** gegenüber **5d** besteht allein darin, dass nun der direkt involvierte M-Lo die von seinem M-Hi (=TLN) ausgewählte HO-relevante Information - die der M-Lo dementsprechend bereitstellt für die Übergabe an den indirekt involvierten M-Hi - zwar bereitstellen, sie aber nur seinem eigenen TLN M-Hi übergeben kann, z.B. per dessen graphischem Display. Dieser TLN (= direkt involvierter eigentlicher M-Hi) muss sie nun allein z.B. in eine Nachricht in menschlicher Sprache "verpacken" und diese HO-relevante Information an den direkt involvierten uneigentlichen M-Hi relayen, d.h. an dessen Mikrophon - wonach es weitergeht wie in **5c**. Hier agiert der direkt involvierte TLN also als (gegenüber **d** zusätzliches) Relay.
■ Das Neue der **Abbildung 5f** gegenüber **5c** besteht allein darin, dass es hier nun keinen in das HO direkt involvierten Telefon-Benutzer gibt. Dies entspricht der praktischen Situation, dass z.B. zum Zeitpunkt der Initiierung der HOCIS-OSI-Verbindung durch den direkt involvierten **L7-**M-Lo der Benutzer dieses Telefons seinen dem betreffenden HO zugrunde liegenden PTKV temporär suspendiert hat, um mit seinem Telefon an einem anderen PTKV (der mit diesem HO nichts zu tun hat) vorübergehend teilzunehmen, sodass er von dem STKV zu ersterem PTKV nichts erfahren kann. Dies weist das HOCIS-RM durch das Fehlen des direkt involvierten eigentlichen M-Hi aus. Dementsprechend weist bei diesem HOCIS-Verfahren der direkt involvierte M-Lo die Funktionalität auf, über die in **5c** dessen uneigentlicher M-Hi verfügt.

Man beachte an den Beteiligungs-Strukturen dieser Abbildungen, dass
■ in mehreren von ihnen ein Modul mehrfach beteiligt ist. Anspruch-1-gemäß stört dies in keiner Weise. Da außerdem Anspruch 1 keine Mehrfach-Beteiligungen erfordert, wird in den nachfolgenden Abbildungen zunehmend von mehreren Relaypunkten eines Moduls in einer Beteiligungs-Struktur nur noch einer ausgewiesen, womit auch konsistent ist, dass
■ die M(HOCIS) Funktionalitäten in seinem uneigentlichen M-Lo in seinem uneigentlichen M-Hi ausgewiesen werden können und umgekehrt, sodass das HOCIS-RM beide genau so gut zu einem M-HiLo zusammenfassen könnte - sieht man ab von dadurch gelegentlich verursachten Verletzungen ästhetischer Kategorien, die der maßgebliche Fachmann jedoch als solche erkennen würde und die deshalb hier irrelevant wären.

Zu den vier vorstehend erläuterten Abbildungen sei weiterhin angemerkt, dass sie keineswegs sämtliche Beteiligungs-Strukturen der Anspruch-1-gemäßen Übergabe von HO-relevanter Information in HOCIS-Vorgängen aufzeigen, in denen das indirekt involvierte Telefon einen HOCIS-Vorgang nicht unterstützen kann (weil es keine M-Lo-Funktionalität enthält, wie in ihnen modelliert). Der maßgebliche Fachmann erkennt nämlich sofort, dass z.B. alle eben erläuterten 4 Arten von HOCIS-OSI-Verbindungen auch vom indirekt involvierten PTKV-TLN initiiert werden können - etwa durch dessen Eintippen eines DTMF-Codes oder durch seine Eingabe eines natürlich-sprachlichen Befehls oder dessen Absetzen einer SMS-Nachricht oder eines anderweitigen Signals über irgend ein Netz (modellierbar durch dessen dementsprechend funktional spezifizierten M-Hi), auf dessen/deren Empfang hin der direkt involvierte M-Hi und/oder M-Lo geeignet reagiert. Die zugehörigen Beteiligungs-Strukturen sind mittlerweile offensichtlich - brauchen also hier nicht weiter veranschaulicht oder erörtert zu werden.

Gleichermaßen überflüssig wäre eine Erörterung der Tatsache, dass vom Anspruch-1-Wortlaut/- Sinngehalt auch HOCIS-Verfahren erfasst sind, die vor/an der/die dort geforderte(n) Übergabe mindestens einer HO-relevanten Information irgendeinen weiteren Informationsaustausch und/oder irgendeine Interaktion zwischen wem auch immer vorsehen.

Dieser Artenreichtum bereits der elementarsten Anspruch-1-gemäßen "Beteiligungs-Strukturen" wird erheblich erhöht dadurch, dass das linke oder beide der eben betrachteten Telefone (ein) FMC-Telefon(e) ist/sind, bei dem/denen die GSM/CDMA- und WLAN-/Femtocell-Funktionalitäten über unterschiedliche HOCIS-Funktionalitäten verfügen. Da die so ermöglichten neuen Beteiligungs-Strukturen, "geradlinig ableitbare" Fixed-/Mobile-Kombinationen der vorstehend aufgewiesenen Beteiligungs-Strukturen sind, werden sie in dieser Schrift nicht weiter elaboriert - weil sie der maßgebliche Fachmann mühelos identifizieren kann. D.h. die beispielhaften HOCIS-Konfigurationen der **Abbildungen 5** beruhen auf der weiteren vereinfachenden Annahme, die HOCIS-Funktionalitäten der Fixed- und Mobile-Komponenten in diesen Konfigurationen wären identisch. Anspruch 1 nimmt eine solche Beschränkung nicht vor - wie er offensichtlich überhaupt keine Beschränkung hinsichtlich TK-Netzen vorsieht.

**D.4.4.** Die beiden **Abbildungen 5g-h** zeigen die den beiden **Abbildungen 5c-d** entsprechenden Beteiligungs-Strukturen, die dadurch ermöglicht werden, dass das indirekt involvierte Telefon nun ebenfalls einen vollständigen M(HOCIS), d.h. auch einen M-Lo, enthält - einen M-Hi enthält jedes Endsystem mit "HO-verständigem" PTKV-TLN (s.o.) - sodass es zwischen den beiden Endsystemen neben dem "Sprachkanal" noch einen "Datenkanal" für die Übergabe HO-relevanter Information geben kann. Komplementär oder alternativ zum bisher i.d.R. einzigen "Kommunikationskanal" zwischen den beiden Telefonen und ihren TLNs, dem "Sprachkanal", können HOCIS-Verfahren diese Funktionalitäten nutzen und einen "Datenkanal" zwischen ihren beiden M-Los betreiben, wobei sich dieser des gleichen Netzes mit den gleichen Netzmerkmalen bedienen kann wie der Sprachkanal oder mindestens eine andere Netze-Variante benutzt.

Die bisherigen Erörterungen von Beteiligungs-Strukturen in "Server-freien" (i.d.R. "Teilnehmer-/Teilnehmer-") Übergaben von HO-relevanter Information abschließend sei angemerkt, dass in diesen beispielsweisen Szenarios ein in ein HO direkt involviertes Endgerät ohne M-Lo - also ein heutiges "nur-GSM/CDMA"-Telefon oder "nur-WLAN"-Telefon oder "nur-FMC-Telefon" - das HOCIS-Verfahren, genauer: einen STKV, nicht selbst initiieren kann. Falls es jedoch mit einem HOCIS-Server/-IAD (oder HOCIS-Telefon) zusammenarbeitet, kann sich dies ändern, indem diese HOCIS-Endsysteme einen "virtuellen M-Lo" realisieren, wie nachfolgend ersichtlich wird.

**D.4.5.** Die 10 **Abbildungen 5i-r** zeigen wiederum beispielhafte und einfachste Anspruch-1-gemäße Beteiligungs-Strukturen bei der Übergabe an einen PTKV/STKV-TLN irgendeiner HO-relevanten Information, nun jedoch unter Zuhilfenahme der Funktionalität eines **"HOCIS-Servers**" - vorzugsweise ausgeprägt als "**HOCIS-IAD**" **-** zunächst in den 6 **Abbildungen 5i-5n**. Das Verfügbarwerden eines weiteren HOCIS-IADs erläutern dann die 4 **Abbildungen 5o-5r**.
■ Diese 10 Abbildungen zeigen einfachste Beteiligungs-Strukturen nicht insofern, als alle vorstehend bereits erläuterten Anspruch-1-gemäßen Beteiligungs-Strukturen bei der Übergabe HO-relevanter Information wiederholt werden, jedoch nun mit Benutzung eines Servers/IADs als L3-Router in der dieser Übergabe zugrunde liegenden STKV-OSI-Verbindung. In diesem Fall wirkte dieser Server/IAD an der HOCIS-Kommunikationsanwendung selbst nicht mit, genauer: die L4-L7 dieser HOCIS-OSI-Verbindung sähe die Benutzung dieses Servers/IADs überhaupt nicht, sodass deren Beteiligungs-Struktur durch den HOCIS-Server/IAD nicht verändert werden kann, also bereits vorstehend erfasst ist.
■ Vielmehr wirkt nachfolgend der/das Server/IAD nun an mindestens einer HOCIS-Kommunikationsanwendung selbst mit (genauer: an der **L7**-Verbindung in deren OSI-Verbindung): Er/Es gehört mit mindestens einem seiner M(HOCIS)-Moduln zu deren Beteiligungs-Struktur. Dieser Fall ist wichtig insbesondere dann, wenn das in das (z.B. potentielle oder aktuelle) HO involvierte Telefon selbst einen HOCIS-Vorgang nicht unterstützen kann (es keinen M(HOCIS) enthält, also ein übliches Telefon ist): Ein geeigneter "**Stellvertreter**-**M(HOCIS)**" in mindestens einem Server/IAD kann dann "HOCIS-Unzulänglichkeiten" in einem PTKV/STKV eines derartigen "Nicht-HOCIS"-Telefons ausgleichen - wie nachfolgend weiter ausgeführt wird.
■ Der Unterschied zwischen HOCIS-Servern und HOCIS-IADs ist dabei vor allem darin zu sehen, das erstere i.d.R. technisch "WLAN-unabhängig" realisiert sind und i.d.R. auch einem "WLANunabhängigen" administrativen Management unterstehen, während letztere i.d.R. in der einen oder anderen Weise von mindestens einem WLAN irgendwie abhängig sind.
■ Diese 10 Abbildungen zeigen schließlich Beispiele einfachster Anspruch-1-gemäßer Beteiligungs-Strukturen mit HOCIS-Servern/-IADs insofern, als sie die zusätzliche Vereinfachung zugrunde legen, - über die bisherigen Vereinfachungen hinausgehend - dass der Beteiligungs-Struktur einer STKV-OSI-Verbindung jeweils nur ein einziger HOCIS-Server/-IAD angehört. Dies bedeutet jedoch keineswegs, dass ein TLN-STKV-Endsystem zu einem Zeitpunkt nur einen STKV unterstützte, wie die 2 **Abbildungen 5q-r** ausführlich erörtern.

Der maßgebliche Fachmann kann spätestens auf dieser - die nachfolgenden Ausführungen zu den 10 **Abbildungen 5i-r** umfassenden - Verständnis-Grundlage von einer konkreten Ausführungsform eines HOCIS-Verfahrens (mit oder ohne Unterstützung durch mindestens einen HOCIS-Server/IAD) problemlos feststellen, ob die Beteiligungs-Struktur deren/dessen OSI-Verbindung Anspruch-1-gemäß ist oder nicht, selbst wenn sie keine der o.g. Vereinfachungen verwirklicht.
■ Die **Abbildung 5i** vermittelt eine besonders einfache Sichtweise auf eine einfache "HOCIS-Konfiguration mit HOCIS-IAD": Ihr rechter M(HOCIS) entspricht einem in **5c-h**, während der linke M(HOCIS) nicht unterscheidet zwischen HOCIS-IAD und direkt involviertem Endsystem, also beide als Einheit zugrunde legt. Aus Klarheitsgründen sind die PTKV- und die STKV-OSI-Verbindung hier (und nachfolgend) getrennt voneinander ausgewiesen, wobei beide OSI-Verbindungen
   ○ rechts beim M(HOCIS) im gemeinsamen PTKV-/STKV-Endsystem enden, während
   ○ links die sowohl die PTKV-**L7**-Verbindung (der PTKV-OSI-Verbindung) als auch die STKV-**L7**-Verbindung (der STKV-OSI-Verbindung) unabhängig voneinander jeweils in einem TLN-PTKV- bzw. TLN-STKV-Endsystem oder PTKV-IAD- bzw. STKV-IAD-Endsystem (oder irgendwie gemischt) enden können. In **5i** können insbesondere - hinsichtlich des STKVs - die M-Hi- und/oder M-Lo-Funktionalitäten des direkt involvierten Telefons also in Gänze oder teilweise im IAD gedoppelt, auf beide Geräte komplementär verteilt oder ausschließlich im IAD angesiedelt sein. Die **Abbildungen 5j-n** fächern dies weitergehend auf, ausgehend von der Struktur-Erläuterung des nächsten Absatzes.

In **5i** kann das HOCIS-IAD deshalb - hinsichtlich des von ihm unterstützten mindestens einen STKVs - mindestens die folgenden drei verschiedenen M(HOCIS) enthalten:
○ einen M-Hi für einen STKV des IADs mit dem indirekt involvierten Telefon,
○ einen M-Hi für einen STKV des IADs mit dem direkt involvierten Telefon,
○ einen M-Lo, der vollständig oder teilweise die Funktionalität eines bisher als Telefon-intern angesehenen direkt involvierten M-Lo erbringen kann - dieser M-Lo im IAD ist dann also der bereits o.g. "Stellvertreter-M-Lo" des Telefons bzw. dessen Benutzers alias dessen "**virtueller M-Lo**" im IAD.

Ein virtueller M-Lo eines PTKV/STKV-Endsystems bzw. dessen Benutzer wird weiter unten noch öfters angesprochen und dann - aus den im Unterabschnitt **D.4.12.** genannten Gründen - dessen "**virtueller M(HOCIS)**" genannt. Er kann die M-Lo-Informations-Erfassung/-Übergabe u.U. besser realisieren als ein Telefon-interner M-Lo: Er kann z.B. noch Zugang zum Sprachkanal zwischen den M-Hi der beiden Telefone haben, während ein Telefon-interner direkt involvierter M-Lo diesen Zugang zum indirekt involvierten M-Hi bereits verloren hat.

Gleich hier sei auf Konnektivitäts-Besonderheiten eines virtuellen M(HOCIS)/M-Lo eines STKV-Systems hingewiesen: Die Übergabe einer HO-relevanten Information von/durch diesem/n virtuellen M-Lo an den PTKV-TLN kann
■ in dessen STKV-Endsystem ein Relay erfordern. Diese Patentanmeldung sieht ein solches Relay als nicht existent an, falls es keine zusätzliche M-Lo-Funktionalität enthält (andernfalls ist es selbst ein M-Lo) - sie kann so einen virtuellen M-Lo eines TLN-PTKV/STKV-Endsystems als zu diesem gehörig betrachten.
■ abstrakt immer implementiert werden mittels mindestens eines abstrakten "PTKV-Kanal"-geeigneten Informationskanals zu diesem TLN - jedenfalls solange es überhaupt irgendeine Konnektivität des PTKV-Endsystems gibt (siehe die Erläuterung zu **Abbildung 5p**). D ies gilt i.d.R. auch für eine materielle Implementierung einer solchen abstrakten Implementierung.
■ auf Grund ihrer Unidirektionalität und ihres niedrigen Bandbreite-Erfordernisses auch über ein dafür geeignetes broadcast-Netz/-Netzmerkmal implementiert werden.

Der maßgebliche Fachmann weiß, dass in allen diesen Fällen daraus nicht zu folgen braucht, dass diese HO-relevante Information dem TLN nur in der Informationsdarstellung dieses PTKV-Datenkanals angeboten werden kann. Z.B.: Ist dieser PTKV-Datenkanal ein Sprachkanal, verfügt das Endgerät über geeignete DTMF-Funktionalität, und ist es hinreichend flexibel programmierbar - was etwa bei vielen heute marktüblichen Telefonen gegeben ist - so kann sie ihm auch z.B. textuell angeboten werden. Übrigens kann bei Verzicht auf eine derartige Informationsdarstellungs-Wandlung (bei Verwendung des eben angesprochenen Sprachkanals zum TLN) naheliegenderweise auf ein Relay im TLN-Endsystem verzichtet werden - was den HOCIS der Benutzer heute marktüblicher Telefone durch HOCIS-IADs ermöglicht, also ohne diese Telefone irgendwie verändern zu müssen. Die große wirtschaftliche Bedeutung derartiger IAD-gestützter HOs ist aus den Ansprüchen 70-79 und deren Kommentar im Unterabschnitt **D.5.** ersichtlich.

Dabei braucht dem virtuellen M-Lo im IAD hinsichtlich eines potentiellen oder aktuellen HOs seines direkt involvierten WLAN-/Femtocell-Telefons nicht alle letztendlich an den TLN übergebene HO-relevante Information zur Verfügung zu stehen. Vielmehr lässt die Definition von "HO-relevanter Information" zu, dass dieser M-Lo (z.B. sein Erfassen von HO-relevanter Information bezüglich des direkt involvierten PTKV-Endsystems) in Gänze oder teilweise in mindestens ein/en HOCIS-Server/-IAD/-Telefon ausgelagert ist und die so ggf. gemeinschaftlich gewonnene M-Lo-Information an einen TLN übergeben wird - also auch wenn in ihr HO-relevante Information enthalten ist, die nicht von dem M-Lo des direkt involvierten Endsystems erfasst wurde. Für Anspruch 1 ist deshalb ein virtueller M-Lo für ein direkt involviertes STKV-Endgerät - in z.B. einem STKV-Server/-IAD - gleichwertig einem STKV-Endgerät-intemen M-Lo.

D.h. insbesondere: Auch wenn ein direkt involviertes TLN-STKV-Endsystem eines STKVs überhaupt keinen internen M-Lo enthält, es aber einen virtuellen M-Lo hat (z.B. in einem Server/IAD/Telefon), so startet diese STKV-Beteiligungs-Struktur doch in diesem TLN-STKV-Endsystem - also nicht in einem STKV-Endsystem, das diesen virtuellen M-Lo in Gänze oder teilweise enthält.

Im Vordergrund steht nachfolgend nun, dass in **5i** kein Anspruch-1-gemäßer/s HOCIS-TKV/-Verfahren (und dessen Beteiligungs-Struktur) zwischen dem HOCIS-Server/-IAD und dem direkt involvierten Telefon explizit ausgewiesen wurde - aber auf Grund der Bedeutung speziell dieser so strukturierten HOCIS-TKVs alias STKVs für diese Schrift, diese der Verständnis-Klarstellung bedürfen. Dies leisten nun die 5 **Abbildungen 5j.n**, in denen deshalb der TLN im direkt involvierten STKV/PTKV-Endsystem die dicke Umrandung aufweist.

**D.4.6** In den beiden **Abbildungen 5j-k** ist das (links ausgewiesene) Telefon selbst wiederum nicht HOCIS-fähig, aber das (rechts ausgewiesene) IAD enthält dessen eben bereits angesprochenen virtuellen M-Lo. Der maßgebliche Fachmann kennt verschiedene technische Möglichkeiten, diesen virtuellen M-Lo mit HO-relevanter Information zu versorgen, z.B. eine geeignete Auswertung der "Signale des PTKVs" o.Ä. innerhalb oder außerhalb des HOCIS-IADs. Jedenfalls kann so der HOCIS-IAD einen HOCIS-TKV für das in das HO direkt involvierte Telefon betreiben - vermöge dessen virtuellem M-Lo (wie vorstehend bereits erläutert).
■ In der **Abbildung 5j** übergibt der virtuelle M-Lo des HOCIS-IADs von ihm bereitgestellte HO-relevante Information an den M-Hi im Telefon, also dessen Benutzer - und realisiert so den STKV (einschließlich dessen OSI-Verbindung und deren Beteiligungs-Struktur) zwischen dem HOCIS-IAD und dem Nicht-HOCIS-Telefon. Will er dazu den "Sprachkanal" des PTKVs benutzen, so muss er darauf "schreiben" können - was nicht unbedingt erfordert, dass der Sprachkanal dazu über das HOCIS-IAD geroutet ist, weil dieses "Aufmischen" darauf der HO-relevanten Information mittels eines weiteren Anspruch-1-gemäßen STKV-Systems, etwa in/an einem TK-Netz, bewerkstelligt werden kann.
■ Die **Abbildung 5k** unterscheidet sich von **5j** dadurch, dass das HOCIS-/STKV-IAD nun auch einen M-Hi enthält, d.h. einen STKV-TLN (des STKVs zwischen diesem STKV-TLN und dem PTKV-/STKV-TLN im Telefon). Dieser STKV-TLN bestimmt, wie er seine STKV-OSI-Verbindung zum M-Hi des direkt involvierten TLNs benutzt - d.h. dass dies hier durch den virtuellen M-Lo nicht vorbestimmt ist, wie in **5j**. In diesem Fall kann der M-Hi des IAD intelligent handeln (als L7-Relay zwischen den beiden STKV-OSI-Verbindungen, je eine zwischen diesem STKV-IAD und dem direkt bzw. indirekt in das HO involvierten TLN) und dafür Sorge tragen, dass z.B. die beiden STKVs zu den beiden TLNs nicht autonom und unabhängig voneinander ablaufen, sondern inhaltlich aufeinander abgestimmt sind - sodass er aus diesen beiden STKVs einen einzigen homogenen STKV zwischen den beiden STKV-IPTKV-TLNs macht (also mit einer einzigen STKV-OSI-Verbindung und Beteiligungs-Struktur).

Zu beachten in beiden Abbildungen: Jeder M(HOCIS) kann für die Übergabe seiner HO-relevanten Information an einen Telefon-Benutzer, falls beide nicht im gleichen Endsystem angesiedelt sind, ein anderes Netz benutzen als dessen PTKV - was natürlich auch für alle vorangehenden Abbildungen gilt.

**D.4.7.** Die **Abbildung 5l** unterscheidet sich von der **Abbildung 5k** im Grundsätzlichen lediglich dadurch, dass telefonseitig nun auch ein M-Lo vorhanden ist, und damit also u.A. die Erfassung HO-relevanter Information sowohl im HOCIS-Telefon als auch im HOCIS-IAD durchführbar sein kann.
Die Beteiligungs-Strukturen der durch diesen M-Lo ermöglichten Varianten des HOCIS-Verfahrens sind die gleichen wie in **5k**, was weiter oben bereits begründet wurde. Das entsprechende Analogon hierzu für **5j** ist offensichtlich und wird deshalb weggelassen.

**D.4.8.** In den **Abbildungen 5m-n** enthält der HOCIS-IAD keinen bzw. einen virtuellen M-Lo für das direkt involvierte Telefon und ist damit unfähig bzw. fähig, die Erfassung/Bereitstellung/Übergabe von HO-relevanter Information über das direkt involvierte Telefon zu leisten. Der HOCIS-IAD kann virtuelle M-Los für beide Telefone enthalten, die dann selbst beide nicht HOCIS-fähig zu sein (d.h. keinen internen M-Lo zu haben) brauchen. In ersterem Fall muss diese Erfassung also in mindestens einem der Telefone erfolgen, das dazu einen internen M-Lo für sich benötigt, wenn es HO-relevante Information über sich selbst erfassen/bereitstellen/übergeben können soll und/oder einen virtuellen M-Lo für das andere Telefon, wenn es HO-relevante Information über letzteres erfassen/bereitstellen/übergeben können soll. In allen Fällen kann in den beiden M-Hi - die in den Abbildungen nicht getrennt voneinander ausgewiesen sind, sondern als ein gemeinsamer M-Hi - des HOCIS-IADs jedoch weiterhin die "Harmonisierung" von HO-relevanter Information und deren Übergabe an die beiden PTKV-TLNs hinsichtlich mindestens eines HOs erfolgen - zum Zweck der eben bereits angesprochenen Erzielung eines homogenen STKVs zwischen ihnen hinsichtlich dieses HOs - wobei alle dazu dienenden OSI-Verbindungen über unterschiedliche Netze oder ein einziges realisiert sein können und dies zeitlich auf beliebig flexible variierende Weise.

**D.4.9.** Die vier **Abbildungen 5o-r** modellieren die Situation, dass das linke Telefon für sich eine neue rudimentäre Konnektivität feststellt, während es (**5o**) einen PTKV unterhält, der (ans Telefon anschließend) geroutet ist über ein WLAN (auf Basis von etwa WiFi- oder Femtocell-Technik) eines IADs oder über ein anderes GSM/CDMA/UMTS/Wimax/...-Netz, oder (**5p**) keinen PTKV unterhält aber eingecheckt ist in eines der eben genannten Netze, oder (**5q&r**) in keines von ihnen eingecheckt ist (siehe Abschnitt **B**.) **-** sodass es in allen vier Fällen in ein potentielles HO direkt involviert ist. Gleiches gilt, wenn diese rudimentäre Konnektivität nicht das Telefon sondern ein Netz feststellt - weshalb dies hier nicht nochmals erörtert wird. Man beachte, dass deshalb weiterhin der TLN im direkt involvierten STKV/PTKV-Endsystem die dicke Umrandung aufweist.

Diese vier Fälle **5o-r** erläutern deshalb bzw. außerdem nur
■ das Eintreten des Telefons in eine rudimentäre Konnektivität - nicht das Austreten daraus,
■ den möglichen HOCIS des Telefon-Benutzers - nicht eines möglichen HOCIS-IAD-TLNs,
■ den Fall, dass diese rudimentäre Konnektivität entweder beidseitig oder gar nicht besteht.

Die dazu komplementären Fälle - dass also mindestens eine der drei Bedingungen nicht erfüllt istwerden hier nicht erläutert: Die für sie passenden Anspruch-1-gemäßen HOCIS-Verfahren ergeben sich gleichermaßen "geradlinig" aus den Diskussionen dieses Abschnitts **D**., sofern sie nicht durch seine Abbildungen und deren nahe liegenden Kombinationen ohnehin dargestellt sind.

Die erhebliche Bedeutung einzelner dieser HOCIS-Varianten wurde am Ende des Abschnitts **B.** bereits betont. Diese vier dazugehörigen Abbildungen und ihre Erläuterungen verdeutlichen nun die etwas andere und/oder zusätzliche technische Komplexität, die dem HOCIS-Verfahren hier zugrunde liegt, gegenüber der in den bisher erörterten "TK-Konfigurationen". Dabei bleibt diese technische Komplexität im Grundsätzlichen unverändert: nämlich auf die Unterstützung eines Telefon-Benutzers hinsichtlich einer HO-Situation gerichtet - und nicht auf die Lösung eines technischen Problems dieser HO-Situation (siehe Ende des Abschnitts **B**.)**.**

**Abbildung 5o**: Neue rudimentäre Konnektivität während das Telefon anderswo eingecheckt ist und einen PTKV unterstützt. Grundsätzlich kann hier von jeder der vorstehend diskutierten TK-Anordnungen und deren HOCIS-Beteiligungs-Strukturen ausgegangen werden - zu denen nun das Entdecken der neuen rudimentären Konnektivität hinzukommt. **5o** geht speziell von **5m** aus, zeigt den neuen HOCIS-IAD (unterhalb der **5m**-TK-Konfiguration) und die Beteiligungs-Struktur der STKV-OSI-Verbindung, die das Telefon zum neuen HOCIS-IAD (als neuem STKV-Endsystem) aufbaut. Man beachte, dass die PTKV-OSI-Verbindung - genauer: das Routing deren L3-Verbindung - davon unberührt bleibt, ob sie/es zukünftig über dieses neue HOCIS-IAD geführt wird oder weiterhin über das HOCIS-IAD der TK-Konfiguration aus **5m**.

Jede an den STKV/PTKV-TLN im direkt involvierten STKV/PTKV-Endsystem übergebene HO-relevante Information ist Anspruch-1-gemäß, wenn sie bereitgestellt wird vom realen oder einem virtuellen M-Lo (d.h. vom M-Lo in diesem Telefon selbst oder einem M-Lo, der z.B. in einem aktuell oder potentiell für das Routing des PTKVs geeigneten IAD angesiedelt ist, wie in **5o**). Zu beachten ist dabei insbesondere, dass diese HO-relevante Information auch
■ z.B. irgendwie in einen der STKVs oder den PTKV eingehen kann und so den PTKV-TLN oder M-Hi in dem rechts ausgewiesenen PTKV/STKV-Endsystem veranlassen kann, irgend jemanden in dem links ausgewiesenen PTKV/STKV-Endsystem zu instruieren, ggf. das HO auf den neuen IAD durchzuführen, und
■ der M-Lo des links ausgewiesenen PTKV/STKV-Endsystems gemäß **5n** daraus ausgelagert sein kann - wie oben beschrieben - sodass dessen PTKV-TLN diesen HOCIS auch erfahren kann, wenn er ein Nicht-HOCIS-FMC-Telefon oder sogar ein Nicht-FMC-Telefon benutzt (wobei die ggf. erforderlichen weiteren, für den maßgeblichen Fachmann auf Grund des hier vermittelten Verständnisses mittlerweile offensichtlichen, jeweiligen HOCIS- und/oder HO-Maßnahmen hier nicht elaboriert zu werden brauchen), und
■ letzteres erst recht gilt, wenn z.B. der neue IAD Femtocell-fähig oder eine Basis-Station eines anderen Netzes ist.

**Abbildung 5p**: Neue rudimentäre Konnektivität während das Telefon anderswo eingecheckt ist und keinen eigentlichen PTKV unterstützt. Genauer besehen, kann hier das in das potentielle HO direkt involvierte Endsystem einen PTKV durchaus unterstützen (wie in **5o**) - wenn es nämlich dazu fähig ist, gleichzeitig in zwei Netze eingecheckt zwei PTKVs, z.B. je einen über ein Netz, zu unterstützen (was ggf. schon beim Verständnis von **5o** zu berücksichtigen ist. Insbesondere kann einer dieser beiden PTKVs ein "IPTV"-TKV oder "IPRadio"-TKV oder ein anderer "IPBroadcast"-TKV o.Ä. sein, der ein anderes Netz oder ein anderes Netzmerkmal benutzt als der andere PTKV).

Erläutert werden soll hier vielmehr vor allem die mögliche Berücksichtigung der neuen IAD-Konnektivität in einem HOCIS-Verfahren hinsichtlich eines noch nicht bestehenden PTKVs, wenn das in das potentielle HO direkt involvierte Endsystem diese o.g. Fähigkeit nicht besitzt.

Dementsprechend braucht **5p** nur den IAD zu betrachten, bei dem dieses Endsystem gerade eingecheckt ist (und der ggf. auch für eine Basis-Station irgendeines GSM/CDMA/UMTS/Wimax/ Satelliten/....-Netzes steht), sowie den neuen IAD.

Hier bedarf es zunächst des Verständnisses, dass das in ein HO direkt involvierte Telefon auch bereits in dieser Situation - wenn es also einen "eigentlichen" PTKV zwischen menschlichen TLNs, wie er vorstehend implizit i.d.R. angenommen wurde, nicht oder noch nicht gibt - einen Anspruch-1-gemäßen PTKV unterstützt: Das ist der "Admin-PTKV", den der menschliche Telefon-Benutzer beim Einchecken seines Telefons beim IAD (in **5p** rechts oben ausgewiesen) zwischen sich und dem Automaten-TLN dieses IADs hergestellt hat (mit dem er seit diesem Einchecken bis zu seinem Auschecken aus diesem Netz explizit und/oder implizit zusammenarbeitet) und der die ursprüngliche rudimentäre Konnektivität des Telefons (auf der L1) ggf. zu dessen Internet-Konnektivität (auf der L1-L3) erweitert.

In dieser Patentanmeldung kann also ein eigentlicher PTKV mit einem TLN oft erst beginnen, - i.d.R. wenn er mobil ist - nachdem es für ihn einen laufenden Admin-PTKV mit z.B. einem IAD (siehe Abschnitt **B**.) gibt, d.h. nach seinem erfolgreichen Einchecken bei diesem IAD mittels dieses Admin-PTKVs.

Demnach gibt es bereits in sämtlichen vorstehend erläuterten **Abbildungen 5** für den in ein HO direkt involvierten TLN den laufenden Admin-PTKV - der jedoch erst hier betrachtet zu werden braucht, um zu zeigen, dass und wie der Anspruch-1-Wortlaut/Sinngehalt auch diese und die nachfolgenden TK-Konfigurationen hinsichtlich des direkt involvierten TLNs erfasst. Man beachte, dass der Anspruch 1 nicht erfordert, dass sein PTKV ein Mensch/Mensch-PTKV o. Ä. sei (mehr dazu siehe den nachfolgenden Kommentar zur **Anspruchs-Gruppe 70-79**).

Noch einfacher/deutlicher ersichtlich/gegeben ist dieses a priori Bestehen des Anspruch-1-gemäßen Admin-PTKVs (ggf. bereits laufend und dann möglicherweise zusätzlich zu einem mit seiner Hilfe eingerichteten eigentlichen PTKV), wenn er unmittelbar nach dem Einchecken beim (in **5p** rechts oben ausgewiesenen) IAD und vor dem Start des ersten eigentlichen PTKVs bereits eine weitere "Admin-End-to-End-Kommunikationsanwendung" startet, um erst mit deren Hilfe ggf. mindestens einen eigentlichen PTKV zu starten - z.B. eine "Netsurfing-Verbindung" (als diese Admin-End-to-End-Kommunikationsanwendung) zwischen dem direkt involvierten Telefon und einem dessen "Home-IADs".

Im Übrigen gilt der letzte Absatz (mit seinen 3 Aufzählungspunkten) der Erläuterung zu **5o** auch für diese TK-Konfiguration.

**Abbildung 5q**&**r:** Neue rudimentäre IAD-Konnektivität während das Telefon nicht eingecheckt ist. Genauer besehen, kann hier das Endsystem durchaus irgendwo eingecheckt sein, wenn es die Fähigkeit besitzt, in zwei Netze gleichzeitig eingecheckt zu sein (sodass es zwei nebenläufige Admin-PTKVs mit deren beiden IADs, jeweils mindestens einen pro Netz, unterstützen kann). Dabei braucht nun dieses Endsystem - abweichend von **5p** - nicht dazu geeignet zu sein, über beide Netzte gleichzeitig zusätzlich je einen eigentlichen PTKV zu betreiben, unabhängig voneinander oder nicht.

Erläutert wird hier vielmehr der HOCIS für ein Endsystem, das die vorstehend beschriebene Fähigkeit nicht besitzt, unmittelbar nach dessen Feststellen seiner neuen rudimentären IAD-Konnektivität (wobei der IAD wiederum ggf. für eine Basis-Station irgendeines GSM/CDMA/UMTS/ Wimax/Satelliten/....-Netzes steht), d.h. bei seinem unmittelbar an dieses Feststellen anschließenden potentiellen und/oder aktuellen Einchecken in dieses IAD - wodurch das Endsystem seine rudimentäre Konnektivität erweitert zur Internet-Konnektivität seines Benutzers (und diese z.B. per Netsurfing-Kommunikationsanwendung von vom herein unterstützt), wie nun erläutert wird.

Um dies zu verdeutlichen, zeigt **5q** ein Endsystem mit rudimentärer Konnektivität nur zu einem IAD, über das (d.h.: über dessen Netz) das erstere seinem TLN Internet-Konnektivität ermöglichen kann - während **5r** zeigt, dass es rudimentäre Konnektivität zu mehreren IADs haben kann, es aber seinem TLN die Internet-Konnektivität trotzdem nur über eines dieser IADs ermöglichen kann (obwohl es vor dem tatsächlichen Herstellen dieser Internet-Konnektivität über genau eines dieser IADs die Herstellungs-Möglichkeit/-Unmöglichkeit seiner Internet-Konnektivität über mindestens ein weiteres IAD feststellte, womöglich nebenläufig).

Nach der Erläuterung zu **5p** sieht man leicht, dass ein Endsystem sogar in dieser Situation - wenn es noch in gar kein Netz eingecheckt ist, es aber bereits eine rudimentäre Konnektivität zu einem Netz festgestellt hat - bereits einen Anspruch-1-gemäßen PTKV unterstützt, nämlich den Admin-PTKV, der bei **5p** bereits erläutert wurde. Dieser Admin-PTKV besteht ja definitionsgemäß für den TLN dieses Endsystems seit dem Zeitpunkt der Feststellung dieser rudimentären Konnektivität für/in diesem/dieses Endsystem/s (siehe Abschnitt **B**.). Zur Erinnerung: Dieser Admin-PTKV hat zum Ziel, über den automatisierten TLN des neuen IADs die Internet-Konnektivität für den (i.d.R. menschlichen) TLN des in das rudimentäre HO involvierten PTKV-Endsystems - und in Zusammenarbeit mit diesem TLN - herzustellen, sie aufrechtzuerhalten und bei seinem Auschecken aus diesem IAD zu beenden.

Der Anspruch-1-gemäße HOCIS während dieser Herstellung der Internet-Konnektivität durch den Admin-PTKV bietet dem TLN (in dem PTKV-Endsystem, das in das rudimentäre HO involviert ist) in der Tat i.d.R. eine wesentliche Orientierungs- und Entscheidungshilfe. Man versteht dies sofort, wenn man bedenkt, dass (siehe Abschnitt **B.** und z.B. die Unteransprüche 70-79)
■ zum Zeitpunkt der Feststellung seiner neuen rudimentären Konnektivität durch das PTKV-Endsystem, dieses für seinen TLN - genauer: der M-Lo dieses PTKV-Endsystems für seinen TLN - bereits
   ○ einerseits einen Anspruch-1-gemäßen Admin-PTKV gestartet hat (s.o.),
   ○ andererseits dies nicht der erste Anspruch-1-gemäße Admin-PTKV-Start zu sein braucht, sondern zu diesem Zeitpunkt mindestens ein anderer nebenläufiger Admin-PTKV von diesem M-Lo bereits gestartet worden sein kann (was etwa im Fall einander überlappender WLANs passieren kann) sowie
■ dieser TLN von einer potentiellen Internet-Konnektivität (u.U. mit Kommunikationsanwendung, s.o.) über ein neues IAD und dessen Netz i.d.R.
   ○ nur dann (wenn überhaupt) etwas erfahren möchte vom - zum rudimentären HO eines Admin-PTKV gehörigen - "Admin-STKV", wenn diese Internet-Konnektivität (ggf. einschließlich Kommunikationsanwendung) tatsächlich herstellbar ist, während ihn eine neue rudimentäre Konnektivität selbst i.d.R. überhaupt nicht interessiert, insbesondere wenn sie nicht die dafür vorgesehene Kommunikationsanwendung (z.B. nicht die o.g. dafür vorgesehene Netsurfing-Verbindung) zu nutzen gestattet (Man beachte dabei: Das Feststellen seiner rudimentären Konnektivität durch ein Admin-PTKV-Endsystem ist gleichbedeutend mit seinem Feststellen des Vorliegens eines HOCIS-Signals durch/in ihn/ihm, und damit gleichbedeutend mit dem Start des zum rudimentären HO dieses PTKVs gehörigen Admin-STKVs), und in diesem Fall
   ○ Gebrauch machen können möchte entweder voll-automatisiert oder per einfachster Maßnahme, d.h. etwa per "zero touch" bzw. "one touch" o.Ä. mindestens eines Geräts in mindestens einem seiner TLN-PTKV- und/oder TLN-STKV-Endsysteme.

Die vorstehenden Erläuterungen zeigen unmissverständlich, dass das HOCIS-Verfahren dem Benutzer z.B. eines Telefons tatsächlich wesentliche Orientierungs-/Entscheidungshilfen und Vereinfachung verschafft, wenn er die HOs der verschiedenen Varianten nutzen will bzw. bewerten will bzw. vermeiden will bzw. hinterfragen will bzw. ... bzw. hinnehmen muss, die in den **Abbildungen 5** skizziert und vorstehend erläutert sind. Angesichts der für die Wirtschaftsregionen absehbaren allgegenwärtigen und permanenten Überflutung von jederman und jedenorts durch TK-Dienste-Angebote einerseits und andererseits angesichts ständig wachsender unvermeidlicher Mobilität aller Menschen in diesen Regionen auch noch deren schnell wachsender Populationen sind insbesondere die TK-Konfigurationen **5o-r** (und deren Verständnis) bedeutsam: Aus ihnen ist besonders klar ersichtlich, dass und wie das HOCIS-Verfahren und damit ausgestattete TK-Endgeräte es mobilen TK-Dienste-Benutzern erleichtern, diese Flut möglichst einfach zu nutzen - indem es nämlich ermöglicht, von ihnen alle TK-technischen Einzelinformationen fernzuhalten (wie etwa Informationen hinsichtlich ihrer rudimentärer Konnektivitäten) und ihnen dafür automatisiert mehr und vom Laien der TK-Technik erwarteten und seinen Bedürfnissen entsprechend konfigurierbaren HO-"convenience information support" zur Verfügung zu stellen (wie etwa HO-Entscheidungsoptionen, die vorab und für den Benutzer unsichtbar hinsichtlich ihrer technischen und wirtschaftlichen Qualität geprüft und als gut befunden wurden, und automatisiert oder per onetouch des TK-Endgeräts durch dessen Benutzer von diesem genutzt werden können - womit ihm der allergrößte Teil der psychischen und physischen Komplexität ebenso wie der mentalen weitreichenden Unvollständigkeit, die ihm in heutigen Benutzeroberflächen zum Umgang mit dieser Flut zur Verfügung stünden, erspart wird).

**D.4.10.** Von den vorstehenden Erörterungen spezieller beispielhafter Beteiligungs-Strukturen der HOCIS-OSI-Verbindungen sollte klar sein: Sie vereinfachen lediglich das Gewinnen eines umfassenden und präzisen Verständnisses des Wesens der/des HOCIS-Verfahren/s. D.h., dass sie und ihre **Abbildungen 5** keine Auffächerung des Anspruch-1-Wortlauts/Sinngehalts leisten können - sondern diese nehmen erst dessen viele Unteransprüche und Unteranspruchsgruppen vor. Jedoch sollten diese vorstehenden Erläuterungen auch beispielhaft aufzeigen, dass es für jedes der vielen Anspruch-1-gemäßen HOCIS-Verfahren nochmals eine Vielzahl von abstrakten Implementierungsvarianten gibt, wobei diese insbesondere die verschiedensten Verteilungen von HOCIS-Funktionalitäten auf weitere Server und TK-Netze umfassen.

**D.4.11.** Nach dieser Erörterung solcher beispielhafter Beteiligungs-Strukturen finden sich nachfolgend noch einige allgemeine - zum Teil bereits redundante - Anmerkungen/Erinnerungen zum Anspruch-1-gemäßen HOCIS-Verfahren bzw. zu dessen Startbedingungen.
■ Die Übergabe HO-relevanter Information alias HOCIS-Information alias STKV-Information an einen PTKV-TLN kann für deren Ziel-PTKV- oder -STKV-Endgerät
   ○ Weitgehend transparent (= unsichtbar) erfolgen, indem sie der sie zur Übergabe an einen TLN bereitstellende Modul im TLN- oder einem anderen Endsystem u.A. in der PTKV-Sprache dieses TLNs und über das vom PTKV benutzte Netz übergibt, sodass mindestens ein unter diesem TLN liegendes Gerät dieses Ziel-PTKV-/STKV-Endsystems sie nicht als HOCIS-Information erkennen kann sondern erst dieser PTKV-TLN, und
   ○ sichtbar erfolgen, z.B. indem ein M-Lo sie an einen M-Lo des Ziel-PTKV- oder -STKV-Endgeräts als HOCIS-PDU (und womöglich auch über ein anderes Netz als das vom PTKV benutzte) übergibt, und erst letzterer M-Lo eine TLN-wahmehmbare HO-relevante Information daraus extrahiert und an den PTKV-TLN übergibt.
■ Ein STKV muss mindestens einmal HO-relevante Information eines nicht-menschlichen M(HOCIS) an einen PTKV-TLN irgendwann übergeben. Ob und wann eine so übergebene Information HO-relevant ist oder nicht, braucht hier im Einzelnen nicht geklärt zu werden - es genügt, dass dies i.d.R. offensichtlich ist und jedenfalls der maßgebliche Fachmann dies im Streitfall erkennen kann. Er wird dann insbesondere berücksichtigen, dass eine HO-relevante Information in einer Vielzahl
   ○ sowohl unterschiedlichster Codierungen und/oder unterschiedlichster Darstellungen
   ○ als auch unterschiedlichster Kombinationen/Überlagerungen mit anderen und/oder unterschiedlichster Filter/Projektionen auf andere Informationen

   in Erscheinung treten kann, von denen keine sie zur nicht-HO-relevanten Information macht, solange sie ihr Ziel-TLN als solche letztendlich erkennen kann.
■ Diese Übergabe HO-relevanter Information an den PTKV-TLN kann
   ○ deren - ihr vorausgehende - Übertragung über mindestens ein Netz in dessen PTKV/STKV-Endsystem erfordern, also **"mittelbar erfolgen",** wobei die Modalitäten einer solchen Übertragung für ein HOCIS-Verfahren irrelevant sind (und die Übertragung über ein Netz irrelevant ist, falls die HO-relevante Information von einem virtuellen M(HOCIS) übergeben wird, siehe die Erläuterung zu **Abbildung 5i**). Dieser Fall liegt vor, wenn der PTKV-TLN in dieses HO indirekt involviert ist.
   ○ **"unmittelbar erfolgen"** insofern, als sie in dessen PTKV/STKV-Endsystem selbst (oder in mindestens einem dessen virtuellen M(HOCIS), siehe die Erläuterung zu **Abbildung 5i**) entstanden sein kann. Dieser Fall liegt vor, wenn der PTKV-TLN in dieses HO direkt involviert ist. Die unmittelbar übergebene HO-relevanter Information ist dann Ergebnis dessen (bzw. dessen virtuellen M(HOCIS)) mindestens einen **"HOCIS-Versuchs"** über mindestens ein Netz mit mindestens einem paaren M(HOCIS) eine **"HOCIS-Verbindung"** herzustellen, d.h. eine **"HOCIS-OSI-Verbindung",** die geeignet und fähig ist, dem TLN mindestens eine HO-relevante Information - wie im Abschnitt **B.** erläutert - zu übergeben (andernfalls sie keine HOCIS-OSI-Verbindung ist).
      D.h., dass der M(HOCIS) dessen PTKV/STKV-Endsystems (oder dessen virtueller M(HOCIS)) mindestens eine PDU an letzteres System aussandte um seine aktuelle Konnektivität zu letzterem zu verbessern. Das Ergebnis eines solchen aktiven Kommunikationsversuchs dieses M(HOCIS) - um den Erhalt HO-relevanter Information sicherzustellen - kann ganz unterschiedlich ausfallen: Z.B. kann er
      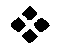 nicht die mindestens eine von ihm daraufhin erwartete HOCIS-PDU empfangen, um an dieser TLN-Konnektivitäts-Verbesserung zu letzterem System weiterarbeiten zu können,oder
      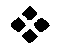 irgendwelche Protokolle abwickeln und die TLN-Konnektivität zur **"HOCIS-Konnektivität"** auf der Grundlage einer HOCIS-OSI-Verbindung verbessern.

   In allen Fällen kann eine Übergabe einer - von diesem M(HOCIS) stammenden - und dieses Ergebnis beinhaltenden HO-relevanten Information an den PTKV-TLN erfolgen.
   Die geklammerten Textpassagen im vorstehenden Absatz weisen also explizit darauf hin, dass ein virtueller M(HOCIS) eines TLN-PTKV/STKV-Endsystems bzw. einer dessen mindestens einer PTKV-TLN einen HOCIS-Versuch gestartet haben kann. Er heißt dann **"virtueller HOCIS-Versuch",** andernfalls **"realer HOCIS-Versuch"** dieses Systems/TLNs. In einem virtuellen HOCIS-Versuch kann der virtuelle M(HOCIS) z.B. in einem IAD angesiedelt sein, in dessen WLAN ein Nicht-HOCIS-FMC-Telefon gerade eingecheckt ist - und die "unmittelbare Übergabe" der HO-relevanten Information an den PTKV-TLN (Telefon-Benutzer) dürfte dann i.d.R. über dessen Sprachkanal erfolgen. (Diese Übergabe-Aspekte werden im Kommentar zu Anspruch 80 nochmals und vertiefend behandelt.)
■ Speziell hinsichtlich der Bedeutung des Terminus "HOCIS-Signal" wird angemerkt/erinnert:
   ○ Ein HOCIS-Signal ist als HO-relevante Information - ebenso wie jede HOCIS-PDU, HOCIS-SDU, HOCIS-... - ein abstrakter Träger von digital dargestellter Information zu/über/für ein HO - wie im **Abschnitt B.** bereits ausgeführt - und kann "Value-Parameter" und/oder "Reference-Parameter" enthalten. Erstere enthalten ihren Parameterwert selbst, während letztere auf diesen Wert bzw. die ihn identifizierte Stelle verweisen. Damit ein solches HO-Signal in mindestens einem Endsystems vorliegt, braucht dort kein Wert seines möglichen mindestens einen Reference-Parameters vorzuliegen.
   ○ Das Vorliegen eines HOCIS-Signals oder das Bereitstellen einer HO-relevanten Information in einem Endgerät/-system kommt durch dessen/deren lokale Erzeugung und/oder lokalen Erhalt und/oder dessen/deren Empfang über ein Netz zustande, deren technische und zeitliche Modalitäten hier nicht diskutiert zu werden brauchen.
   ○ Ein solcher HOCIS-Signal- bzw. HO-relevante-Information-Erhalt/Empfang/Versand kann von einem/einer oder an einen/eine Vorgang/Dienst/Anwendung erfolgen, der/die mit dem erfindungsgemäßen HOCIS-Verfahren unmittelbar nichts zu tun hat und der/die deshalb hier nicht betrachtet wird. Aber ein/e solche/r Vorgang/Dienst/Anwendung benutzt durch dieses lokale oder nicht-lokale Erhalten/Übergeben bzw. Absenden/Empfangen über ein Netz das erfindungsgemäße Verfahren, greift also in den Schutzbereich des Anspruchs 1 ein - und dies gilt auch, wenn es dabei nur um ein/e Teil-HOCIS-Signal oder eine HO-relevante Teil-Information geht (dann jedoch ggf. nicht alleinverantwortlich).
■ Weiterhin wird daran erinnert, dass die Termini HOCIS-Vorgang (alias HOCIS-TKV) und STKV in dieser Schrift Synonyme sind - also beide insbesondere keine "Zwei-TLN-Vorgänge" zu sein brauchen, d.h. "n-TLN-Vorgänge" sein können mit n#2. Dementsprechend
   ○ kann der 1. Absatz des Anspruch-1-Wortlauts abgeändert werden in
      *"Ein **Verfahren** zum Erbringen eines "handover convenience information support" (HOCIS) für einen Teilnehmer (TLN) mindestens eines - diese*/*diesen realisierenden - Sekundär-Telekommunikations-Vorgangs (STKVs) hinsichtlich mindestens eines HOs in mindestens einem des mindestens einen ursächlichen Primär-Telekommunikations-Vorgangs (PTKVs) dieses TLNs, wobei ........."*
      ohne den Anspruch-1-Sinngehalt zu ändern, sodass das HOCIS-Verfahren begründeterweise auch bezeichnet werden darf als ein STKV-Verfahren.
   ○ kann der einleitende Wortlaut aller Verfahrens-Unteransprüche "Ein HOCIS-Verfahren" sowohl einen einzigen zugehörigen HOCIS-TKV alias STKV bezeichnen oder die Gesamtheit aller zugehörigen HOCIS-TKVs alias STKVs.
■ Erinnert wird auch an den Hinweis am Ende des Abschnitts **B.,** dass das erfindungsgemäße Verfahren nicht nur in ein HO eines PTKVs indirekt involvierte PTKV-TLNs unterstützen kann, sondern auch einen in dieses HO direkt involvierten PTKV-TLN: Der Fall **"j."** im Anspruch 1 entspricht einem indirekt involvierten TLN, der Fall **"jj."** Im Anspruch 1 einem direkt involvierten TLN. Der erstere Fall wird vor allem in den Unteransprüchen bis #69 aufgefächert und vor allem in den **Abbildungen 5c-i** erläutert, der zweite Fall wird vor allem in den Unteransprüchen bis #70-79 aufgefächert und vor allem in den **Abbildungen 5i-r** erläutert.
■ Die verschiedenen "oder" im Anspruch-1-Wortlaut sind meistens insofern irrelevant, als eine HO-relevante Information ohnehin nur einem STKV bekannt sein kann - sie erinnern dann also lediglich daran, dass in einer materiellen Implementierung eines HOCIS-Verfahrens die materielle Implementierung eines PTKVs die Bereitstellung und Übergabe einer HO-relevanten Information eines STKVs bewerkstelligen kann, insbesondere die materielle Implementierung eines eigentlichen M-Lo und/oder ein es uneigentlichen M-Lo bzw. M-Hi und/oder ..... Bei genauerem Hinsehen sieht man, dass ein nur auf das Abstrakte reduzierter Anspruch-1-Wortlaut die Erläuterung von begrifflichen Einzelheiten erfordert, deren Notwendigkeit durch diesen Bezug in ihm auf Aspekte der materiellen Implementierung des HOCIS-Verfahrens entfällt.
■ Schließlich sei auch hier nochmals darauf hingewiesen, dass der Anspruch-1-Wortlaut/Sinngehalt nirgends besagt, dass er sich z.B. immer auf einen eigentlichen PTKV bezöge, er also irgendwann die Existenz und seine Bezugnahme auf einen Admin-PTKV ausschlösse. Dass eine solche Beschränkung unzulässig wäre ist in den Unteransprüchen 90-100 und in den **Abbildungen 5o-r** explizit elaboriert.

**D.4.12.** Wie bereits am Ende von Unterabschnitt **D.4.1.** angekündigt, können die Anspruchs-Wortlaute/Sinngehalte dieser Patentanmeldung - aus Gründen deren Vereinfachung - auf die Zuhilfenahme der Untergliederung eines M(HOCIS) in M-Lo und M-Hi verzichten. Die vorangehenden Ausführungen dieses Unterabschnitts **D.4.** führen nämlich zu der Folgerung, dass das Wesentliche der von ihnen beschriebenen Gegebenheiten mittels einiger einfacher M(HOCIS)-Attribute erfasst werden kann: Zu diesem Zweck wird definiert:
■ Ein **"Gesamt"-M(HOCIS)** steht für einen oder mehrere der nachfolgend definierten M(HOCIS).
■ Ein **"intelligenter"** M(HOCIS) steht für dessen oben definierte M-Hi-Funktionalität.
■ Ein **"nicht-intelligenter"** M(HOCIS) steht für dessen oben definierte M-Lo-Funktionalität.
   Wichtig ist die Abgrenzung zwischen beiden Funktionalitäten: Jede M(HOCIS)-Funktion, an deren Ausführung kein Mensch beteiligt ist oder zu sein braucht, - was jedenfalls der maßgebliche Fachmann beurteilen kann - darf in dieser Patentanmeldung als M-Lo-Funktion angesehen werden (selbst wenn die Art ihrer "Intelligenz" dem einen oder anderen irgendwie "menschlich" zu sein anmuten sollte) und gehört dann zu dessen nicht intelligentem M(HOCIS). "Ein nicht-menschlicher M(HOCIS)" ist also ein Synonym für "ein nicht-intelligenter M(HOCIS)".
■ Ein **"virtueller"** M(HOCIS) steht für dessen oben (in der Erläuterung zu **Abbildung 5i**) definierte virtuelle M-Lo-Funktionalität und deren Lokalität - ist also per definitionem nicht-intelligent.

Diese "intelligenter-/nicht-intelligenter-M(HOCIS)"-Termini können in allen vorstehenden Erläuterungen die "M-Lo-/M-Hi"-Termini 1-zu-1 ersetzen.

Diese Unterabschnitte **D.2.-D.4.** abschließend wird darauf hingewiesen, dass die in den nachgeordneten Ansprüchen praktizierten Wortlaut-Verkürzungen gegenüber dem Anspruch-1-Wortlaut nur deren Lesbarkeit vereinfachen sollen - insbesondere durch gelegentliches Weglassen der penetranten "mindestens"-Floskel - also nichts zu tun haben mit einer Verallgemeinerung des Anspruch-1-Sinngehalts. Gleiches gilt sinngemäß erst Recht für die mit steigender Anspruchs-Gruppen-Nummern i.d.R. kürzer werdenden nachfolgenden Anspruchs-Gruppen-Kommentare: Das in einem Kommentar zu Anspruch 1 einmal Gesagte behält seine Gültigkeit auch in nachfolgenden Kommentaren, braucht also nicht nur nicht ständig wiederholt zu werden, sondern gestattet auch eben solche Lesbarkeit-/Verständtichkeit-vereinfachenden Sprachungenauigkeiten der Kommentare.

### D.5. Weitere ins Einzelne gehende Erläuterungen zu Ansprüchen und Anspruchs-Gruppen

**Zur Anspruchs-Gruppe 2-9:** Hier werden einige implizit angenommene unterschiedliche Merkmale des dem erfindungsgemäßen HOCIS-Verfahren zugrundeliegenden PTKVs und/oder dessen/deren mindestens einen Endsystems explizit offenbart.

**Zur Anspruchs-Gruppe 10-19:** Sie wurde bereits im Unterabschnitt D.1. ausführlich erörtert. *"Sie identifiziert die Merkmale der Spezialfälle-Klasse dieses HOCIS-Verfahrens gekennzeichnet durch* ***Überlappungen von Start und*/*oder Ausführung und*/*****oder Terminierung der 3 verschiedenen Vorgänge darin** und deren Kombinationsmöglichkeiten mittels der von ihr explizit offenbarten Spezialfälle des erfindungsgemäßen HOCIS-Verfahrens."*

Die nachfolgenden Kommentare zu den einzelnen Anspruchs-Gruppen müssten jeweils mit der gleichen Anspruchs-Gruppen-unabhängigen Einleitungsfloskel - eben apostrophiert und kursiv geschrieben - beginnen, mit Ausnahme deren fett geschriebenen Teils, der Anspruchs-Gruppenspezifisch ist. An diese stereotype Anspruchs-Gruppen-unabhängige Passage wird nachfolgend jedoch lediglich per jeweils einleitender 4 Punkte "...." erinnert, gefolgt von einem apostrophierten sowie kursiv und fett geschriebenen Anspruchs-Gruppen-spezifischen Analogon zu dem obigen fetten Text.

### Zur Anspruchs-Gruppe 20-23: .... "Überlagerungen allein von HOs".

Diese Anspruchs-Gruppe zeigt, dass es praktisch unmöglich ist, in dieser Patentanmeldung alle bei ihr möglichen Varianten (gemäß Unterabschnitt **D.1**.) vollständig aufzuzählen oder auch nur ihnen zugrunde liegenden "Varianten-Charakteristika" auf einfach verständliche Weise kurz und bündig darzustellen - schon allein wegen deren großer Anzahl bzw. Komplexität. Insbesondere sei angemerkt, dass diese Anspruchs-Gruppe darauf hinweist, dass der Anspruch 1 keinerlei Beschränkung auf PTKVs mit nur einem HO beinhaltet und/oder mit nur je einem in ein HO direkt oder indirekt involvierten Endsystem (siehe Abschnitt **B.** hierzu).

### Zur Anspruchs-Gruppe 24-26: .... "die Konnektivität des direkt involvierten Endsystems".

Die in dieser Anspruchs-Gruppe adressierten Einsatz-Szenarien-Typen des HOCIS-Verfahrens werden in den letzten Verfahrens-Anspruchs-Gruppen weitergehend erläutert.
**Zur Anspruchs-Gruppe 27-33: .... "Spezifika der Netze".**
**Zur Anspruchs-Gruppe 34-43: .... "verschiedene Abstraktionsebenen und Netze"** und **"Modalitäten von PTKV-PDUs und/oder STKV-PDUs".**
**Zur Anspruchs-Gruppe 44-56: .... "HOCIS und/oder Reaktion eines Endgeräts und/oder dessen Benutzung von/durch mindestens eine/n Nicht-HOCIS- Anwendung/Vorgang".**
**Zur Anspruchs-Gruppe 57-65: .... "Versand/Empfang/Austausch HO-relevanter Info".**
**Zur Anspruchs-Gruppe 66-69: .... "qualitative Ursachen von HO-relevanter Info".**
**Zur Anspruchs-Gruppe 70-79: .... "HOCIS bei IAD-Konnektivität und IAD-Unterstützung".**

An sich sind dies zwei Anspruchs-Gruppen, wie gleich ersichtlich wird. Für beide gilt, dass es nur eine - allerdings sehr strukturierte - Beschränkung des Sinngehalts des abhängigen Anspruchs 70 gegenüber dem des Anspruchs 1 gibt und dass diese in dessen Wortlaut-Passage
*"..... nicht-intelligenten M(HOCIS), wobei*
■ *letzterer in mindestens einem IAD oder Server und*/*oder in diesem TLN-PTKV*/*STKV-Endsystems angesiedelt ist und*/*oder*
■ *die HO-relevante Information an den TLN besagt, dass er nach dem HO in ein neues Netz dort tatsächlich* ..........."
vorgenommen wird, nämlich
+) der nicht-intelligente M(HOCIS) muss nun in einem IAD oder Server angesiedelt sein und/oder in dem PTKV/STKV-Endsystem, in dem dem PTKV-TLN die HO-relevante Information übergeben wird - also in keinem anderen STKV-Endsystem - was die nachfolgend erläuterte Verständnis-Klärung des Anspruch-1-Wortlauts/Sinngehalts erzwingt und/oder
++) die HO-relevante Information des TLNs (d.h. die Nachricht an ihn in dem HOCIS) unterliegt nun klaren weiteren Beschränkungen, u.A. muss
   ○ vor ihrer letztendlichen Übergabe an den TLN mindestens eine (ggf. aufwändige) Prüfung durchgeführt werden - von und/oder mit wem auch immer im bzw. für den STKV - hinsichtlich der ihm irgendwie anzuzeigenden mindestens einen Option (wobei diese Anzeige ggf. mindestens eine weitere TLN-Interaktion, etwa werblicher Art, umfassen kann und/oder Options-spezifisch und/oder sonst wie spezifisch sein kann),
   ○ Options-abhängig nach deren Auswahl (durch wen auch immer) ggf. mindestens eine (ggf. aufwändige) Maßnahme zu deren Realisierung durchgeführt werden - von und/oder mit wem auch immer im bzw. für den STKV - wobei die o.g. weitere TLN-Interaktion auch hier erfolgen kann.

Die obige Beschränkung +) zwingt - zwar erst mittels der Unteransprüche 71-79, worauf aber hier vorab hingewiesen wird - zu dieser o.g. Verständnis-Klärung insofern, als sie zwingt die Unzulässigkeit einiger beschränkender Annahmen über den Anspruch-1-Wortlaut/Sinngehalt zu erkennen, auch wenn sich diese Fehlannahmen bei erster Kenntnisnahme "natürlicherweise" einstellen. Beispielsweise ist auf der Grundlage dieser Beschränkung leichter zu erkennen:
■ In vielen der zugehörigen Szenarien, wie sie die **Abbildungen 5j-r** beispielsweise aufzeigen, kann der Anspruch 1 auf mindestens zwei unterschiedliche Weisen verwirklicht werden, etwa unter Zugrundelegung eines "eigentlichen PTKVs" zum einen und zum anderen eines "Admin-PTKVs" (zu diesen Termini siehe die obigen Erläuterungen zu **Abbildung 5p**). Der Anspruch-1-gemäße PTKV kann sowohl mittels eines eigentlichen PTKVs verwirklicht werden als auch mittels eines Admin-PTKVs.
■ Der Anspruch 1 sagt auch nirgends etwas darüber, ob seine TLN-PTKV- und/oder -STKV-Endsysteme und deren TLNs an der (abstrakten und/oder materiellen) Realisierung von mehreren eigentlichen PTKVs und/oder mehreren Admin-PTKVs b eteiligt sind, nimmt also insofern keine Beschränkung der daraus resultierenden Gestaltungsmöglichkeiten des Anspruch-1-gemäßen Verfahrens vor. Beispielsweise kann deshalb in einem HOCIS-Verfahren mindestens eine HO-relevante Information eines ersten STKVs zu einem ersten dessen PTKV an einen bestimmten TLN, diesem TLN diese Information in einem zweiten STKV zu einem zweiten PTKV dieses HOCIS-Verfahrens übergeben werden, wobei beide STKVs und/oder deren Endsysteme und/oder deren Netze/-Zugangspunkte/-Leistungsmerkmale unterschiedlich sind. Dies hat praktische Bedeutung beispielsweise dann, wenn z.B. die materielle Implementierung des ersten STKV-Endsystems für diesen TLN in Gänze oder teilweise verschieden ist von der des zweiten STKV-Endsystems - die ihrerseits z.B. mit voneinander unterschiedlichen Netzmerkmalen arbeiten.

Im Übrigen ändern die Beschränkungen des Anspruchs 70 nichts daran, dass er sich weiterhin in einem HO auf i.d.R. alle dessen PTKV-TLNs bezieht, sowohl die darin direkt als auch indirekt involvierten TLNs. Dies gilt auch in den beiden nachfolgenden Anspruchs-Gruppen - auch wenn in den zugehörigen **Abbildungen 5i-r** vor allem die direkt involvierten TLNs bzw. deren PTKV/STKV-Endsysteme betrachtet werden.
**Zur Anspruchs-Gruppe 70-75: .... "direkt involvierter M(HOCIS) bei Konnektivität".**
Sie fächert den Anspruch 70 entsprechend den **Abbildungen 5j-n** auf.
**Zur Anspruchs-Gruppe 76-79: .... "dir. involvierter M(HOCIS) bei rudimentärer Konnektivität".**
Sie fächert den Anspruch 70 entsprechend den **Abbildungen 5o-r** auf.
**Zur Anspruchs-Gruppe 80-82:** Der **Anspruch 80** off enbart eine (generische) abstr akte HOCIS-Vorrichtung zur Verwirklichung eines abstrakten HOCIS-Verfahrens, das u.U. allgemeiner ist als das HOCIS-Verfahren gemäß **Anspruch 1** (siehe unten). Der **Unteranspruch 81** beschränkt die Funktionalität dieser Anspruch-80-gemäßen HOCIS-Vorrichtung auf das zur abstrakten Realisierung speziell eines HOCIS-Verfahrens gemäß **Anspruch 1** oder gemäß mindestens eines der **Unteransprüche 2-79** Benötigte.

Das Modell des abstrakten Aufbaus einer abstrakten HOCIS-Vorrichtung und deren HOCIS-Vorrichtungs-Endsysteme bei PTKV-TLNs beschrieb bereits der Unterabschnitt C.6.. Auf Grund des dort erläuterten - funktional selbstverständlich immer denkbaren und daher möglichen - abstrakten resource sharings ist es im Abstrakten irrelevant, ob STKV-Vorrichtungs-Komponenten ohnehin unerlässlicherweise vorhandene PTKV-Vorrichtungs-Komponenten mitbenutzen oder nicht.

Man beachte: Dieser abstrakte Aufbau einer abstrakten HOCIS-Vorrichtung und deren Endsysteme bei PTKV-TLNs gestattet auch materielle Implementierungen alias Ausführungsformen eines abstrakten HOCIS-Vorrichtungs-Endsystems bei einem PTKV-TLN gänzlich oder teilweise in einem dort eigenständigen materiellen HOCIS-Endgerät (d.h. braucht nicht in mindestens einem dort ohnehin vorhandenen physischen PTKV-Endsystem angesiedelt zu sein). Eine solche Separiertheit von materiellen PTKV- und/oder HOCIS-Endgeräten kann - aber braucht nicht - darauf zurückführbar zu sein, dass sie aus materiellen technischen Gründen des resources sharings nicht fähig wären (Dies ist etwa bei einem heutigen "nur-WLAN-Telefon" und einem davon isolierten "nur-GSM-Telefon", zwischen denen ein PTKV in einem HO wechselt, i.d.R. der Fall). Andere Gründe für diese Separiertheit können Inkompatibilitäten aller Arten zwischen PTKV- und/oder STKV-Moduln sein, aber in Zukunft womöglich auch der Wunsch eines TLNs, allen HOCIS und alle HO-relevante Informationen über alle seine PTKVs auf sinnvoll integrierte Weise auf mindestens einem dafür besonders geeigneten HOCIS-Gerät zu erhalten, das deshalb von dem mindestens einen i.d.R. anders konzipierten PTKV-Endgerät (das seinerseits mehrere gleichzeitige verschiedenartige PTKVs über möglicherweise verschiedenartige Netze/-Zugangspunkte/-Dienstmerkmale unterhalten kann) aus Convenience-Gründen separiert sein sollte.

Als nächstes sei bestätigt, dass die beiden Funktionen einer HOCIS-Vorrichtung "mittelbare bzw. unmittelbare Übergabe (einer HO-relevanten Information durch irgendein Mittel an einen TLN)" und "unmittelbares Nutzen (des eine HO-relevante Information übergebenden Mittels durch einen TLN)" jeweils das bewirken, was sie intuitiv suggerieren:
■ Die **"unmittelbare Übergabe"** einer HO-relevanten Information durch ein M(HOCIS)-Mittel oder Bereitstellungsmittel an einen TLN bewirkt, dass es diese Übergabe unmittelbar an den TLN vornimmt - was nur möglich ist, wenn dieser TLN und dieses Mittel dem gleichen OSI-Endsystem angehören oder dieses Mittel dessen virtueller M(HOCIS) ist (siehe die obige Erläuterung zu **Abbildung 5i**).
   Andernfalls - also gehören TLN und Mittel nicht dem gleichen OSI-Endsystem an und ist das Mittel kein virtueller M(HOCIS) des TLN-OSI-Endsystems -erfordert ihre Übergabe durch das Mittel an den TLN das Dazwischenschalten eines paaren Mittels zwischen beiden im TLN-OSI-Endsystem und ist deshalb eine **"mittelbare Übergabe".**
■ Das **"unmittelbare Nutzen"** des (eine HO-relevante Information übergebenden) Mittels durch einen TLN bewirkt, dass unmittelbar der TLN an der Ausführung der unmittelbare-Übergabe-Funktion beteiligt ist - was naheliegenderweise wiederum nur unter den vorstehend diskutierten Bedingungen möglich ist.

Schließlich sei noch das Prinzipielle an den Vorrichtungs-Hauptansprüchen klargestellt - und dessen fundamentaler Unterschied zum Prinzipiellen des Verfahrens-Hauptanspruchs. Demnach enthält eine Anspruch-(80-82)-gemäße HOCIS-Vorrichtung eine Menge von Anspruch-(80-82)-gemäßen Mitteln. Diese Mittel sind mindestens Mittel-intern verbunden und miteinander mittels mindestens eines Netzes, das aber als Selbstverständlichkeit in die o.g. Vorrichtungs-Hauptanspruchs-Wortlaute nicht aufgenommen wurde, ebenso wie die diese Mittel realisierenden Computer-Systeme. Die Mittel dieser Menge sind dazu geeignet, in ihrer - geeignet gesteuerten - Zusammenarbeit miteinander und mit PTKV-TLNs, letzteren einen gewünschten HOCIS hinsichtlich HOs in diesen PTKVs zu erbringen. Eine Vorrichtung, die eine solche Menge von Mitteln enthält, heißt HOCIS-Vorrichtung. Man beachte, dass von einer HOCIS-Vorrichtung allein, also ohne eine solche Steuerung, nicht bekannt ist, dass sie etwas Sinnvolles täte.

Vielmehr geschieht eine HOCIS-Erbringung für die eine HOCIS-Vorrichtung nutzenden TLNs erst mittels geeigneter Steuerung der Zusammenarbeit deren Mittel und TLNs. Ein Vorgang einer so gesteuerten HOCIS-Erbringung heißt in dieser Schrift HOCIS-TKV alias STKV. Ein Verfahren, dem entsprechend diese Steuerung des Mittel-Einsatzes in dieser Zusammenarbeit erfolgt, heißt HOCIS-Verfahren. Man beachte, dass ein solches Steuerungsverfahren nicht auf die Mittel selbst explizit Bezug zu nehmen braucht, sondern den Einsatz deren jeweiliger Funktionalitäten steuern (und dabei also auf die Mittel implizit Bezug nehmen) kann - wie es in dieser Schrift geschieht.

Jedem Steuerungs-Verfahren einer HOCIS-Vorrichtung - zur Realisierung einer/s gewünschten HOCIS-Erbringung/STKVs hinsichtlich mindestens eines HOs - auferlegen die Vorrichtungs-Hauptansprüche, die diese HOCIS-Vorrichtung verwirklicht, klare Beschränkungen hinsichtlich des Austauschs (der Vorrichtungs-Mittel miteinander und mit den die HOCIS-Vorrichtung nutzenden PTKV-TLNs) von HO-relevanter Information in einem auf seiner Steuerung beruhenden STKV. Diese Beschränkungen gehen so weit, dass die allermeisten (trotzdem noch möglichen und praktisch interessanten) Steuerungs-Verfahren den Hauptanspruch 1 verwirklichen, also erfindungsgemäße HOCIS-Verfahren sind. Und umgekehrt sieht man leicht, dass jedes Hauptanspruch-1-gemäße HOCIS-Verfahren tatsächlich dazu geeignet ist, eine einem Vorrichtungs-Hauptanspruch gemäße HOCIS-Vorrichtung so zu steuern, dass sie für sie nutzende PTKV-TLNs einen gewünschten HOCIS erbringt.

Die drei vorstehenden Absätze haben den o.g. fundamentalen Unterschied zwischen einer erfindungsgemäßen HOCIS-Vorrichtung und einem erfindungsgemäßen HOCIS-Verfahren klargestellt.
**Zur Anspruchs-Gruppe 83-91: ...."HOCIS-Mittel bedingte Varianten".**

Diese Unteransprüche machen einige Vorrichtungs-typische Merkmale bzw. Merkmale-Kombinationen explizit.

## Patentansprüche

1. **Verfahren** zum Bereitstellen und Übergeben mindestens einer Information für/an mindestens einen ersten menschlichen Teilnehmer TLN eines Primär-Telekommunikations-Vorgangs PTKVs, dessen jeder menschlicher TLN jeweils ein TLN-PTKV-Endsystem mit einem Zugang zu mindestens einem Netz hat, wobei das TLN-PTKV-Endsystem dieses ersten oder eines anderen dieser TLN in dem PTKV ein horizontales oder/und vertikales Handover HO potentiell oder aktuell erfährt oder erfahren hat und das Eintreten eines dieser Ereignisse durch ein entsprechendes Signal angezeigt wird,
**dadurch gekennzeichnet, dass**
■ es in mindestens einem Endsystem einen nicht-menschlichen Modul M(HOCIS) eines Sekundär-Telekommunikations-Vorgang STKV gibt, der diese Information mittels des STKV für diesen ersten TLN bereitstellt und sie ihm bei Vorliegen eines solchen Signals über sein TLN-PTKV-Endsystems übergibt, wobei der STKV einen gegenüber dem PTKV unterschiedlichen Telekommunikationsvorgang darstellt, der nicht der technischen Realisierung eines HOs, sondern allein der Bereitstellung und Übergabe der Information dient, und wobei
■ diese Information HO-relevant ist, d.h. dass sie sich auf dieses HO in diesem PTKV bezieht, jedoch ohne dass die Bereitstellung der Information oder deren Übergabe an den TLN für die Durchführung des HOs erforderlich ist oder diese beeinflusst,
■ die Bereitstellung der Information mittels des STKV Netz-transparent erfolgt, und
■ das Vorliegen dieses Signals mindestens einmal geprüft wird, und bei Vorliegen die Übergabe dieser Information erfolgt.

2. **Verfahren** nach Anspruch 1, **dadurch gekennzeichnet, dass** das nicht-menschliche Modul M(HOCIS) ein erstes und ein zweites Submodul aufweist, wobei das erste Submodul dazu ausgebildet ist, die HO-relevante Information bereitzustellen, und das zweite Submodul dazu ausgebildet ist, die HO-relevante Information dem ersten TLN zu übergeben und hierzu mit diesem zu interagieren.

3. Verfahren nach Anspruch 2, **dadurch gekennzeichnet, dass** das erste und das zweite Submodul mittels einer Beteiligungs-Struktur des STKV zur Übergabe der HO-relevanten Information miteinander kooperieren.

4. **Verfahren** nach einem der vorangehenden Ansprüche, **dadurch gekennzeichnet, dass** die Übergabe der HO-relevanten Information erfolgt, während der PTKV unterbrochen oder nachdem er beendet ist.

5. **Verfahren** nach einem der vorangehenden Ansprüche, **dadurch gekennzeichnet, dass** der STKV imstande ist, eine solche Information für jeden TLN des PTKV bereitzustellen und zu übergeben.

6. **Verfahren** nach einem der vorangehenden Ansprüche, **dadurch gekennzeichnet, dass** mindestens eines der TLN-PTKV-Endsysteme Zugang zu mindestens einem Drahtlos-Netz hat.

7. **Verfahren** nach einem der vorangehenden Ansprüche, **dadurch gekennzeichnet, dass** die Information einem TLN automatisch, d.h. ohne seine Anforderung oder Freigabe, übergeben wird.

8. **Verfahren** nach einem der vorangehenden Ansprüche, **dadurch gekennzeichnet, dass** das TLN-PTKV-Endsystem des ersten und/oder mindestens eines anderen TLNs des PTKVs keine Funktionalität zur Unterstützung des Verfahrens gemäß Anspruch 1 enthält.

9. **Verfahren** nach einem der vorangehenden Ansprüche, **dadurch gekennzeichnet, dass** das Endsystem, das den nicht-menschlichen Modul M(HOCIS) aufweist, nicht im TLN-PTKV-Endsystem angeordnet ist.

10. **Verfahren** nach einem der vorangehenden Ansprüche, **dadurch gekennzeichnet, dass** der erste Teilnehmer in dieses HO indirekt involviert ist, d.h. ein Teilnehmer des PTKV ist, der in das HO nicht direkt involviert ist in dem Sinne, dass das TLN-PTKV-Endsystem eines anderen Teilnehmers des PTKV einen das HO betreffenden Netzwechsel oder Netzzugangspunktwechsel oder Netzleistungsmerkmalwechsel oder Nutzungsmerkmalwechsel potentiell oder aktuell erfährt oder erfahren hat, nicht dagegen das TLN-PTKV-Endsystem des ersten Teilnehmers.

11. **Verfahren** nach einem der vorangehenden Ansprüche, **dadurch gekennzeichnet, dass** der STKV beliebig nebenläufig arbeiten kann zum PTKV.

12. **System** zum Bereitstellen und Übergeben mindestens einer Information für/an mindestens einen ersten menschlichen Teilnehmer TLN eines Primär-Telekommunikations-Vorgangs PTKVs, dessen jeder menschlicher TLN jeweils ein TLN-PTKV-Endsystem mit einem Zugang zu mindestens einem Netz benutzt, wobei das TLN-PTKV-Endsystem dieses ersten oder eines anderen dieser TLN in dem PTKV ein horizontales oder/und vertikales Handover (HO) potentiell oder aktuell erfährt oder erfahren hat und das Eintreten eines dieser Ereignisse durch ein entsprechendes Signal angezeigt wird,
**dadurch gekennzeichnet, dass**
■ das System in mindestens einem Endsystem einen nicht-menschlichen Modul M(HOCIS) eines Sekundär-Telekommunikations-Vorgang STKV umfasst, der imstande ist, diese Information mittels des STKV für diesen ersten TLN bereitzustellen und sie ihm bei Vorliegen eines solchen Signals über sein TLN-PTKV-Endsystems zu übergeben, wobei der STKV einen gegenüber dem PTKV unterschiedlichen Telekommunikationsvorgang darstellt, der nicht der technischen Realisierung eines HOs, sondern allein der Bereitstellung und Übergabe der Information dient, und wobei
■ diese Information HO-relevant ist, d.h. dass sie sich auf dieses HO in diesem PTKV bezieht, jedoch ohne dass die Bereitstellung der Information oder deren Übergabe an den TLN für die Durchführung des HOs erforderlich ist oder diese beeinflusst,
■ die Bereitstellung der Information mittels des STKV Netz-transparent erfolgt, und
■ das System derart ausgebildet und angepasst ist, dass das Vorliegen dieses Signals mindestens einmal geprüft wird, und bei Vorliegen die Übergabe dieser Information erfolgt.

13. **System** nach Anspruch 12, **dadurch gekennzeichnet, dass** das nicht-menschliche Modul M(HOCIS) ein erstes und ein zweites Submodul aufweist, wobei das erste Submodul dazu ausgebildet ist, die HO-relevante Information bereitzustellen, und das zweite Submodul dazu ausgebildet ist, die HO-relevante Information dem ersten TLN zu übergeben und hierzu mit diesem zu interagieren.

14. **System** nach Anspruch 13, **dadurch gekennzeichnet, dass** das erste und das zweite Submodul mittels einer Beteiligungs-Struktur des STKV zur Übergabe der HO-relevanten Information miteinander kooperieren.

15. **System** nach einem der Ansprüche 12 bis 14, **dadurch gekennzeichnet, dass** das System derart ausgebildet und angepasst ist, dass die Übergabe der HO-relevanten Information erfolgt, während der PTKV unterbrochen oder nachdem er beendet ist.

16. **System** nach einem der Ansprüche 12 bis 15, **dadurch gekennzeichnet, dass** das System derart ausgebildet und angepasst ist, dass der STKV imstande ist, eine solche Information für jeden TLN des PTKV bereitzustellen und zu übergeben.

17. **System** nach einem der Ansprüche 12 bis 16, **dadurch gekennzeichnet, dass** das System derart ausgebildet und angepasst ist, dass mindestens eines der TLN-PTKV-Endsysteme Zugang zu mindestens einem Drahtlos-Netz hat.

18. **System** nach einem der Ansprüche 12 bis 17, **dadurch gekennzeichnet, dass** das System derart ausgebildet und angepasst ist, dass die Information einem TLN automatisch, d.h. ohne seine Anforderung oder Freigabe, übergeben wird.

19. **System** nach einem der Ansprüche 12 bis 18, **dadurch gekennzeichnet, dass** das TLN-PTKV-Endsystem des ersten und/oder mindestens eines anderen TLNs des PTKVs keine Funktionalität zur Unterstützung des Verfahrens gemäß Anspruch 1 enthält.

20. **System** nach einem der Ansprüche 12 bis 19, **dadurch gekennzeichnet, dass** das Endsystem, das den nicht-menschlichen Modul M(HOCIS) aufweist, nicht im TLN-PTKV-Endsystem angeordnet ist.

21. **System** nach einem der Ansprüche 12 bis 20, **dadurch gekennzeichnet, dass** der erste Teilnehmer in dieses HO indirekt involviert ist, d.h. ein Teilnehmer des PTKV ist, der in das HO nicht direkt involviert ist in dem Sinne, dass das TLN-PTKV-Endsystem eines anderen Teilnehmers des PTKV einen das HO betreffenden Netzwechsel oder Netzzugangspunktwechsel oder Netzleistungsmerkmalwechsel oder Nutzungsmerkmalwechsel potentiell oder aktuell erfährt oder erfahren hat, nicht dagegen das TLN-PTKV-Endsystem des ersten Teilnehmers.

22. **System** nach einem der Ansprüche 12 bis 21, **dadurch gekennzeichnet, dass** das System derart ausgebildet und angepasst ist, dass der STKV beliebig nebenläufig arbeiten kann zum PTKV.

## Claims

1. A **method** for supplying and transferring at least one piece of information for/to at least one first human subscriber SUBC of a primary telecommunications process PTCP, for which each of its human SUBCs has at least one respective SUBC-PTCP end system at his/her disposal, which has access to at least one network, whereby the SUBC-PTCP end system of this first or another of these SUBCs in the PTCP undergoes or has undergone a horizontal and/or a vertical handover HO potentially or currently and the incidence of one of these events is indicated by a respective signal,
**characterized in that**
■ In at least one end system a non-human module M(HOCIS) of a secondary telecommunications process STCP is present which supplies this information for this first SUBC by means of the STPC and transfers it to him/her by way of his/her SUBC-PTCP end system upon the presence of such a signal, whereby the STCP constitutes a different telecommunications process than the PTCP, which does not serve for the technical realization of an HO but serves solely to supply and transfer the information and whereby
■ This information is HO-relevant, i.e. it refers to this HO **in that** PTCP, however in such a way that the supplying of the information or its transfer to the SUBC is neither necessary for the execution of the HO nor affecting it,
■ The supplying of the information by the STCP takes place network-transparent and
■ Presence of this signal is checked at least once and transfer of this information takes place upon its presence.

2. **Method** according to claim 1, **characterized in that** the non-human module M(HOCIS) comprises a first and a second submodule, whereby the second submodule is designed to supply the HO-relevant information and the second submodule is designed to transfer the HO-relevant information to the first SUBC and to this end interact with him/her.

3. **Method** according to claim 2, **characterized in that** the first and the second submodule cooperate by way of a participation structure of the STCP in order to transfer the HO-relevant information.

4. **Method** according to one of the preceding claims, **characterized in that** the transfer of the HO-relevant information occurs while the PTCP is suspended or after it has been disconnected.

5. **Method** according to one of the preceding claims, **characterized in that** the STCP is able to provide such a piece of information for each SUBC of the PTCP and to transfer it.

6. **Method** according to one of the preceding claims, **characterized in that** at least one of the SUBC-PTCP end systems has access to at least one wireless network.

7. **Method** according to one of the preceding claims, **characterized in that** the information is transferred to a SUBC automatically, i.e. without his/her request or approval.

8. **Method** according to one of the preceding claims, **characterized in that** the SUBC-PTCP end system of the first and/or at least of another SUBC of the PTCP does not include any functionality for supporting the method according to claim 1.

9. **Method** according to one of the preceding claims, **characterized in that** the end system which comprises the non-human module M(HOCIS) is not located in the SUBC-PTCP end system.

10. **Method** according to one of the preceding claims, **characterized in that** the fist subscriber is involved indirectly in this HO, i.e. is a subscriber of the PTCP which is not directly in involved in the HO in the sense that the SUBC-PTCP end system of another subscriber of the PTCP is experiencing or has experienced, potentially or currently, a change of the network or network access point or performance features of the network or usage features, not, however, the SUBC-PTCP end system of the first subscriber.

11. **Method** according to one of the preceding claims, **characterized in that** the STCP can work concurrently to the PTCP in any way.

12. **System** for supplying and transferring at least one piece of information for/to at least one first human subscriber SUBC of a primary telecommunications process PTCP, for which each of its human SUBCs uses at least one respective SUBC-PTCP end system, which has access to at least one network, whereby the SUBC-PTCP end system of this first or another of these SUBCs in the PTCP undergoes or has undergone a horizontal and/or a vertical handover HO potentially or currently and the incidence of one of these events is indicated by a respective signal,
**characterized in that**
■ The system comprises in at least one end system a non-human module M(HOCIS) of a secondary telecommunications process STCP which is capable to supply this information for this first SUBC by means of the STPC and to transfer it to him/her by way of his/her SUBC-PTCP end system upon the presence of such a signal, whereby the STCP constitutes a different telecommunications process than the PTCP, which does not serve for the technical realization of an HO but serves solely to supply and transfer the information and whereby
■ This information is HO-relevant, i.e. it refers to this HO **in that** PTCP, however in such a way that the supplying of the information or its transfer to the SUBC is neither necessary for the execution of the HO nor affecting it,
■ The supplying of the information by the STCP takes place network-transparent and
■ The System is designed and adapted in such a way that the presence of this signal is checked at least once and transfer of this information takes place upon its presence.

13. **System** according to claim 12, **characterized in that** the non-human module M(HOCIS) comprises a first and a second submodule, whereby the second submodule is designed to supply the HO-relevant information and the second submodule is designed to transfer the HO-relevant information to the first SUBC and to this end interact with him/her.

14. **System** according to claim 13, **characterized in that** the first and the second submodule cooperate by way of a participation structure of the STCP in order to transfer the HO-relevant information.

15. **System** according to one of the claims 12 to 14, **characterized in that** the system is designed and adapted in such a way that the transfer of the HO-relevant information occurs while the PTCP is suspended or after it has been disconnected.

16. **System** according to one of the claims 12 to 15, **characterized in that** the system is designed and adapted in such a way that the STCP is able to provide such a piece of information for each SUBC of the PTCP and to transfer it.

17. **System** according to one of the claims 12 to 16, **characterized in that** the system is designed and adapted in such a way that at least one of the SUBC-PTCP end systems has access to at least one wireless network.

18. **System** according to one of the claims 12 to 17, **characterized in that** the system is designed and adapted in such a way that the information is transferred to a SUBC automatically, i.e. without his/her request or approval.

19. **System** according to one of the claims 12 to 18, **characterized in that** the SUBC-PTCP end system of the first and/or at least of another SUBC of the PTCP does not include any functionality for supporting the method according to claim 1.

20. **System** according to one of the claims 12 to 19, **characterized in that** the end system which comprises the non-human module M(HOCIS) is not located in the SUBC-PTCP end system.

21. **System** according to one of the claims 12 to 20, **characterized in that** the fist subscriber is involved indirectly in this HO, i.e. is a subscriber of the PTCP which is not directly in involved in the HO in the sense that the SUBC-PTCP end system of another subscriber of the PTCP is experiencing or has experienced, potentially or currently, a change of the network or network access point or performance features of the network or usage features, not, however, the SUBC-PTCP end system of the first subscriber.

22. **System** according to one of the claims 12 to 21, **characterized in that** that the system is designed and adapted in such a way that the STCP can work concurrently to the PTCP in any way.

## Revendications

1. Procédé de préparation et de remise d'au moins une information pour/à au moins un premier abonné, TLN, humain d'une opération de télécommunication primaire, PTKV, dont chaque TLN humain, a respectivement un système terminal d'opération de télécommunication primaire d'abonné, TLN-PKTV, ayant un accès à au moins un réseau, dans lequel le système terminal TLN-PTKV de ce premier ou d'un autre de ces TLN dans la PTKV est soumis éventuellement ou actuellement, ou a été soumis à un transfert, HO, horizontal et/ou vertical et l'apparition d'un de ces événements est indiquée par un signal correspondant,
**caractérisé en ce que**
- il existe dans au moins un système terminal un module non humain, M(HOCIS), d'une opération de télécommunication secondaire, STKV, qui prépare cette information au moyen de la STKV pour ce premier TLN et qui, en cas de présence d'un tel signal, la lui remet par le biais de son système terminal TLN-PTKV, dans lequel la STKV représente une opération de télécommunication différente par rapport à la PTKV, qui ne sert pas à la réalisation technique d'un HO, mais au contraire uniquement à la préparation et à la remise de l'information, et dans lequel
- cette information est relative au HO, c'est-à-dire qu'elle se rapporte à ce HO dans cette PTKV, mais sans que la préparation de l'information ou sa remise au TLN ne soit nécessaire pour l'exécution du HO ou n'influe sur celui-ci,
- la préparation de l'information a lieu de manière transparente pour le réseau au moyen de la STKV, et
- la présence de ce signal est vérifiée au moins une fois et, en cas de présence, a lieu la remise de cette information.

2. Procédé selon la revendication 1, **caractérisé en ce que** le module non humain, M(HOCIS), comporte un premier et un deuxième sous-module, dans lequel le premier sous-module est conçu pour préparer l'information relative au HO et le deuxième sous-module est conçu pour remettre l'information relative au HO au premier TLN et pour interagir avec celui-ci à cet effet.

3. Procédé selon la revendication 2, **caractérisé en ce que** les premier et deuxième sous-modules coopèrent entre eux au moyen d'une structure de participation de la STKV pour la remise de l'information relative au HO.

4. Procédé selon l'une quelconque des revendications précédentes, **caractérisé en ce que** la remise de l'information relative au HO a lieu pendant que la PTKV est interrompue ou après qu'elle soit terminée.

5. Procédé selon l'une quelconque des revendications précédentes, **caractérisé en ce que** la STKV est en mesure de préparer et de remettre une telle information pour chaque TLN de la PTKV.

6. Procédé selon l'une quelconque des revendications précédentes, **caractérisé en ce qu'**au moins un des systèmes terminaux TLN-PTKV a accès à au moins un réseau sans fil.

7. Procédé selon l'une quelconque des revendications précédentes, **caractérisé en ce que** l'information est remise automatiquement à un TLN, c'est-à-dire sans qu'elle soit demandée ou validée.

8. Procédé selon l'une quelconque des revendications précédentes, **caractérisé en ce que** le système terminal TLN-PTKV du premier et/ou d'au moins un autre des TLN de la PTKV ne contient pas de fonctionnalité pour supporter le procédé selon la revendication 1.

9. Procédé selon l'une quelconque des revendications précédentes, **caractérisé en ce que** le système terminal, qui comporte le module non humain, M(HOCIS), n'est pas disposé dans le système terminal TLN-PTKV.

10. Procédé selon l'une quelconque des revendications précédentes, **caractérisé en ce que** le premier abonné est impliqué indirectement dans ce HO, c'est-à-dire qu'il est un abonné de la PTKV qui n'est pas directement impliqué dans le HO dans le sens que le système terminal TLN-PTKV d'un autre abonné de la PTKV est soumis éventuellement ou actuellement ou a été soumis à un changement de réseau ou à un changement de point d'accès de réseau ou à un changement de performances de réseau ou à un changement de caractéristiques d'utilisation concernant le HO, mais pas le système terminal TLN-PTKV du premier abonné.

11. Procédé selon l'une quelconque des revendications précédentes, **caractérisé en ce que** la STKV peut fonctionner à volonté parallèlement à la PTKV.

12. Système de préparation et de remise d'au moins une information pour/à au moins un premier abonné, TLN, humain d'une opération de télécommunication primaire, PTKV, dont chaque TLN humain utilise respectivement un système terminal TLN-PTKV ayant un accès à au moins un réseau, dans lequel le système terminal TLN-PTKV de ce premier ou d'un autre de ces TLN dans la PTKV est soumis éventuellement ou actuellement ou a été soumis à un transfert (HO) horizontal ou/et vertical et l'apparition d'un de ces événements est indiquée par un signal correspondant,
**caractérisé en ce que**
- le système comporte dans au moins un système terminal un module non humain, M(HOCIS), d'une opération de télécommunication secondaire, STKV, qui est en mesure de préparer cette information au moyen de la STKV pour ce premier TLN et, en cas de présence d'un tel signal, de la lui remettre par le biais de son système terminal TLN-PTKV, dans lequel la STKV représente une opération de télécommunication, différente par rapport à la PTKV, qui ne sert pas à la réalisation d'un HO, mais au contraire seulement à la préparation et à la remise de l'information, et dans lequel
- cette information est relative à un HO, c'est-à-dire qu'elle se rapporte à ce HO dans cette PTKV, mais sans que la préparation de l'information ou sa remise au TLN ne soit nécessaire pour l'exécution du HO ou n'influe sur celui-ci,
- la préparation de l'information a lieu de manière transparente pour le réseau au moyen de la STKV, et
- le système est conçu et adapté de manière telle que la présence de ce signal soit vérifiée au moins une fois et que, en cas de présence, ait lieu la remise de cette information.

13. Système selon la revendication 12, **caractérisé en ce que** le module non humain, M(HOCIS), comporte un premier et un deuxième sous-module, dans lequel le premier sous-module est conçu pour préparer l'information relative au HO et le deuxième sous-module est conçu pour remettre l'information relative au HO au premier TLN et pour interagir avec celui-ci à cet effet.

14. Système selon la revendication 13, **caractérisé en ce que** les premier et deuxième sous-modules coopèrent entre eux au moyen d'une structure de participation de la STKV pour la remise de l'information relative au HO.

15. Système selon l'une quelconque des revendications 12 à 14, **caractérisé en ce que** le système est conçu et adapté de manière telle que la remise de l'information relative au HO a lieu pendant que la PTKV est interrompue ou après qu'elle soit terminée.

16. Système selon l'une quelconque des revendications 12 à 15, **caractérisé en ce que** le système est conçu et adapté de manière telle que la STKV soit en mesure de préparer et de remettre une telle information pour chaque TLN de la PTKV.

17. Système selon l'une quelconque des revendications 12 à 16, **caractérisé en ce que** le système est conçu et adapté de manière telle qu'au moins un des systèmes terminaux TLN-PTKV ait accès à au moins un réseau sans fil.

18. Système selon l'une quelconque des revendications 12 à 17, **caractérisé en ce que** le système est conçu et adapté de manière telle que l'information soit remise automatiquement à un TLN, c'est-à-dire sans qu'elle soit demandée ou validée.

19. Système selon l'une quelconque des revendications 12 à 18, **caractérisé en ce que** le système terminal TLN-PTKV du premier et/ou d'au moins un autre TLN de la PTKV ne contient pas de fonctionnalité pour supporter le procédé selon la revendication 1.

20. Système selon l'une quelconque des revendications 12 à 19, **caractérisé en ce que** le système terminal, qui comporte le module non humain, M(HOCIS), n'est pas disposé dans le système terminal TLN-PTKV.

21. Système selon l'une quelconque des revendications 12 à 20, **caractérisé en ce que** le premier abonné est impliqué indirectement dans ce HO, c'est-à-dire qu'il est un abonné de la PTKV qui n'est pas impliqué directement dans le HO dans le sens que le système terminal TLN-PTKV d'un autre abonné de la PTKV est soumis éventuellement ou actuellement ou a été soumis à un changement de réseau ou à un changement de point d'accès de réseau ou à un changement de performances de réseau ou à un changement de caractéristiques d'utilisation concernant le HO, mais pas le système terminal TLN-PTKV du premier abonné.

22. Système selon l'une quelconque des revendications 12 à 21, **caractérisé en ce que** le système est conçu et adapté de manière telle que la STKV puisse fonctionner à volonté parallèlement à la PTKV.
